# EUROPEAN PATENT APPLICATION

(11) **EP 4 717 398 A1**
(43) Date of publication of application: **01.04.2026**
(21) Application number: 24933940.9
(22) Date of filing: 05.04.2024
(51) Int. Cl.: B23K 26/70

(54) **OPERATION PANEL FOR LASER BEAM MACHINING EQUIPMENT, CONTROL DEVICE FOR LASER BEAM MACHINING EQUIPMENT, AND LASER BEAM MACHINING SYSTEM**

(71) Applicant: Yamazaki Mazak Corporation, Niwa-gun, Aichi 480-0197 (JP)
(72) Inventor: SHIOI, Yu, Niwa-gun, Aichi 480-0197 (JP); MIWA, Daisuke, Niwa-gun, Aichi 480-0197 (JP); NAKAMOTO, Tetsuro, Niwa-gun, Aichi 480-0197 (JP); SUMIDA, Yasuharu, Niwa-gun, Aichi 480-0197 (JP); SATO, Tomoki, Niwa-gun, Aichi 480-0197 (JP)
(74) Representative: TBK
(86) International application number: PCT/JP2024/014132
(87) International publication number: WO 2025/210891

(57) **Abstract**

An operation panel for a laser beam machine includes a display, an inputter, and a computing apparatus. The display is configured to represent, using a laser beam machine model modeling the laser beam machine and a plurality of device models respectively modeling a plurality of devices that are operable, an arrangement of the plurality of devices in the laser beam machine. The inputter is configured to receive user input. The computing apparatus is configured to execute, in response to a first device model being selected via the inputter out of the plurality of device models displayed on the display, a first process that allows outputting a signal to manually operate a first device corresponding to the first device model, and to execute, in response to a second device model being selected via the inputter out of the plurality of device models displayed on the display, a second process that allows outputting a signal to manually operate a second device corresponding to the second device model.

## Description

### Technical Field

The present invention relates to an operation panel for a laser beam machine, a controller for the laser beam machine, and a laser beam machining system.

### Background Art

A technique of manually operating components of an NC machine is known.

A related technique includes a manual operation device for an NC machine disclosed in Patent Literature 1. The manual operation device for the NC machine disclosed in Patent Literature 1 includes an operation item list display section that displays a list of operation items for multiple actuators of the NC machine, a plurality of operation switches, a plurality of signal input/output sections corresponding to the plurality of operation switches, and an operation item selector that selects an operation item to be operated next out of the operation item list displayed on the operation item list display section.

### Citation List

### Patent Literature

PTL 1: JP H3-32548 A

### Summary of Invention

### Technical Problem

It is an object of the present invention to provide an operation panel for a laser beam machine, a controller for the laser beam machine, and a laser beam machining system that each make it possible to easily select a manual operation target device.

### Solution to Problem

An operation panel according to some embodiments for a laser beam machine includes a display, an inputter, and a computing apparatus. The display is configured to represent, using a laser beam machine model modeling the laser beam machine and a plurality of device models respectively modeling a plurality of devices that are operable, an arrangement of the plurality of devices in the laser beam machine. The inputter is configured to receive user input. The computing apparatus is configured to execute, in response to a first device model being selected via the inputter out of the plurality of device models displayed on the display, a first process that allows outputting a signal to manually operate a first device corresponding to the first device model, and to execute, in response to a second device model being selected via the inputter out of the plurality of device models displayed on the display, a second process that allows outputting a signal to manually operate a second device corresponding to the second device model.

A controller according to some embodiments for a laser beam machine includes a display, an inputter, a computing apparatus, and a communication circuit. The display is configured to represent, using a laser beam machine model modeling the laser beam machine and a plurality of device models respectively modeling a plurality of devices that are operable, an arrangement of the plurality of devices in the laser beam machine. The inputter is configured to receive user input. The computing apparatus is configured to execute, in response to a first device model being selected via the inputter out of the plurality of device models displayed on the display, a first process that allows outputting a signal to manually operate a first device corresponding to the first device model, to execute, in response to a second device model being selected via the inputter out of the plurality of device models displayed on the display, a second process that allows outputting a signal to manually operate a second device corresponding to the second device model, and to generate a control command to machine a workpiece by executing a machining program. The communication circuit is configured to transmit the control command to the laser beam machine.

A laser beam machining system according to some embodiments includes a laser beam machine, a display, an inputter, a computing apparatus, and a communication circuit. The display is configured to represent, using a laser beam machine model modeling the laser beam machine and a plurality of device models respectively modeling a plurality of devices that are operable, an arrangement of the plurality of devices in the laser beam machine. The inputter is configured to receive user input. The computing apparatus is configured to execute, in response to a first device model being selected via the inputter out of the plurality of device models displayed on the display, a first process that allows outputting a signal to manually operate a first device corresponding to the first device model, to execute, in response to a second device model being selected via the inputter out of the plurality of device models displayed on the display, a second process that allows outputting a signal to manually operate a second device corresponding to the second device model, and to generate a control command to machine a workpiece by executing a machining program. The communication circuit is configured to transmit the control command to the laser beam machine.

### Effects of Invention

The present invention provides an operation panel for a laser beam machine, a controller for the laser beam machine, and a laser beam machining system that each make it possible to easily select a manual operation target device.

### Brief Description of Drawings

[FIG. 1] FIG. 1 is a diagram schematically illustrating a controller according to a first embodiment for a laser beam machine.
[FIG. 2] FIG. 2 is a diagram schematically illustrating the controller according to the first embodiment for the laser beam machine.
[FIG. 3] FIG. 3 is a schematic front view of a laser beam machining system according to a second embodiment.
[FIG. 4] FIG. 4 is a schematic front view of a laser beam machine.
[FIG. 5] FIG. 5 is a diagram illustrating an example of an image to be displayed on a display.
[FIG. 6] FIG. 6 is a diagram illustrating an example of an image to be displayed on the display.
[FIG. 7] FIG. 7 is a diagram schematically illustrating the laser beam machining system according to the second embodiment.
[FIG. 8] FIG. 8 is a diagram illustrating an example of an image to be displayed on the display.
[FIG. 9] FIG. 9 is a diagram schematically illustrating the laser beam machining system according to the second embodiment.
[FIG. 10] FIG. 10 is a diagram schematically illustrating the laser beam machining system according to the second embodiment.
[FIG. 11] FIG. 11 is a diagram illustrating an example of an image to be displayed on the display.
[FIG. 12] FIG. 12 is a diagram illustrating an example of an image to be displayed on the display.
[FIG. 13] FIG. 13 is a diagram illustrating an example of an image to be displayed on the display.
[FIG. 14] FIG. 14 is a diagram illustrating an example of an image to be displayed on the display.
[FIG. 15] FIG. 15 is a diagram illustrating an example of an image to be displayed on the display.
[FIG. 16] FIG. 16 is a diagram illustrating an example of an image to be displayed on the display.
[FIG. 17] FIG. 17 is a diagram illustrating an example of an image to be displayed on the display.
[FIG. 18] FIG. 18 is a diagram illustrating an example of an image to be displayed on the display.
[FIG. 19] FIG. 19 is a diagram schematically illustrating the laser beam machining system according to the second embodiment.
[FIG. 20] FIG. 20 is a diagram schematically illustrating the laser beam machining system according to the second embodiment.
[FIG. 21] FIG. 21 is a diagram illustrating an example of an image to be displayed on the display.
[FIG. 22] FIG. 22 is a diagram schematically illustrating the controller according to the first embodiment for the laser beam machine.
[FIG. 23] FIG. 23 is a diagram schematically illustrating a part of the controller according to the first embodiment for the laser beam machine.
[FIG. 24] FIG. 24 is a diagram schematically illustrating a part of the controller according to the first embodiment for the laser beam machine.
[FIG. 25] FIG. 25 is a diagram schematically illustrating a part of the controller according to the first embodiment for the laser beam machine.
[FIG. 26] FIG. 26 is a diagram schematically illustrating a part of the controller according to the first embodiment for the laser beam machine.
[FIG. 27] FIG. 27 is a diagram illustrating an example of an image to be displayed on the display.
[FIG. 28] FIG. 28 is a diagram illustrating an example of an image to be displayed on the display.
[FIG. 29] FIG. 29 is a diagram schematically illustrating the laser beam machining system according to the second embodiment.
[FIG. 30] FIG. 30 is a diagram illustrating an example of an image to be displayed on the display.
[FIG. 31] FIG. 31 is a diagram schematically illustrating the controller according to the first embodiment for the laser beam machine.
[FIG. 32] FIG. 32 is a diagram schematically illustrating a part of the controller according to the first embodiment for the laser beam machine.
[FIG. 33] FIG. 33 is a diagram schematically illustrating a part of the controller according to the first embodiment for the laser beam machine.
[FIG. 34] FIG. 34 is a diagram schematically illustrating a part of the controller according to the first embodiment for the laser beam machine.
[FIG. 35] FIG. 35 is a diagram illustrating an example of an image to be displayed on the display.
[FIG. 36] FIG. 36 is a diagram schematically illustrating the laser beam machining system according to the second embodiment.
[FIG. 37] FIG. 37 is a diagram schematically illustrating the controller according to the first embodiment for the laser beam machine.
[FIG. 38] FIG. 38 is a diagram illustrating an example of an image to be displayed on the display.
[FIG. 39] FIG. 39 is a diagram illustrating an example of an image to be displayed on the display.
[FIG. 40] FIG. 40 is a diagram illustrating an example of an image to be displayed on the display.
[FIG. 41] FIG. 41 is a diagram illustrating an example of an image to be displayed on the display.
[FIG. 42] FIG. 42 is a diagram describing a first assist process.
[FIG. 43] FIG. 43 is a diagram describing a third assist process.
[FIG. 44] FIG. 44 is a diagram illustrating an example of an image to be displayed on the display.
[FIG. 45] FIG. 45 is a diagram illustrating an example of an image to be displayed on the display.
[FIG. 46] FIG. 46 is a diagram illustrating an example of an image to be displayed on the display.
[FIG. 47] FIG. 47 is a diagram schematically illustrating a part of the laser beam machining system according to the second embodiment.

### Description of Embodiments

Hereafter, an operation panel 20 for a laser beam machine, a controller 2 for the laser beam machine, and a laser beam machining system according to embodiments will be described with reference to the drawings. Note that, in the following description of the embodiments, identical reference numerals are given to portions and members having identical functions, and descriptions of the portions and members with the identical reference numerals that are deemed redundant will be omitted.

### (First Embodiment)

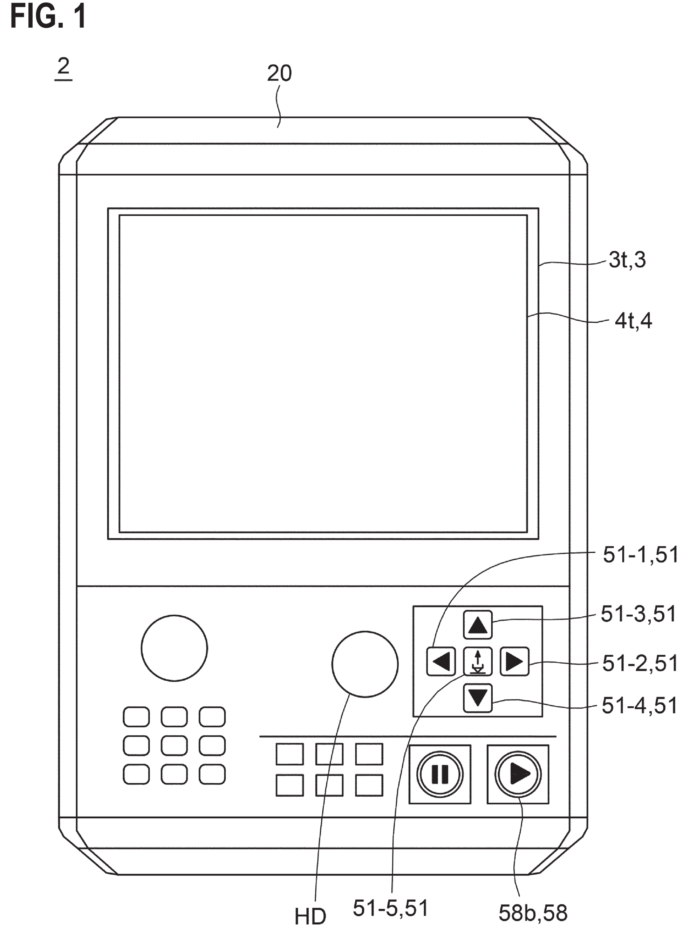

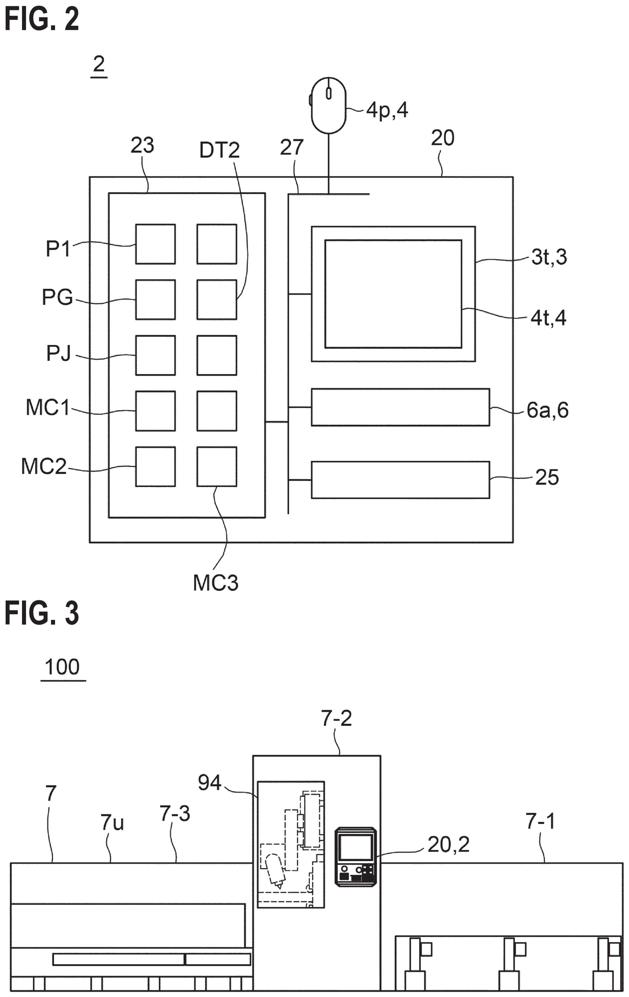

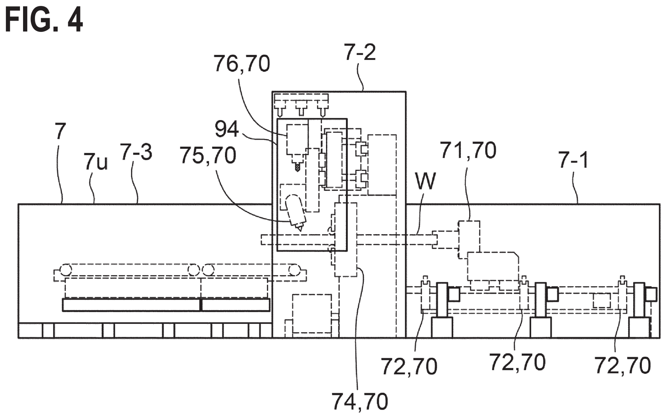

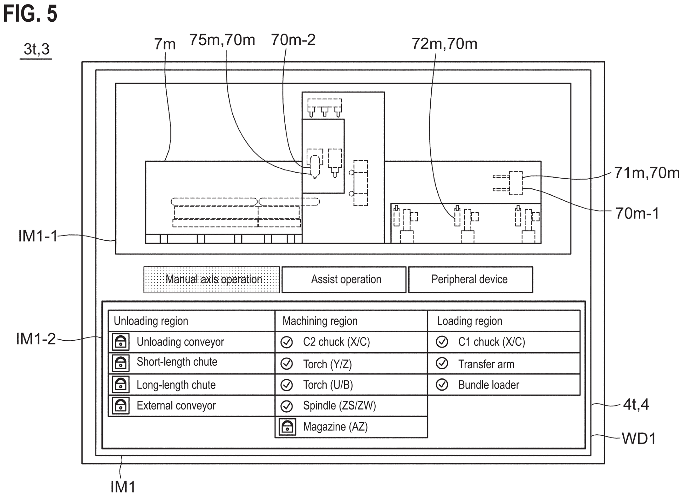

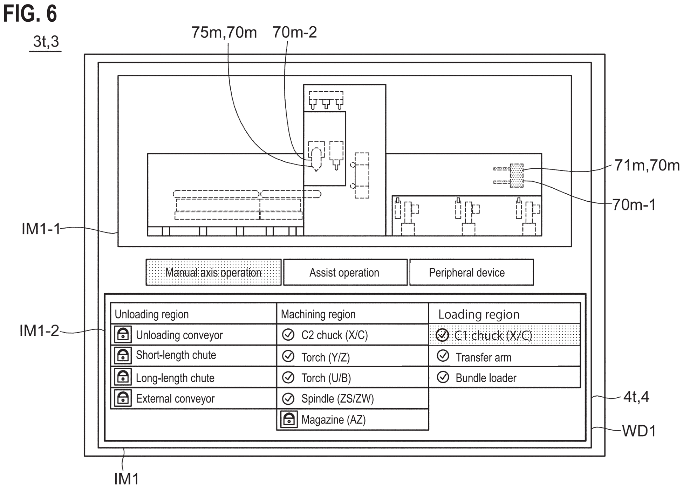

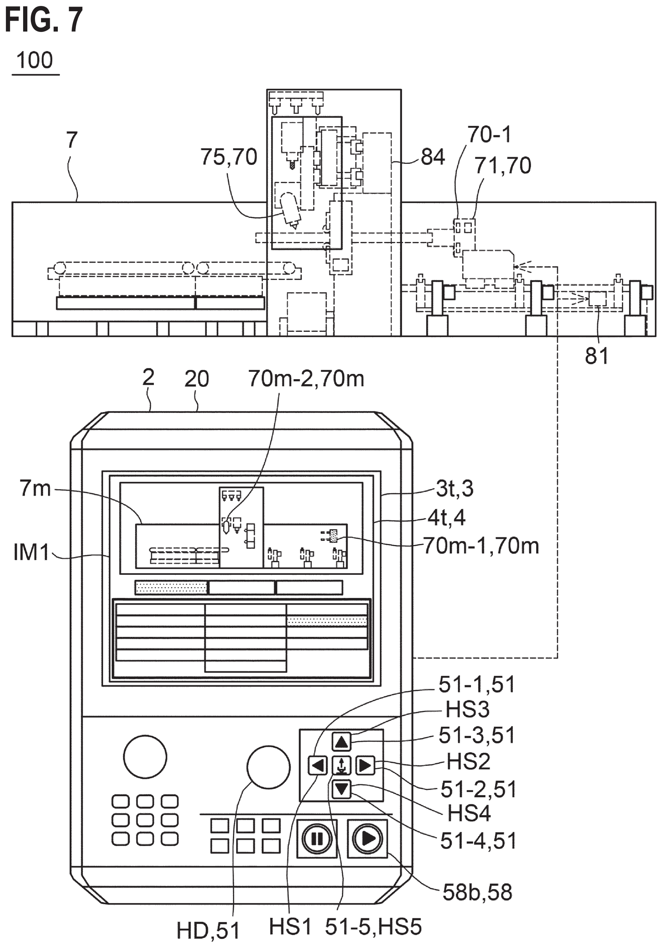

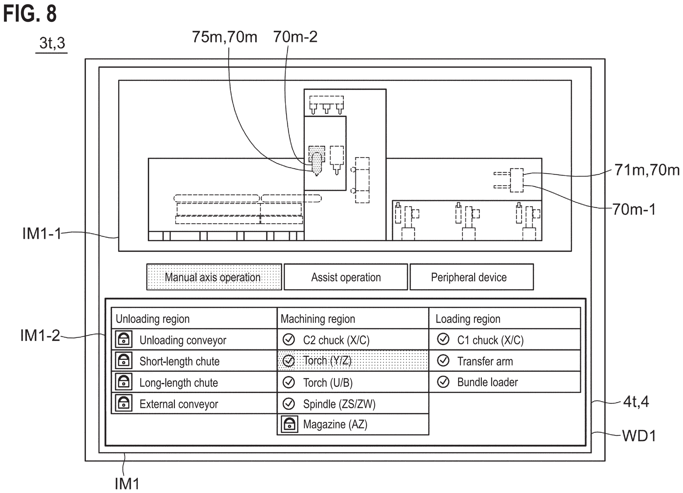

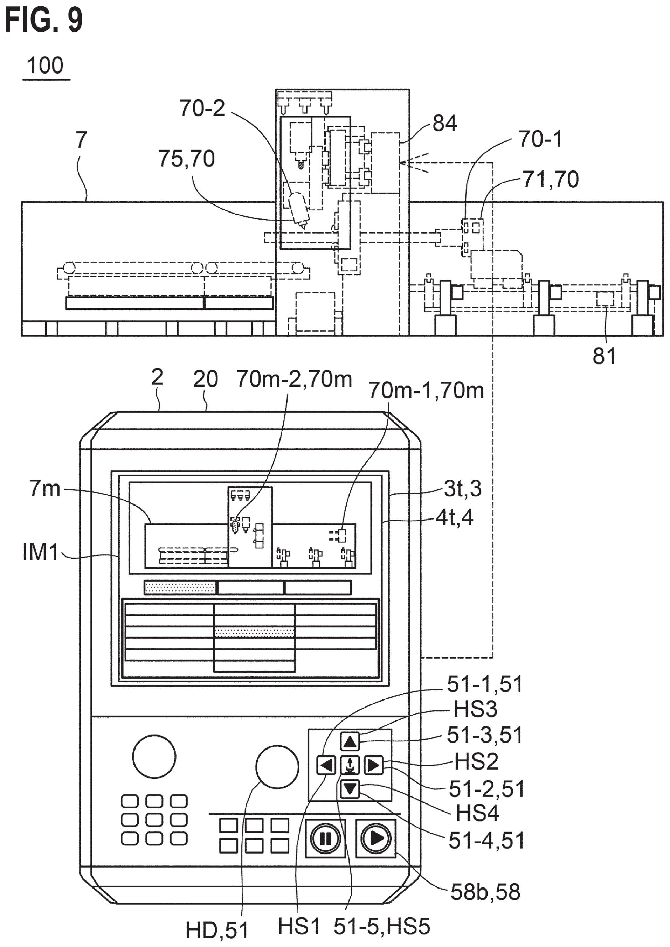

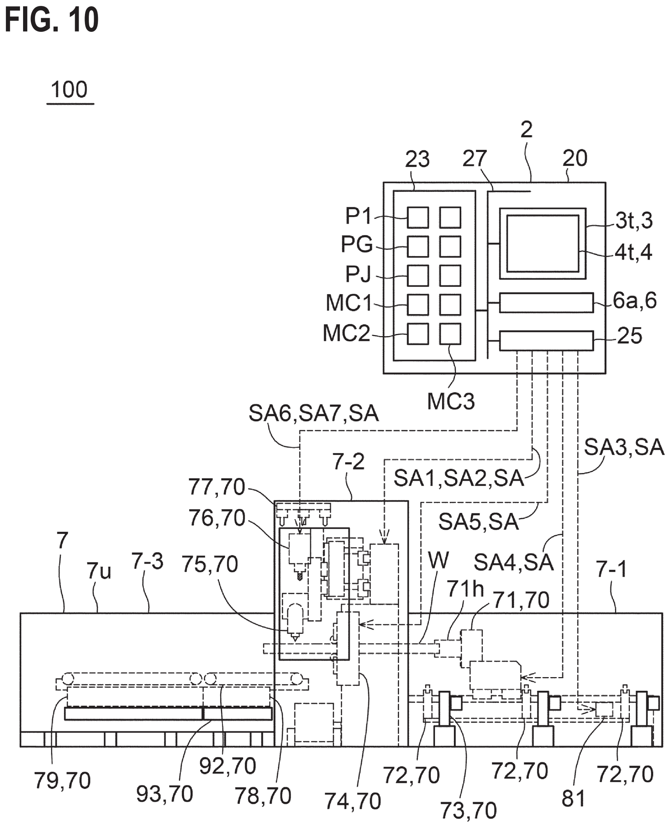

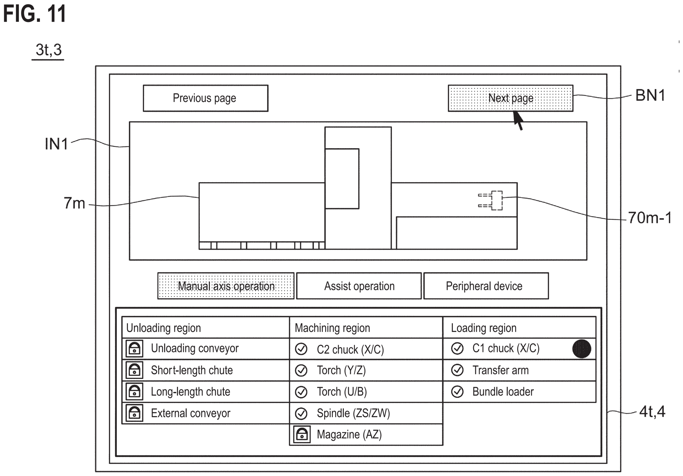

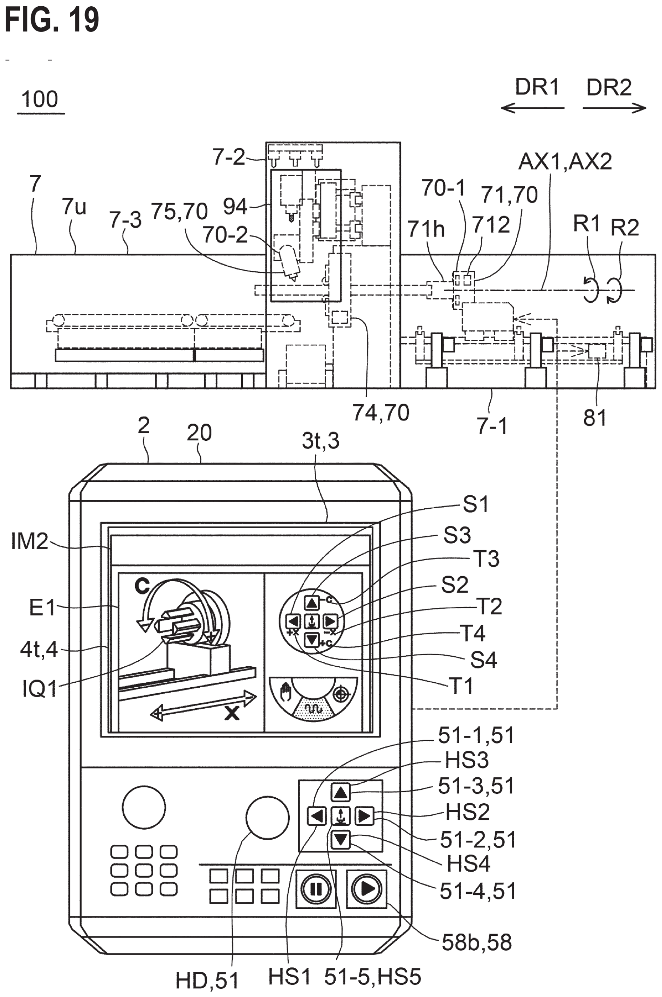

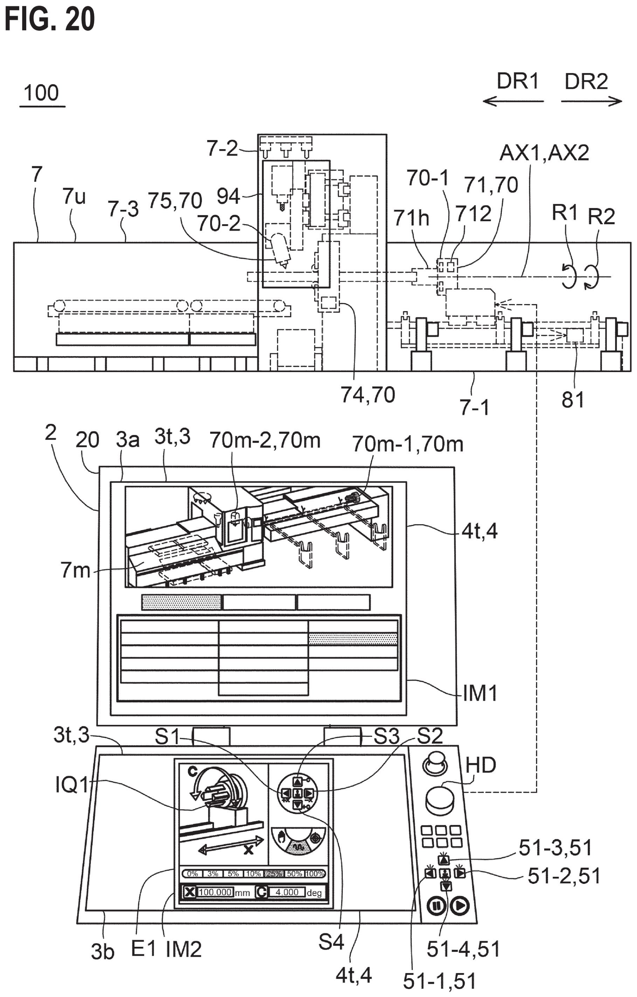

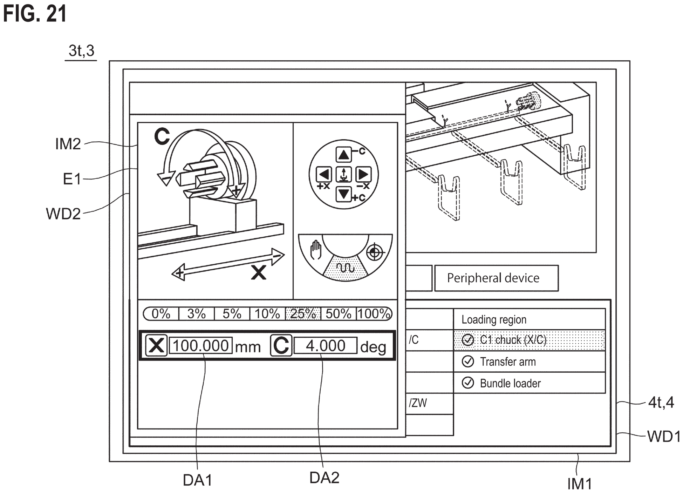

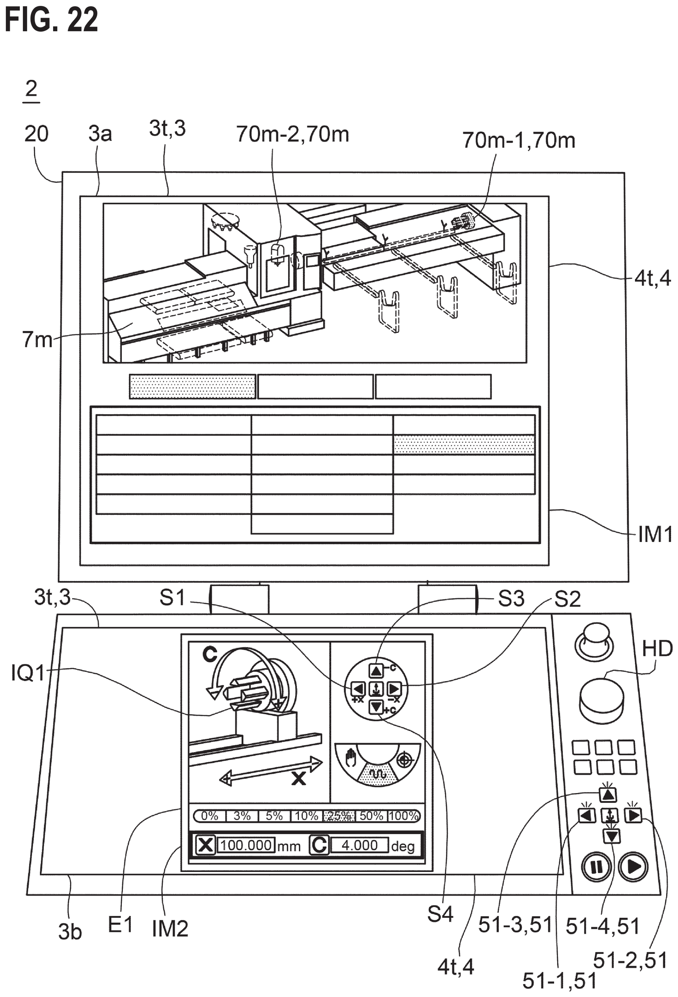

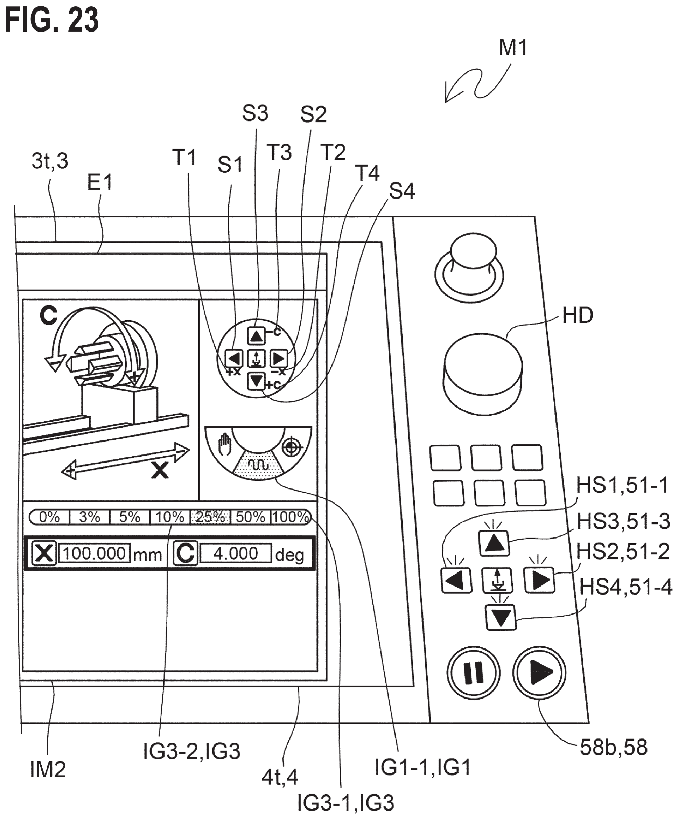

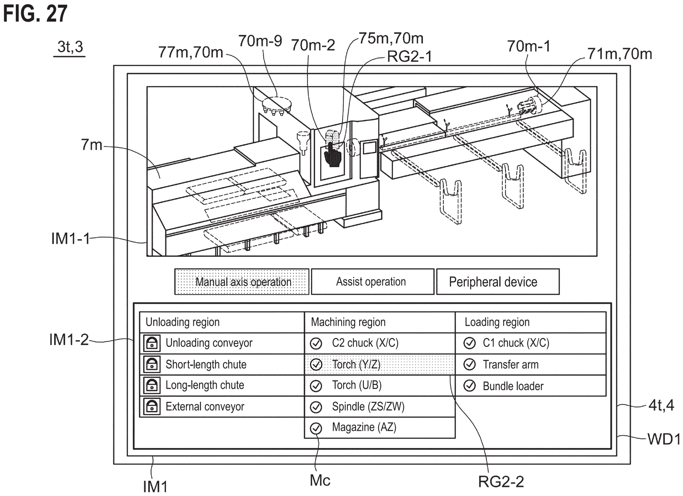

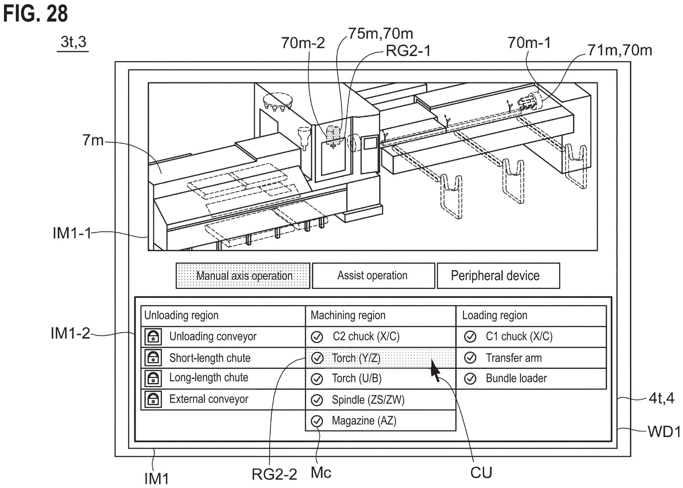

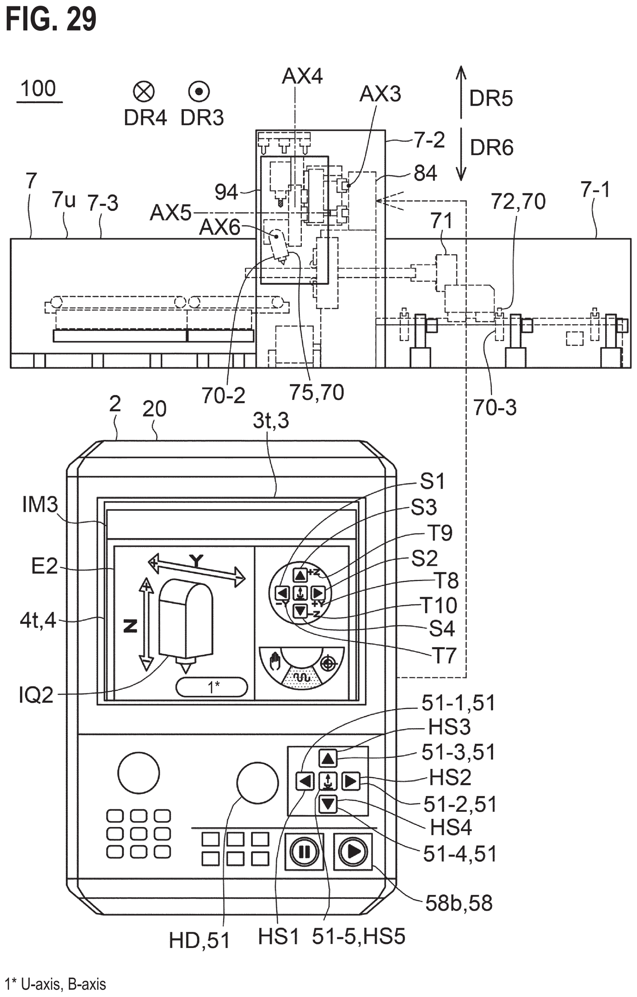

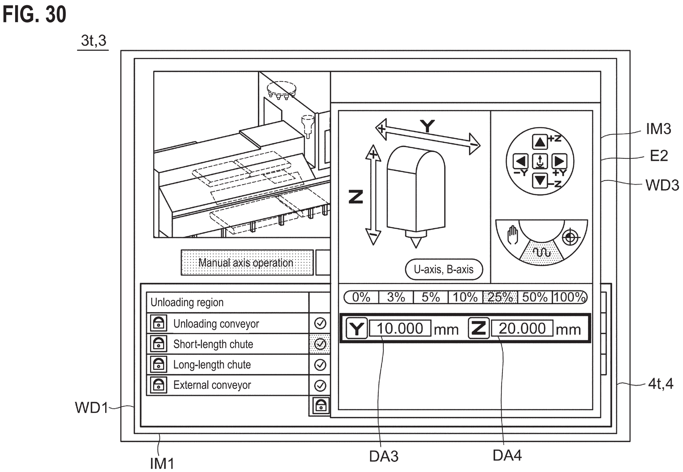

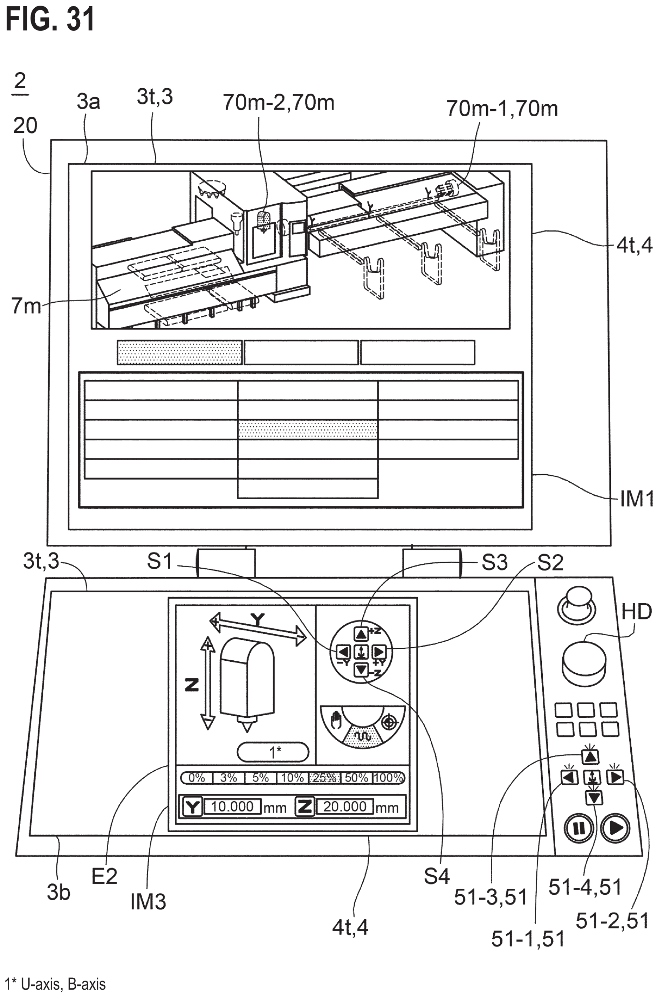

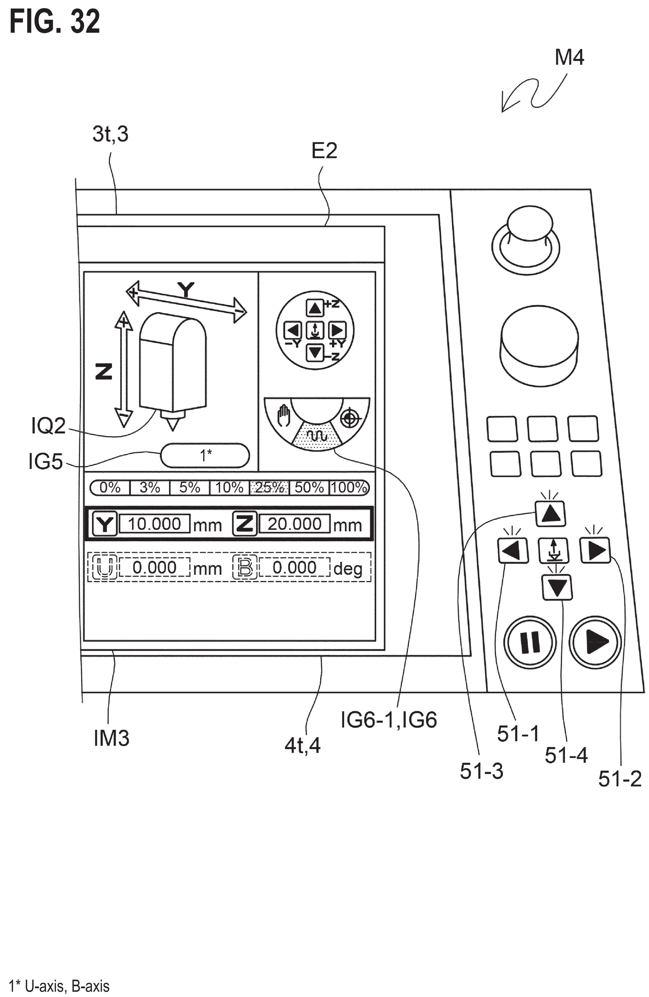

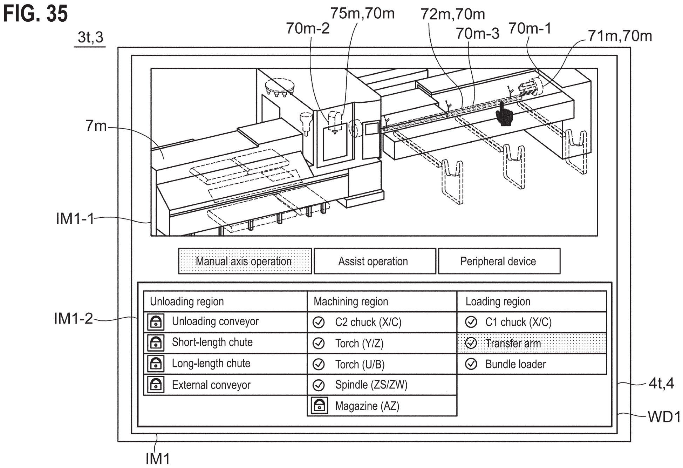

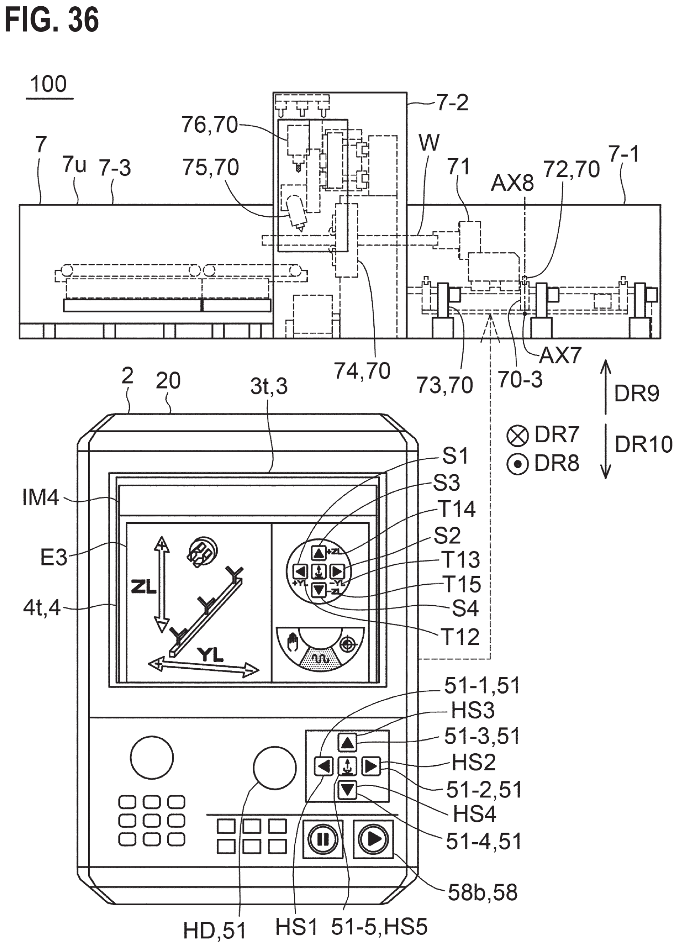

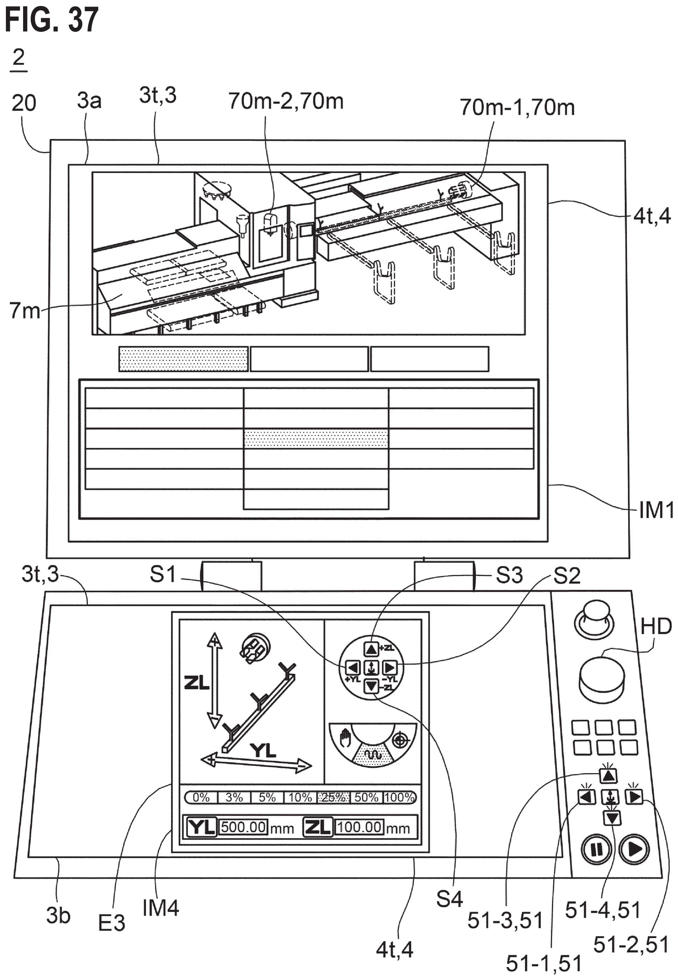

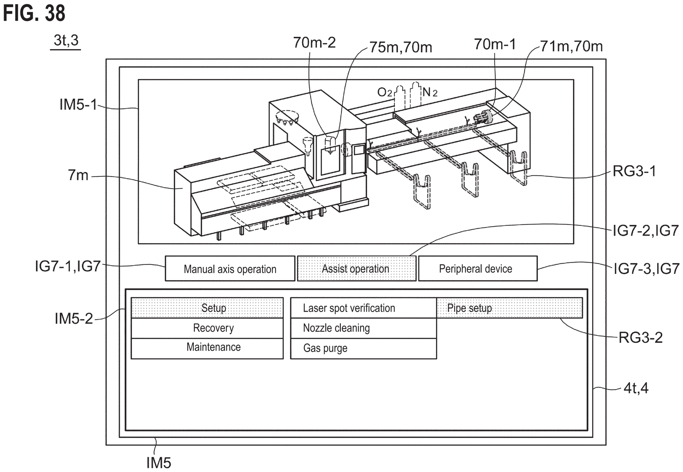

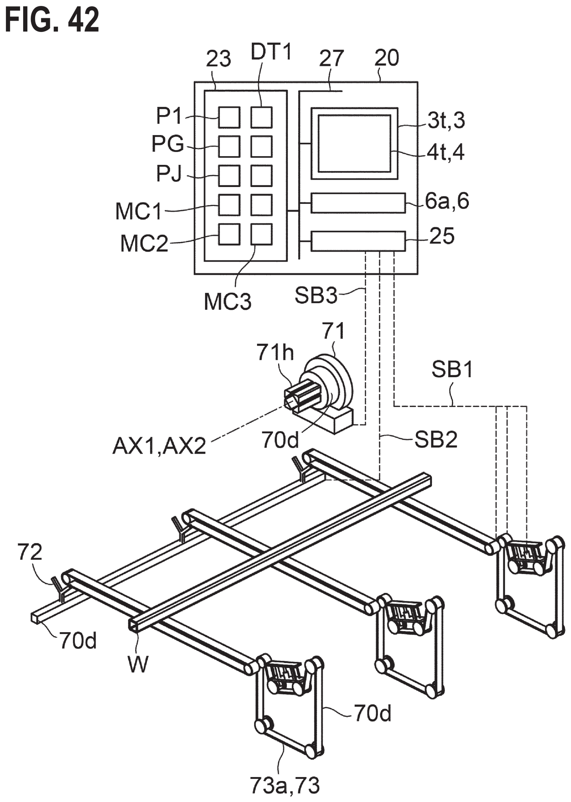

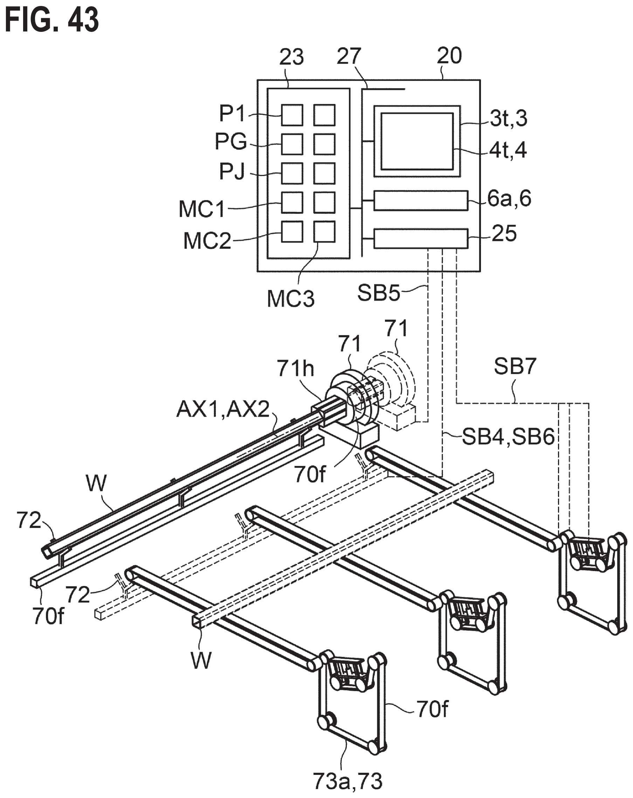

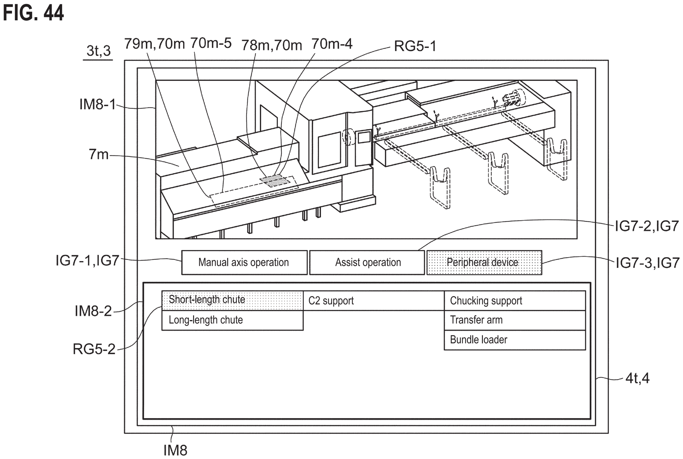

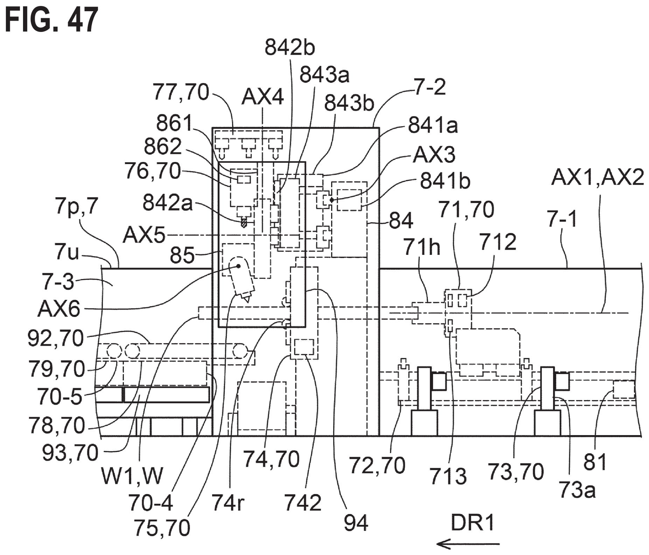

The operation panel 20 according to the first embodiment for the laser beam machine and the controller 2 according to the first embodiment for the laser beam machine will be described with reference to FIGs. 1 to 47. FIG. 1 is a diagram schematically illustrating the controller 2 according to the first embodiment for the laser beam machine. FIG. 2 is a diagram schematically illustrating the controller 2 according to the first embodiment for the laser beam machine. FIG. 3 is a schematic front view of a laser beam machining system 100. FIG. 4 is a schematic front view of a laser beam machine 7. FIGs. 5 and 6 are diagrams illustrating an example of an image to be displayed on a display 3. FIG. 7 is a diagram schematically illustrating the laser beam machining system 100. FIG. 8 is a diagram illustrating an example of an image to be displayed on the display 3. FIGs. 9 and 10 are diagrams schematically illustrating the laser beam machining system 100. FIGs. 11 to 18 are diagrams illustrating an example of an image to be displayed on the display 3. FIGs. 19 and 20 are each a diagram schematically illustrating the laser beam machining system 100. FIG. 21 is a diagram illustrating an example of an image to be displayed on the display 3. FIG. 22 is a diagram schematically illustrating the controller 2 according to the first embodiment for the laser beam machine. FIGs. 23 to 26 are diagrams schematically illustrating a part of the controller 2 according to the first embodiment for the laser beam machine. FIGs. 27 and 28 are diagrams illustrating an example of an image to be displayed on the display 3. FIG. 29 is a diagram schematically illustrating the laser beam machining system 100. FIG. 30 is a diagram illustrating an example of an image to be displayed on the display 3. FIG. 31 is a diagram schematically illustrating the controller 2 according to the first embodiment for the laser beam machine. FIGs. 32 to 34 are diagrams schematically illustrating a part of the controller 2 according to the first embodiment for the laser beam machine. FIG. 35 is a diagram illustrating an example of an image to be displayed on the display 3. FIG. 36 is a diagram schematically illustrating the laser beam machining system 100. FIG. 37 is a diagram schematically illustrating the controller 2 according to the first embodiment for the laser beam machine. FIGs. 38 to 41 are diagrams illustrating an example of an image to be displayed on the display 3. FIG. 42 is a diagram describing a first assist process. FIG. 43 is a diagram describing a third assist process. FIGs. 44 to 46 are diagrams illustrating an example of an image to be displayed on the display 3. FIG. 47 is a diagram schematically illustrating a part of the laser beam machining system 100. Note that, FIGs. 1, 3, 7, 9, 19, 29, and 36 illustrate an example in which the controller 2 is a controller with a single-screen display, and FIGs. 20, 22, 31, and 37 illustrate an example in which the controller 2 is a controller with a dual-screen display. The controller 2 with a single-screen display in FIGs. 1, 3, 7, 9, 19, 29, and 36 may be replaced with the controller with a dual-screen display. The controller 2 with a dual-screen display in FIGs. 20, 22, 31, and 37 may be replaced with the controller with a single-screen display. Furthermore, each of the controller 2 with a single-screen display, and the controller 2 with a dual-screen display may be replaced with a controller with three or more screens. Alternatively, the entire controller 2 including the display 3 may be unified as one structure, or the display 3 of the controller 2 may be a component separate from the main body of the controller 2 including a computing apparatus 6

As illustrated in FIG. 1, the operation panel 20 according to the first embodiment for the laser beam machine includes the display 3 and an inputter 4. As illustrated in FIG. 2, the operation panel 20 includes the computing apparatus 6.

FIG. 3 schematically illustrates an example of the laser beam machine 7, and FIG. 4 schematically illustrates an example of a plurality of devices 70 of the laser beam machine 7.

In the example illustrated in FIG. 3, the laser beam machine 7 includes a loader 7-1, a laser beam machining unit 7-2, and an unloader 7-3. A workpiece is loaded onto the loader 7-1. In the laser beam machining unit 7-2, the workpiece is machined by a laser beam. Note that, when the laser beam machine 7 includes a processing head holding a tool such as a cutting tool in addition to a laser head, the workpiece may be machined with the tool in the laser beam machining unit 7-2. The workpiece is unloaded from the unloader 7-3.

In the example illustrated in FIG. 4, each of the plurality of devices 70 is operable. More specifically, each of the plurality of devices 70 is manually operable. In the example illustrated in FIG. 4, the plurality of devices 70 include a first chuck 71 and a laser head 75. The first chuck 71 is capable of gripping a workpiece W. The laser head 75 emits a laser beam. The plurality of devices 70 may include at least one transfer arm 72 that transfers the workpiece W onto a movement path of the first chuck 71.

As illustrated in FIG. 5, the display 3 represents, using a laser beam machine model 7m modeling the laser beam machine 7 and a plurality of device models 70m respectively modeling the plurality of devices 70 that are operable, the arrangement of the plurality of devices 70 in the laser beam machine 7. In the example illustrated in FIG. 5, the display 3 is a touch-panel display 3t.

In the example illustrated in FIG. 5, the laser beam machining model 7m is a model representing the overall shape of the body of the laser beam machine 7. The laser beam machine model 7m is, for example, a shape model of an outer shape 7u of the laser beam machine 7 (note that the outer shape 7u may be the outer shape of the laser beam machine 7 from which a cover is removed, or the outer shape of the laser beam machine 7 from which the cover is not removed), or a skeleton model.

Each of the plurality of device models 70m is a shape model of the corresponding device 70 that is operable. In the example illustrated in FIGs. 4 and 5, the arrangement of the plurality of device models 70m with respect to the laser beam machine model 7m substantially corresponds to the arrangement of the plurality of devices 70 with respect to the laser beam machine 7 (for example, the outer shape 7u of the laser beam machine 7). In other words, the arrangement of the plurality of device models 70m with respect to the laser beam machine model 7m represents the arrangement of the plurality of devices 70 with respect to the laser beam machine 7 (for example, the outer shape 7u of the laser beam machine 7). Note that, however, the two arrangements do not necessarily have to match precisely.

The plurality of device models 70m include, for example, a first chuck model 71m modeling the first chuck 71 and a laser head model 75m modeling the laser head 75. The first chuck model 71m is a shape model of the first chuck 71, and the laser head model 75m is a shape model of the laser head 75. The plurality of device models 70m may include an arm model 72m modeling the at least one transfer arm 72. The arm model 72m is a shape model of the at least one transfer arm 72.

The inputter 4 receives user input. In the example illustrated in FIG. 5, the inputter 4 includes a touch panel 4t of the touch-panel display 3t. Alternatively or additionally, the inputter 4 may include a pointing device 4p (refer to FIG. 2), such as a mouse, or may include a keyboard.

As illustrated in FIGs. 6 and 7, in response to a first device model 70m-1 being selected via the inputter 4 out of the plurality of device models 70m displayed on the display 3, the computing apparatus 6 executes a first process that allows outputting a signal to manually operate the first device 70-1 corresponding to the first device model 70m-1.

In FIG. 6, the first device model 70m-1 hatched by dots indicates that the first device model 70m-1 is selected. In the example illustrated in FIG. 6, the first device model 70m-1 is the first chuck model 71m. Note that, however, in the first embodiment, the first device model 70m-1 may be a model other than the first chuck model 71m. In FIG. 7, a broken line arrow indicates a state in which the operation panel 20 for the laser beam machine is capable of outputting a signal to manually operate the first device 70-1.

As illustrated in FIGs. 8 and 9, in response to a second device model 70m-2 being selected via the inputter 4 out of the plurality of device models 70m displayed on the display 3, the computing apparatus 6 executes a second process that allows outputting a signal to manually operate a second device 70-2 corresponding to the second device model 70m-2.

In FIG. 8, the second device model 70m-2 hatched by dots indicates that the second device model 70m-2 is selected. In the example illustrated in FIG. 8, the second device model 70m-2 is the laser head model 75m. Note that, however, in the first embodiment, the second device model 70m-2 may be a model other than the laser head model 75m. In FIG. 9, a broken line arrow indicates a state in which the operation panel 20 for the laser beam machine is capable of outputting a signal to manually operate the second device 70-2.

In the operation panel 20 according to the first embodiment for the laser beam machine, the display 3 represents, using the laser beam machine model 7m and the plurality of device models 70m respectively modeling the plurality of devices 70 that are operable, the arrangement of the plurality of devices 70 in the laser beam machine. It is therefore possible for a user (more specifically, an operator) to easily grasp the arrangement of the plurality of devices in the laser beam machine 7.

In the operation panel 20 according to the first embodiment for the laser beam machine, when the first device model 70m-1 corresponding to the first device 70-1 is selected via the inputter 4 out of the plurality of device models 70m displayed on the display 3, the first device 70-1 becomes manually operable. When the second device model 70m-2 corresponding to the second device 70-2 is selected via the inputter 4 out of the plurality of device models 70m displayed on the display 3, the second device 70-2 becomes manually operable. Thus, the use of the operation panel 20 according to the first embodiment for the laser beam machine makes it possible for the user (more specifically, the operator) to easily select the device that is to be a manual operation target. For example, it is possible even for a user who does not remember the name of each device and/or the name of an operation target axis of each device to easily select the device that is to be the manual operation target.

The controller 2 according to the first embodiment for the laser beam machine includes the display 3, the inputter 4, the computing apparatus 6, which is capable of executing the above-described first process and the above-described second process, and a communication circuit 25. The display 3, the inputter 4, the first process, the second process, and the computing apparatus 6 have already been described, and therefore redundant descriptions for the display 3, the inputter 4, the first process, the second process, and the computing apparatus 6 will be omitted.

In the example illustrated in FIG. 10, the controller 2 (more specifically, the computing apparatus 6) for the laser beam machine generates a control command SA for processing the workpiece W by executing a machining program PG.

The control command SA includes a plurality of commands such as a first movement command SA1 that moves the laser head 75, an emission command SA2 that causes the laser head 75 to emit a laser beam, a second movement command SA3 that moves the first chuck 71, a first rotation command SA4 that rotates a workpiece grip component 71h of the first chuck 71, and a second rotation command SA5 that rotates a second chuck 74. The control command SA may include a third movement command SA6 that moves a processing head 76 holding a tool and a third rotation command SA7 that rotates the tool.

The communication circuit 25 transmits the above-described control command SA to the laser beam machine 7. The laser beam machine 7 is operated based on the control command SA and processes the workpiece W, based on the control command SA.

The controller 2 according to the first embodiment for the laser beam machine achieves similar effects as the operation panel 20 according to the first embodiment for the laser beam machine.

### (Optional Additional Structures)

Next, optional additional structures that are adoptable to the operation panel 20 according to the first embodiment for the laser beam machine or the controller 2 according to the first embodiment for the laser beam machine will be described with reference to FIGs. 1 to 47.

### (Inputter 4)

The operation panel 20 for the laser beam machine (or the controller 2 for the laser beam machine) includes the inputter 4. In the example illustrated in FIG. 2, the inputter 4 includes the touch panel 4t of the touch-panel display 3t. Alternatively or additionally, the inputter 4 may include the pointing device 4p, such as a mouse. Alternatively or additionally, the inputter 4 may include a plurality of switches provided separately from the display 3 (for example, a first switch 51-1 or a rotary handle HD illustrated in FIG. 1). The inputter may include a keypad or a keyboard capable of inputting numbers and the like.

### (Computing Apparatus 6)

As illustrated in FIG. 2, the operation panel 20 for the laser beam machine (or the controller 2 for the laser beam machine) includes the computing apparatus 6. The computing apparatus 6 includes at least one processor 6a (for example, at least one CPU). The computing apparatus 6 executes a plurality of processes including the first process and the second process that are described above, by executing a first program P1. For example, the computing apparatus 6 that executes the first program P1 executes the above-described first process that allows outputting a signal to manually operate the first device 70-1 corresponding to the first device model 70m-1. The computing apparatus 6 that executes the first program P1 executes the above-described second process that allows outputting a signal to manually operate the second device 70-2 corresponding to the second device model 70m-2.

The computing apparatus 6 included in the controller 2 for the laser beam machine 7 generates the above-described control command SA by executing the machining program PG. Note that, in the description, that the controller 2 (more specifically, the computing apparatus 6) executes the machining program PG encompasses the controller 2 (more specifically, the computing apparatus 6) executing the machining program PG via a computing program PJ. In other words, the machining program PG may be processed (in other words, interpreted) by the controller 2 (more specifically, the computing apparatus 6) by the controller 2 (more specifically, the computing apparatus 6) executing the computing program PJ.

Note that, the computing apparatus 6 may be distributed to a plurality of locations. For example, a computing apparatus that executes the machining program PG may be provided separately from the computing apparatus that executes the above-described first process and the above-described second process.

### (Memory 23)

The operation panel 20 for the laser beam machine (or the controller 2 for the laser beam machine) includes a memory 23. The memory 23 includes a storage medium that is readable by the computing apparatus 6. The memory 23 may include, for example, a non-volatile or volatile semiconductor memory such as a RAM, a ROM, and a flash memory. The memory 23 may include a magnetic disk or other forms of memories. The memory 23 stores the first program P1 and data. The memory 23 may store the above-described machining program PG and the above-described computing program PJ. Additionally, the memory 23 may store a later-described first macro MC1, a later-described second macro MC2, and/or a later-described third macro MC3.

The memory 23 may be distributed to a plurality of locations. For example, a memory that stores data may be provided separately from a memory that stores a program.

### (Communication Circuit 25)

The communication circuit 25 transmits a manual operation signal generated by the computing apparatus 6 to a driver of each of the plurality of devices 70 that are operable. For example, during execution of the first process, the computing apparatus 6 transmits a first manual operation signal to a first mover 81 (refer to FIG. 7) that moves the first device 70-1, based on user operation. Additionally, during execution of the second process, the computing apparatus 6 transmits a second manual operation signal to a mover (hereinafter, referred to as a "second mover 84") that moves the second device 70-2, based on user operation.

In the example illustrated in FIG. 2, the computing apparatus 6, the memory 23, the inputter 4, the display 3, and the communication circuit 25 are coupled to each other via a bus 27.

### (Laser Beam Machine Model 7m and Plurality of Device Models 70m To Be Displayed on Display 3)

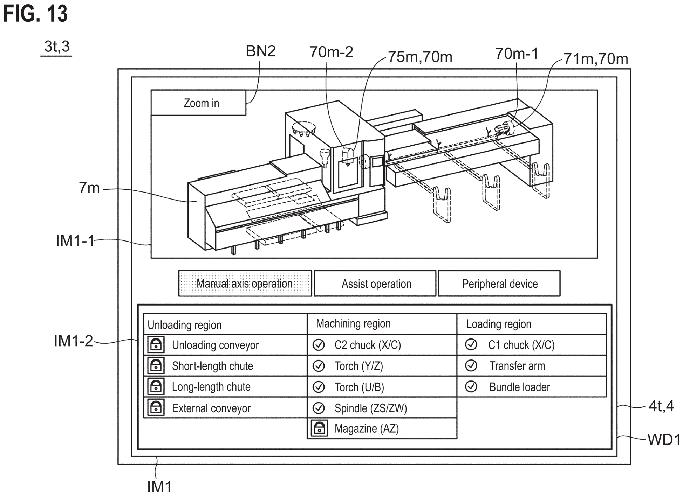

In the example illustrated in FIG. 5, the laser beam machine model 7m is a two-dimensional model of the laser beam machine. Each of the plurality of device models 70m is a two-dimensional model of the corresponding device that is operable. Alternatively, as illustrated in FIG. 13, the laser beam machine model 7m may be a three-dimensional model of the laser beam machine. Each of the plurality of device models 70m may be a three-dimensional model of the corresponding device that is operable.

The color of each of the plurality of device models 70m displayed on the display 3 preferably has a color different from the laser beam machine model 7m displayed on the display 3. In FIGs. 5 and 13, the laser beam machine model 7m is represented by a solid line, and the plurality of device models 70m are represented by a broken line. The difference between the solid line and the broken line represents the difference between the color of the laser beam machine model 7m and the color of the plurality of device models 70m. For example, the color of each of the plurality of device models 70m displayed on the display 3 is a first color (for example, green), and the color of the laser beam machine model 7m displayed on the display 3 is a second color (for example, white or grey). The difference in the colors of the plurality of device models 70m and the laser beam machine model 7m makes it easy for the user to grasp the plurality of device models that are selectable.

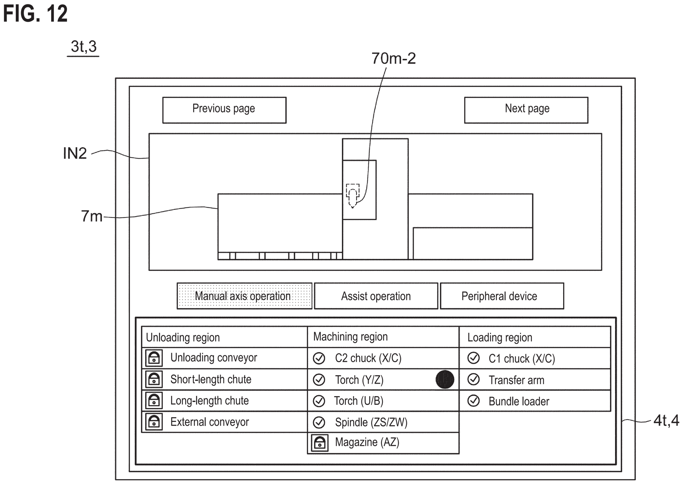

In the example illustrated in FIG. 5, the computing apparatus 6 causes the laser beam machine model 7m and the plurality of device models 70m to be displayed on the display 3 at the same time. Alternatively, as illustrated in FIGs. 11 and 12, the computing apparatus 6 may selectively (1) cause a first arrangement representation image IN1 including the laser beam machine model 7m and one device model (for example, the first device model 70m-1) to be displayed on the display 3 and (2) cause a second arrangement representation image IN2 including the laser beam machine model 7m and another device model (for example, the second device model 70m-2) to be displayed on the display 3. In this case, the arrangement of the plurality of devices 70 in the laser beam machine 7 is represented by a plurality of images including the first arrangement representation image IN1 and the second arrangement representation image IN2. In the examples illustrated in FIGs. 11 and 12, in response to a first button image BN1 displayed on the display 3 being touched or clicked via the inputter 4, the image displayed on the display 3 is switched from the first arrangement representation image IN1 to the second arrangement representation image IN2. Note that, in the description, that the image is clicked via the inputter 4 means that a button of the inputter 4 (for example, the pointing device 4p or the keyboard) is pressed with a cursor overlapping the image.

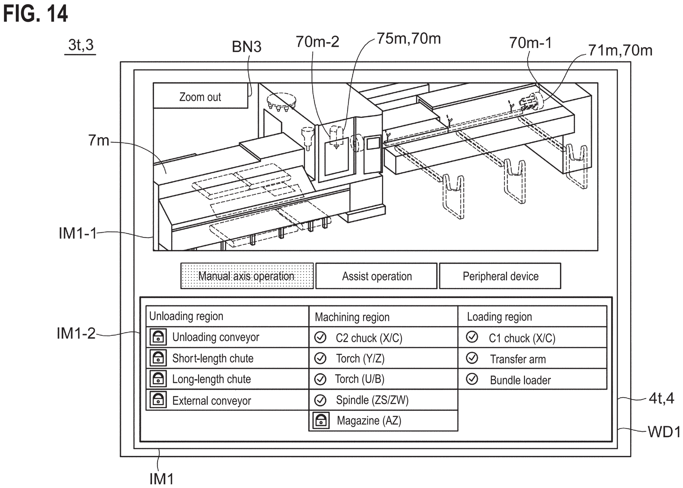

As illustrated in FIGs. 13 and 14, the image including the laser beam machine model 7m and the plurality of device models 70m may be zoomable. In the example illustrated in FIG. 13, in response to a second button image BN2 displayed on the display 3 being touched or clicked via the inputter 4, the image including the laser beam machine model 7m and the plurality of device models 70m is displayed in a larger size. In the example illustrated in FIG. 14, in response to a third button image BN3 displayed on the display 3 being touched or clicked via the inputter 4, the image including the laser beam machine model 7m and the plurality of device models 70m is displayed in a smaller size.

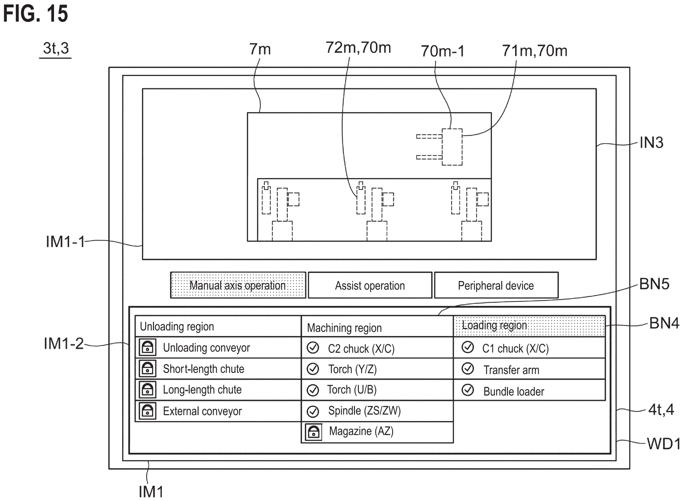

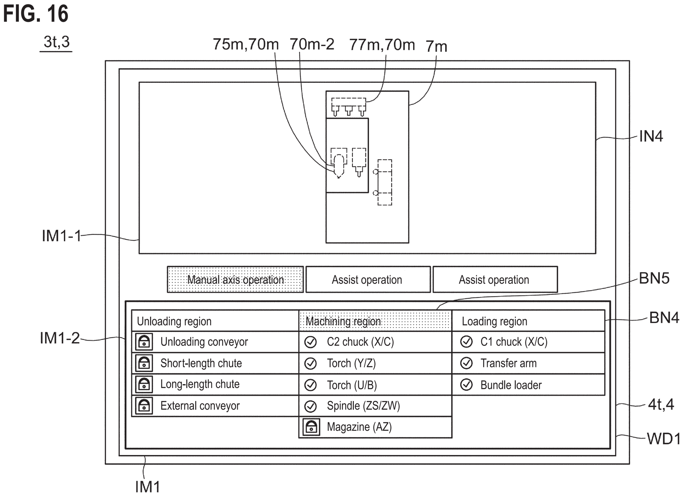

As illustrated in FIGs. 15 and 16, the image including the laser beam machine model 7m and the plurality of device models 70m may be displayable in a split manner. In the example illustrated in FIGs. 15 and 16, the computing apparatus 6 causes a first part image IN3 (refer to FIG. 15) and a second part image IN4 (refer to FIG. 16) to be selectively displayed on the display 3. The first part image IN3 includes a part of the laser beam machine model 7m and the plurality of device models 70m corresponding to the plurality of devices provided in a loading region. The second part image IN4 includes another part of the laser beam machine model 7m and the plurality of device models 70m corresponding to the plurality of devices provided in a machining region. In the example illustrated in FIGs. 15 and 16, in response to a loading region designating section BN4 displayed on the display 3 being touched or clicked via the inputter 4, the first part image IN3 is displayed on the display 3 (refer to FIG. 15), and in response to a machining region designating section BN5 displayed on the display 3 being touched or clicked via the inputter 4, the second part image IN4 is displayed on the display 3 (refer to FIG. 16).

### (First Image IM1)

In the example illustrated in FIGs. 5 to 9 and 13 to 16, the computing apparatus 6 is capable of executing a first display process of causing a first image IM1 including the laser beam machine model 7m and the plurality of device models 70m to be displayed on the display 3. More specifically, the computing apparatus 6 causes the first image IM1 including the laser beam machine model 7m and the plurality of device models 70m to be displayed on the display 3 by executing the first program P1 stored in the memory 23.

In the example illustrated in FIGs. 5 to 9 and 13 to 16, the first image IM1 includes the laser beam machine model 7m and the plurality of device models 70m, and the computing apparatus 6 causes the display 3 to display the laser beam machine model 7m and the plurality of device models 70m at the same time. In this case, it is possible for the user (more specifically, the operator) to promptly recognize the positional relationship between the laser beam machine model 7m and each of the plurality of device models 70m.

In the example illustrated in FIGs. 5, 6, 8, and 13 to 16, the first image IM1 includes a model image IM1-1 including the laser beam machine model 7m and the plurality of device models 70m, and a first list image IM1-2 including a list of the plurality of devices 70. In the example illustrated in FIGs. 5, 6, 8, and 13 to 16, the first image IM1 includes a first window WD1, and the first window WD1 includes the above-described model image IM1-1 and the above-described first list image IM1-2. Alternatively, the first image IM1 may include the first window WD1 including the above-described model image IM1-1 and another window including the above-described first list image IM1-2.

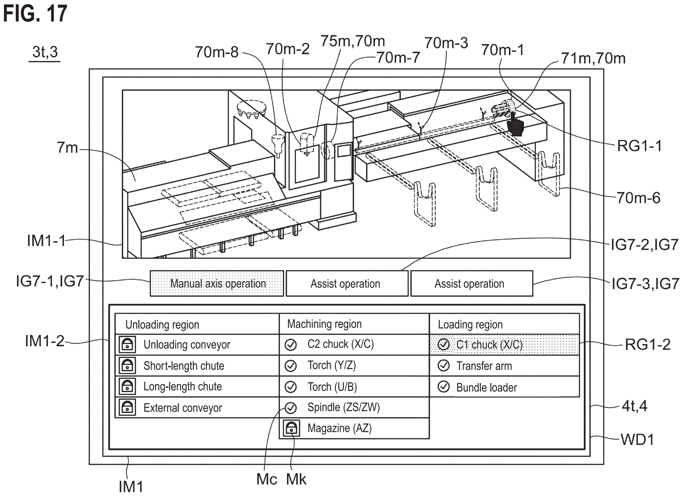

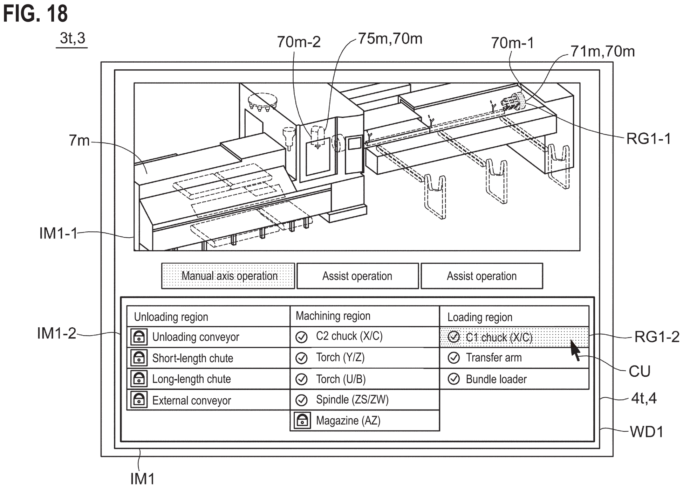

In the example illustrated in FIG. 17 or 18, in response to the first device model 70m-1 being selected via the inputter 4 (for example, the touch panel 4t or the pointing device 4p) out of the plurality of device models 70m in the first image IM1, the computing apparatus 6 executes the above-described first process.

In response to the first device model 70m-1 being selected, the computing apparatus 6 may change the color of the first device model 70m-1 from the above-described first color (for example, green) to a third color (for example, orange). When the color of the first device model 70m-1 that has been selected is represented by the third color, and the color of other device models is represented by the first color different from the third color, it is possible for the user (more specifically, the operator) to easily recognize that the first device model 70m-1 has been selected. Additionally, in response to the first device model 70m-1 being selected, the computing apparatus 6 may change the color of a region RG1-2 indicating the first device 70-1 to the above-described third color (for example, orange) in the first list image IM1-2 displayed on the display 3.

In the example illustrated in FIG. 27 or 28, in response to the second device model 70m-2 being selected via the inputter 4 (for example, the touch panel 4t or the pointing device 4p) out of the plurality of device models 70m in the first image IM1, the computing apparatus 6 executes the above-described second process.

In response to the second device model 70m-2 being selected, the computing apparatus 6 may change the color of the second device model 70m-2 from the above-described first color (for example, green) to the third color (for example, orange). When the color of the second device model 70m-2 that has been selected is represented by the third color, and the color of other device models is represented by the first color different from the third color, it is possible for the user (more specifically, the operator) to easily recognize that the second device model 70m-2 has been selected. Additionally, in response to the second device model 70m-2 being selected, the computing apparatus 6 may change the color of a region RG2-2 indicating the second device 70-2 to the above-described third color (for example, orange) in the first list image IM1-2 displayed on the display 3.

### (Selection of First Device Model 70m-1)

In the example illustrated in FIG. 17, when a region RG1-1 indicating the first device model 70m-1 (more specifically, the region RG1-1 where the first device model 70m-1 is displayed) is touched in the model image IM1-1 displayed on the display 3, the computing apparatus 6 receives the selection of the first device model 70m-1. Alternatively, when the button of the inputter 4 such as the pointing device 4p is clicked with the cursor overlapping the region RG1-1 indicating the first device model 70m-1 (more specifically, the region RG1-1 where the first device model 70m-1 is displayed) in the model image IM1-1 displayed on the display 3, the computing apparatus 6 may receive the selection of the first device model 70m-1.

In the example illustrated in FIG. 18, when the button of the inputter 4 such as the pointing device 4p is clicked with a cursor CU overlapping the region RG1-2 indicating the first device 70-1 (for example, the region RG1-2 where the identification name of the first device 70-1 is displayed) in the first list image IM1-2 displayed on the display 3, the computing apparatus 6 receives the selection of the first device model 70m-1. Alternatively, when the region RG1-2 indicating the first device 70-1 (for example, the region RG1-2 where the identification name of the first device 70-1 is displayed) is touched in the first list image IM1-2 displayed on the display 3, the computing apparatus 6 may receive the selection of the first device model 70m-1.

In the example illustrated in FIGs. 17 and 18, the computing apparatus 6 is configured to receive the selection of the first device model 70m-1 displayed on the display 3 in both of the case where the region RG1-1 indicating the first device model 70m-1 in the model image IM1-1 displayed on the display 3 is touched or clicked via the inputter 4 and the case where the region RG1-2 indicating the first device 70-1 in the first list image IM1-2 displayed on the display 3 is touched or clicked via the inputter 4. This provides a graphical user interface suitable for both a first user who prefers directly selecting the first device model 70m-1 and a second user who prefers selecting from the list.

In the example illustrated in FIG. 17 or 18, when the first device model 70m-1 is selected via the inputter 4 out of the plurality of device models 70m displayed on the display 3, the computing apparatus 6 causes a second image IM2 to be displayed on the display 3. The second image IM2 will be described below.

### (Selection of Second Device Model 70m-2)

In the example illustrated in FIG. 27, when a region RG2-1 indicating the second device model 70m-2 (more specifically, the region RG2-1 where the second device model 70m-2 is displayed) is touched in the model image IM1-1 displayed on the display 3, the computing apparatus 6 receives the selection of the second device model 70m-2. Alternatively, when the button of the inputter 4 such as the pointing device 4p is clicked with the cursor overlapping the region RG2-1 indicating the second device model 70m-2 (more specifically, the region RG2-1 where the second device model 70m-2 is displayed) in the model image IM1-1 displayed on the display 3, the computing apparatus 6 may receive the selection of the second device model 70m-2.

In the example illustrated in FIG. 28, when the button of the inputter 4 such as the pointing device 4p is clicked with the cursor CU overlapping the region RG2-2 indicating the second device 70-2 (for example, the region RG2-2 where the identification name of the second device 70-2 is displayed) in the first list image IM1-2 displayed on the display 3, the computing apparatus 6 receives the selection of the second device model 70m-2. Alternatively, when the region RG2-2 indicating the second device 70-2 (for example, the region RG2-2 where the identification name of the second device 70-2 is displayed) is touched in the first list image IM1-2 displayed on the display 3, the computing apparatus 6 may receive the selection of the second device model 70m-2.

In the example illustrated in FIGs. 27 and 28, the computing apparatus 6 is configured to receive the selection of the second device model 70m-2 displayed on the display 3 in both of the case where the region RG2-1 indicating the second device model 70m-2 is touched or clicked via the inputter 4 in the model image IM1-1 displayed on the display 3 and the case where the region RG2-2 indicating the second device 70-2 is touched or clicked via the inputter 4 in the first list image IM1-2 displayed on the display 3. This provides a graphical user interface suitable for both of the first user who prefers directly selecting the second device model 70m-2 and the second user who prefers selecting from the list.

In the example illustrated in FIG. 27 or 28, when the second device model 70m-2 is selected via the inputter 4 out of the plurality of device models 70m displayed on the display 3, the computing apparatus 6 causes a third image IM3 to be displayed on the display 3. The third image IM3 will be described below.

### (Plurality of Switches 51)

In the example illustrated in FIG. 1, the operation panel 20 according to the first embodiment for the laser beam machine (or the controller 2 according to the first embodiment for the laser beam machine) includes a plurality of switches 51. The plurality of switches 51 include the first switch 51-1 and a second switch 51-2. Additionally, the plurality of switches 51 may include a third switch 51-3 and/or a fourth switch 51-4. The first switch 51-1 may be a switch with an arrow mark (for example, a left arrow mark). The second switch 51-2 may be a switch with an arrow mark (for example, a right arrow mark). The third switch 51-3 may be a switch with an arrow mark (for example, an up arrow mark). The fourth switch 51-4 may be a switch with an arrow mark (for example, a down arrow mark).

In the example illustrated in FIG. 1, a straight line that couples the first switch 51-1 to the second switch 51-2 is perpendicular to a straight line that couples the third switch 51-3 to the fourth switch 51-4. The plurality of switches 51 may include a fifth switch 51-5 for lifting the laser head 75. In the example illustrated in FIG. 1, the fifth switch 51-5 is provided between the first switch 51-1 and the second switch 51-2.

The above-described first process (in other words, the first process that allows outputting a signal to manually operate the first device 70-1 corresponding to the first device model 70m-1) may include making the first device 70-1 manually operable using the plurality of switches 51. More specifically, the above-described first process includes assigning a manual operation function of the first device 70-1 to at least one of the plurality of switches 51. The execution of the first process thus causes the state of the plurality of switches 51 to be switched from a state in which the first device 70-1 is unable to be manually operated to a state in which the first device 70-1 is able to be manually operated.

Note that, it is unnecessary to use all the switches of the plurality of switches 51 for the manual operation of the first device 70-1. In other words, in the above-described first process, the manual operation function of the first device 70-1 does not necessarily have to be assigned to some of the plurality of switches 51.

The above-described second process (in other words, the second process that allows outputting a signal to manually operate the second device 70-2 corresponding to the second device model 70m-2) may include making the second device 70-2 manually operable using the plurality of switches 51. More specifically, the above-described second process includes assigning the manual operation function of the second device 70-2 to at least one of the plurality of switches 51. The execution of the second process thus causes the state of the plurality of switches 51 to be switched from a state in which the second device 70-2 is unable to be manually operated to a state in which the second device 70-2 is able to be manually operated.

Note that, it is unnecessary to use all the switches of the plurality of switches 51 for the manual operation of the second device 70-2. In other words, in the above-described second process, the manual operation function of the second device 70-2 does not necessarily have to be assigned to some of the plurality of switches 51.

In the example illustrated in FIG. 7, at least one of the plurality of switches 51 is provided separately from the screen of the display 3 displaying the laser beam machine model 7m and the plurality of device models 70m. When the manual operation function of the first device 70-1 (or the manual operation function of the second device 70-2) is assigned to the switch provided separately from the screen of the display 3 displaying the laser beam machine model 7m and the plurality of device models 70m, an operation error by the user is reduced.

In the example illustrated in FIG. 7, at least one of the plurality of switches 51 is a physical switch. In the example illustrated in FIG. 7, the first switch 51-1 is a first physical switch (for example, a first hardware button HS1). The second switch 51-2 is a second physical switch (for example, a second hardware button HS2). The third switch 51-3 is a third physical switch (for example, a third hardware button HS3). The fourth switch 51-4 is a fourth physical switch (for example, a fourth hardware button HS4). The fifth switch 51-5 is a fifth physical switch (for example, a fifth hardware button HS5).

Note that, in the description, the physical switch refers to a switch that emits a signal, based on a positional change of a switch component. One physical switch included in the plurality of switches 51 may be the rotary handle HD.

When the physical switch is provided separately from the display 3 displaying the laser beam machine model 7m and the plurality of device models 70m, and the manual operation function of the first device 70-1 (or the manual operation function of the second device 70-2) is assigned to the physical switch, an operation error by the user is reduced.

Note that, information that describes or suggests the function assigned to a hardware button may be displayed below the hardware button. For example, information such as "+X" may be displayed below the first hardware button HS1. For example, a liquid crystal display may be provided below the first hardware button HS1. The liquid crystal display displays information that describes or suggests the function assigned to the first hardware button HS1.

The switch provided separately from the display 3 displaying the laser beam machine model 7m and the plurality of device models 70m may be a touch panel provided on a sub-display (in other words, a software switch provided on the sub-display). When the manual operation function of the first device 70-1 (or the manual operation function of the second device 70-2) is assigned to a switch on the sub-display provided separately from the screen of the display 3 displaying the laser beam machine model 7m and the plurality of device models 70m, an operation error by the user is reduced.

### (Second Image IM2)

The computing apparatus 6 executes a second display process of displaying the second image IM2 on the display 3 by executing the first program P1.

In the example illustrated in FIG. 19 or 20, when the above-described first process (in other words, the first process that allows outputting a signal to manually operate the first device 70-1 corresponding to the first device model 70m-1) is executed, the second image IM2 including a first operation menu E1 for the first device 70-1 (for example, a menu indicating in which direction the first device 70-1 is movable) is displayed on the display 3. In the example illustrated in FIG. 19 or 20, the first operation menu E1 includes an image IQ1 simulating the shape of the first device 70-1 and an image (for example, an arrow image, etc.) indicating in which direction the first device 70-1 is movable.

When the first operation menu E1 is displayed on the display 3, it is possible for the user (more specifically, the operator) to grasp how to operate the first device 70-1 using the plurality of switches 51.

In the example illustrated in FIG. 19 or 20, the second image IM2 (more specifically, the first operation menu E1) includes an image simulating at least one of the plurality of switches 51. When the second image IM2 includes an image simulating at least one of the plurality of switches 51, it is possible for the user (more specifically, the operator) to easily grasp how to operate the first device 70-1 using at least one of the plurality of switches 51.

In the example illustrated in FIG. 19 or 20, at least one of the plurality of switches 51 (for example, the first switch 51-1) is a physical switch. Further, the second image IM2 (more specifically, the first operation menu E1) includes an image simulating the physical switch (for example, the first switch 51-1). When the second image IM2 includes the image simulating the physical switch, it is possible for the user (more specifically, the operator) to easily grasp how to operate the first device 70-1 using the physical switch. Additionally, when the operation is performed using the physical switch, an operation error is less likely to occur compared with a case where the operation is performed using a software switch.

As illustrated in FIG. 21, in response to the first device model 70m-1 being selected via the inputter 4 out of the plurality of device models 70m displayed on the display 3, the computing apparatus 6 may cause the second image IM2 (more specifically, a second window WD2 including the second image IM2) to be displayed on the display 3 as a popup. In the example illustrated in FIG. 21, the second image IM2 is displayed to overlap the first image IM1.

In the example illustrated in FIG. 22, the display 3 includes a first screen 3a and a second screen 3b different from the first screen 3a. The first screen 3a displays the laser beam machine model 7m and the plurality of device models 70m. In this case, the computing apparatus 6 may cause the above-described second image IM2 to be displayed on the second screen 3b in addition to causing the laser beam machine model 7m and the plurality of device models 70m to be displayed on the first screen 3a. In the example illustrated in FIG. 22, in response to the first device model 70m-1 being selected via the inputter 4 out of the plurality of device models 70m displayed on the first screen 3a of the display 3, the computing apparatus 6 causes the second image IM2 including the first operation menu E1 to be displayed on the second screen 3b while the laser beam machine model 7m and the plurality of device models 70m are displayed on the first screen 3a.

### (Manual Operation of First Device 70-1)

In the example illustrated in FIG. 19 or 20, the plurality of switches 51 include the first switch 51-1 that moves at least part of the first device 70-1 (for example, the entire first device 70-1) in a first direction DR1 along a first axis AX1. In other words, the above-described first process includes the computing apparatus 6 assigning, to the first switch 51-1, an operation function that moves at least part of the first device 70-1 (for example, the entire first device 70-1) in the first direction DR1 along the first axis AX1. The first axis AX1 is, for example, an X-axis (more specifically, an axis parallel to a horizontal plane). The first direction DR1 is, for example, a +X direction (more specifically, a direction toward the second chuck 74 or the laser beam machining unit 7-2).

In the example illustrated in FIG. 19 or 20, when the first switch 51-1 is pressed, the computing apparatus 6 generates a first movement signal that moves at least part of the first device 70-1 (for example, the entire first device 70-1) in the first direction DR1. Further, the communication circuit 25 transmits the first movement signal generated by the computing apparatus 6 to the first mover 81 (refer to FIG. 19 or 20) that moves the first device. Thus, at least part of the first device 70-1 (for example, the entire first device 70-1) moves in the first direction DR1.

In the description, a direction opposite to the first direction DR1 is defined as a second direction DR2 (refer to FIG. 19 or 20). In the example illustrated in FIG. 19 or 20, the plurality of switches 51 include the second switch 51-2 that moves at least part of the first device 70-1 (for example, the entire first device 70-1) in the second direction DR2. In other words, the above-described first process includes the computing apparatus 6 assigning, to the second switch 51-2, an operation function that moves at least part of the first device 70-1 (for example, the entire first device 70-1) in the second direction DR2. The second direction DR2 is, for example, a -X direction (more specifically, a direction separating from the second chuck 74 or the laser beam machining unit 7-2).

In the example illustrated in FIG. 19 or 20, when the second switch 51-2 is pressed, the computing apparatus 6 generates a second movement signal that moves at least part of the first device 70-1 (for example, the entire first device 70-1) in the second direction DR2. Further, the communication circuit 25 transmits the second movement signal generated by the computing apparatus 6 to the first mover 81 (refer to FIG. 19 or 20) that moves the first device. Thus, at least part of the first device 70-1 (for example, the entire first device 70-1) moves in the second direction DR2.

In the example illustrated in FIG. 19 or 20, the plurality of switches 51 include the third switch 51-3 that rotates at least part of the first device 70-1 (for example, the workpiece grip component 71h of the first chuck 71) in a first rotation direction R1 about a second axis AX2. In other words, the above-described first process includes the computing apparatus 6 assigning, to the third switch 51-3, an operation function that rotates at least part of the first device 70-1 (for example, the workpiece grip component 71h of the first chuck 71) in the first rotation direction R1 about the second axis AX2. In the example illustrated in FIG. 19 or 20, the second axis AX2 is a rotational center axis of a C-axis, and the second axis AX2 is an axis parallel to the first axis AX1.

In the example illustrated in FIG. 19 or 20, when the third switch 51-3 is pressed, the computing apparatus 6 generates a first rotation signal that rotates at least part of the first device 70-1 (for example, the workpiece grip component 71h of the first chuck 71) in the first rotation direction R1. Further, the communication circuit 25 transmits the first rotation signal generated by the computing apparatus 6 to the first device 70-1 (more specifically, a rotational driver 712 of the first device 70-1). Thus, at least part of the first device 70-1 (for example, the workpiece grip component 71h of the first chuck 71) rotates in the first rotation direction R1.

In the description, a direction opposite to the first rotation direction R1 is defined as a second rotation direction R2. In the example illustrated in FIG. 19 or 20, the plurality of switches 51 include the fourth switch 51-4 that rotates at least part of the first device 70-1 (for example, the workpiece grip component 71h of the first chuck 71) in the second rotation direction R2. In other words, the above-described first process includes the computing apparatus 6 assigning, to the fourth switch 51-4, an operation function that rotates at least part of the first device 70-1 (for example, the workpiece grip component 71h of the first chuck 71) in the second rotation direction R2.

In the example illustrated in FIG. 19 or 20, when the fourth switch 51-4 is pressed, the computing apparatus 6 generates a second rotation signal that rotates at least part of the first device 70-1 (for example, the workpiece grip component 71h of the first chuck 71) in the second rotation direction R2. Further, the communication circuit 25 transmits the second rotation signal generated by the computing apparatus 6 to the first device 70-1 (more specifically, the rotational driver 712 of the first device 70-1). Thus, at least part of the first device 70-1 (for example, the workpiece grip component 71h of the first chuck 71) rotates in the second rotation direction R2.

The above-described first process may include causing the switch 51 to which the manual operation function of the first device 70-1 is assigned to illuminate (the illuminated switch is represented by three lines in FIG. 22) in order to distinguish the switch 51 to which the manual operation function of the first device 70-1 is assigned, from other switches.

In the example illustrated in FIG. 19 or 20, the above-described second image IM2 (more specifically, the first operation menu E1) includes an image simulating the first switch 51-1 (hereinafter, referred to as a "first switch image S1") and an image (hereinafter, referred to as a "first instruction image T1") indicating the correspondence relationship between the operation of the first switch 51-1 and the above-described first direction DR1 (in other words, the direction in which at least part of the first device 70-1 moves by the operation of the first switch 51-1). The first instruction image T1 may include a symbol indicating the first axis AX1 (for example, the X-axis), or may include a symbol (for example, "+X") indicating the first direction DR1.

In the example illustrated in FIG. 19 or 20, the above-described second image IM2 (more specifically, the first operation menu E1) includes an image simulating the second switch 51-2 (hereinafter, referred to as a "second switch image S2") and an image (hereinafter, referred to as a "second instruction image T2") indicating the correspondence relationship between the operation of the second switch 51-2 and the above-described second direction DR2 (in other words, the direction in which at least part of the first device 70-1 moves by the operation of the second switch 51-2). The second instruction image T2 may include a symbol indicating the first axis AX1 (for example, the X-axis), or may include a symbol (for example, "-X") indicating the second direction DR2.

In the example illustrated in FIG. 19 or 20, the above-described second image IM2 (more specifically, the first operation menu E1) includes an image simulating the third switch 51-3 (hereinafter, referred to as a "third switch image S3") and an image (hereinafter, referred to as a "third instruction image T3") indicating the correspondence relationship between the operation of the third switch 51-3 and the above-described first rotation direction R1 (more specifically, the direction in which the workpiece grip component 71h of the first chuck 71 rotates by the operation of the third switch 51-3). The third instruction image T3 may include a symbol (for example, "-C") indicating the first rotation direction R1 about the second axis AX2. More specifically, the third instruction image T3 may include a symbol indicating "-C direction" in a direction along the C-axis.

In the example illustrated in FIG. 19 or 20, the above-described second image IM2 (more specifically, the first operation menu E1) includes an image simulating the fourth switch 51-4 (hereinafter, referred to as a "fourth switch image S4") and an image (hereinafter, referred to as a "fourth instruction image T4") indicating the correspondence relationship between the operation of the fourth switch 51-4 and the above-described second rotation direction R2 (more specifically, the direction in which the workpiece grip component 71h of the first chuck 71 rotates by the operation of the fourth switch 51-4). The fourth instruction image T4 may include a symbol (for example, "+C") indicating the second rotation direction R2 about the second axis AX2. More specifically, the fourth instruction image T4 may include a symbol indicating "+C direction" in a direction along the C-axis.

As illustrated in FIG. 21, the above-described second image IM2 may include position data (for example, X-coordinate data DA1) indicating the position of the first device 70-1. When the position data (for example, the X-coordinate data DA1) of the first device 70-1 is displayed on the display 3 in addition to the first operation menu E1 for the first device 70-1, it is possible for the user to manually operate the first device 70-1 while referring to the position data of the first device 70-1.

As illustrated in FIG. 21, the above-described second image IM2 may include phase data DA2 indicating the rotational phase of the first device 70-1 (more specifically, the rotational phase of the workpiece grip component 71h of the first chuck 71). When the phase data DA2 of the first device 70-1 is displayed on the display 3 in addition to the first operation menu E1 for the first device 70-1, it is possible for the user to manually operate the first device 70-1 while referring to the phase data DA2 of the first device 70-1.

### (Selection of Operation Mode of First Device 70-1)

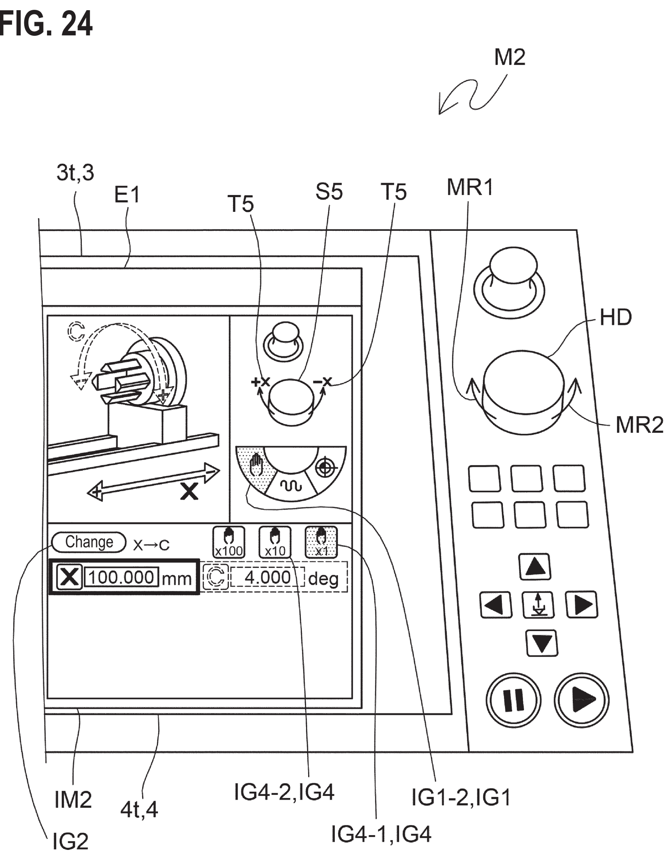

The computing apparatus 6 may be capable of switching the operation mode of the first device 70-1 between a button operation mode M1 (refer to FIG. 23) and a handle operation mode M2 (refer to FIG. 24). In other words, the computing apparatus 6 may be capable of executing, as the operation mode of the first device 70-1, the mode selected out of the plurality of operation modes including the button operation mode M1 and the handle operation mode M2.

In the example illustrated in FIGs. 23 and 24, the computing apparatus 6 causes a mode selector IG1 to be displayed on the display 3. The mode selector IG1 accepts the selection of the operation mode of the first device 70-1 out of the plurality of operation modes (more specifically, out of the plurality of operation modes including the button operation mode M1 and the handle operation mode M2). In the example illustrated in FIGs. 23 and 24, the second image IM2 includes the mode selector IG1.

In the example illustrated in FIG. 23, in response to a button operation designating section IG1-1 of the mode selector IG1 being touched or clicked via the inputter 4, the computing apparatus 6 selects the button operation mode M1 as the operation mode of the first device 70-1. In other words, in response to the button operation designating section IG1-1 being touched or clicked via the inputter 4, the computing apparatus 6 switches the operation mode of the first device 70-1 to the button operation mode M1.

When the button operation mode M1 is executed, the computing apparatus 6 assigns the manual operation function of the first device 70-1 to at least one button (for example, the first switch 51-1, the second switch 51-2, the third switch 51-3, and/or the fourth switch 51-4).

In the example illustrated in FIG. 24, in response to a handle operation designating section IG1-2 of the mode selector IG1 being touched or clicked via the inputter 4, the computing apparatus 6 selects the handle operation mode M2 as the operation mode of the first device 70-1. In other words, in response to the handle operation designating section IG1-2 being touched or clicked via the inputter 4, the computing apparatus 6 switches the operation mode of the first device 70-1 to the handle operation mode M2.

When the handle operation mode M2 is executed, the computing apparatus 6 assigns the manual operation function of the first device 70-1 to at least one handle (more specifically, the rotary handle HD).

In the example illustrated in FIG. 24, the computing apparatus 6 causes the image simulating the rotary handle HD (hereinafter, referred to as a "handle image S5") to be displayed on the display 3. In the example illustrated in FIG. 24, the second image IM2 (more specifically, the first operation menu E1) includes the handle image S5. When the handle image S5 is displayed on the display 3, it is possible for the user (more specifically, the operator) to easily grasp how to operate the first device 70-1 using the rotary handle HD.

In the example illustrated in FIG. 24, when the rotary handle HD is rotated in a first operation direction MR1, the computing apparatus 6 generates a third movement signal that moves at least part of the first device 70-1 (for example, the entire first device 70-1) in the first direction DR1. Further, the communication circuit 25 transmits the third movement signal generated by the computing apparatus 6 to the first mover 81 (refer to FIG. 19 or 20) that moves the first device. Thus, at least part of the first device 70-1 (for example, the entire first device 70-1) moves in the first direction DR1.

Note that, it is preferable that the third movement signal be a signal that moves the first device 70-1 in the first direction DR1 at a relatively low speed and that the above-described first movement signal be a signal that moves the first device 70-1 in the first direction DR1 at a relatively high speed. In other words, the movement speed of the first device 70-1 in the first direction DR1, based on the third movement signal is preferably lower than the movement speed of the first device 70-1 in the first direction DR1, based on the above-described first movement signal.

In the example illustrated in FIG. 24, when the rotary handle HD is rotated in a second operation direction MR2, the computing apparatus 6 generates a fourth movement signal that moves at least part of the first device 70-1 (for example, the entire first device 70-1) in the second direction DR2. Further, the communication circuit 25 transmits the fourth movement signal generated by the computing apparatus 6 to the first mover 81 (refer to FIG. 19 or 20) that moves the first device. Thus, at least part of the first device 70-1 (for example, the entire first device 70-1) moves in the second direction DR2.

Note that, it is preferable that the fourth movement signal be a signal that moves the first device 70-1 in the second direction DR2 at a relatively low speed and that the above-described second movement signal be a signal that moves the first device 70-1 in the second direction DR2 at a relatively high speed. In other words, the movement speed of the first device 70-1 in the second direction DR2, based on the fourth movement signal is preferably lower than the movement speed of the first device 70-1 in the second direction DR2, based on the above-described second movement signal.

In the example illustrated in FIG. 24, the above-described second image IM2 includes the handle image S5 simulating the rotary handle HD. Further, the above-described second image IM2 (more specifically, the first operation menu E1) includes an image (hereinafter, referred to as a "fifth instruction image T5") indicating the correspondence relationship between the operation of the rotary handle HD in the first operation direction MR1 and the above-described first direction DR1 and the correspondence relationship between the operation of the rotary handle HD in the second operation direction MR2 and the above-described second direction DR2. The fifth instruction image T5 may include a symbol indicating the first axis AX1 (for example, the X-axis). Further, the fifth instruction image T5 may include a symbol (for example, "+X") indicating the first direction DR1 and a symbol (for example, "-X") indicating the second direction DR2 opposite to the first direction DR1.

In the example illustrated in FIG. 23 and 24, the computing apparatus 6 is capable of selectively executing the button operation mode M1 that operates the first device 70-1 using at least one button and the handle operation mode M2 that operates the first device 70-1 using at least one handle. In this case, it is possible for the user to promptly move the first device 70-1 by selecting the button operation mode M1. Further, it is possible for the user to adjust the precise position of the first device 70-1 by selecting the handle operation mode M2.

In the example illustrated in FIGs. 23 and 24, that the computing apparatus 6 switches the operation mode of the first device 70-1 from the button operation mode M1 to the handle operation mode M2 includes the computing apparatus 6 changing the assignment of the manual operation function for the first device 70-1 from at least one button (for example, the first switch 51-1, the second switch 51-2, the third switch 51-3, and/or the fourth switch 51-4) to at least one handle (for example, the rotary handle HD). Further, in the example illustrated in FIGs. 23 and 24, that the computing apparatus 6 switches the operation mode of the first device 70-1 from the handle operation mode M2 to the button operation mode M1 includes changing the assignment of the manual operation function for the first device 70-1 from at least one handle (for example, the rotary handle HD) to at least one button (for example, the first switch 51-1, the second switch 51-2, the third switch 51-3, and/or the fourth switch 51-4).

In the example illustrated in FIG. 23, in the state in which the button operation mode M1 is being executed, the user is capable of executing both of the operation to move at least part of the first device 70-1 in the direction along the first axis AX1 and the operation to rotate at least part of the first device 70-1 about the second axis AX2.

In the example illustrated in FIG. 24, in the state in which the handle operation mode M2 is being executed, the user is capable of executing only the operation to move at least part of the first device 70-1 in the direction along the first axis AX1. As illustrated in FIG. 24, the computing apparatus 6 may cause an operation target axis switching section IG2 to be displayed on the display 3. The operation target axis switching section IG2 accepts switching of the operation target axis in the handle operation mode M2.

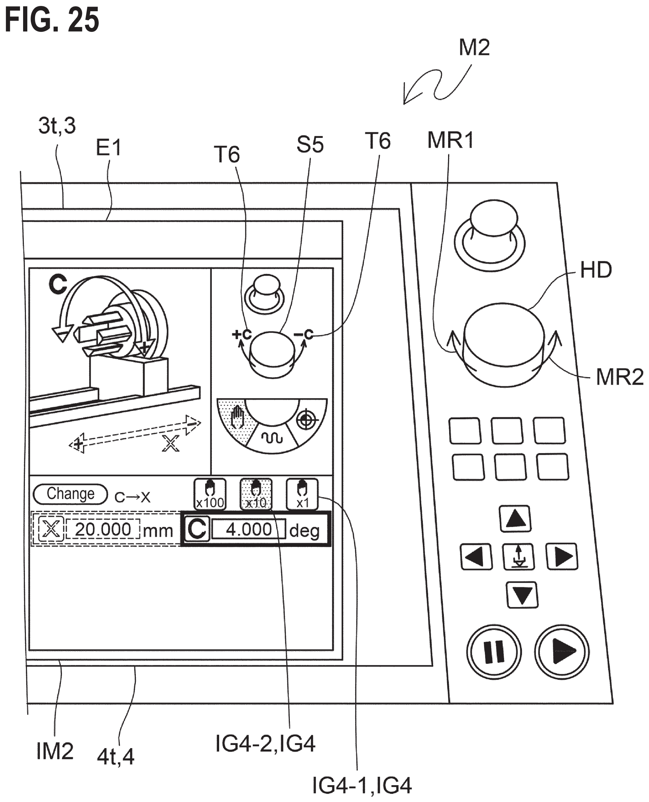

In the example illustrated in FIGs. 24 and 25, when the operation target axis switching section IG2 displayed on the display 3 is touched or clicked via the inputter 4, the computing apparatus 6 changes the contents of the first operation menu E1 (for example, a menu indicating in which direction the first device 70-1 is movable) for the first device 70-1 displayed on the display 3.

More specifically, when the operation target axis switching section IG2 displayed on the display 3 is touched or clicked via the inputter 4, the computing apparatus 6 changes the first operation menu E1 for the first device 70-1 displayed on the display 3 from the operation menu (refer to FIG. 24) related to the first axis AX1 (for example, the X-axis) to the operation menu (refer to FIG. 25) related to the rotation axis (for example, the C-axis) about the second axis AX2.

In the example illustrated in FIG. 25, when the rotary handle HD is rotated in the first operation direction MR1, the computing apparatus 6 generates a third rotation signal that rotates at least part of the first device 70-1 (for example, the workpiece grip component 71h of the first chuck 71) in the second rotation direction R2. Further, the communication circuit 25 transmits the third rotation signal generated by the computing apparatus 6 to the first device 70-1 (more specifically, the rotational driver 712 (refer to FIG. 19 or 20) of the first device 70-1). Thus, at least part of the first device 70-1 (for example, the workpiece grip component 71h of the first chuck 71) rotates in the second rotation direction R2.

In the example illustrated in FIG. 25, when the rotary handle HD is rotated in the second operation direction MR2, the computing apparatus 6 generates a fourth rotation signal that rotates at least part of the first device 70-1 (for example, the workpiece grip component 71h of the first chuck 71) in the first rotation direction R1. Further, the communication circuit 25 transmits the fourth rotation signal generated by the computing apparatus 6 to the first device 70-1 (more specifically, the rotational driver 712 (refer to FIG. 19 or 20) of the first device 70-1). Thus, at least part of the first device 70-1 (for example, the workpiece grip component 71h of the first chuck 71) rotates in the first rotation direction R1.

In the example illustrated in FIG. 25, the above-described second image IM2 includes the handle image S5 simulating the rotary handle HD. Further, the above-described second image IM2 (more specifically, the first operation menu E1) includes an image (hereinafter, referred to as a "sixth instruction image T6") indicating the correspondence relationship between the operation of the rotary handle HD in the first operation direction MR1 and the above-described second rotation direction R2 and the correspondence relationship between the operation of the rotary handle HD in the second operation direction MR2 and the above-described first rotation direction R1. The sixth instruction image T6 may include a symbol (for example, "-C") indicating the first rotation direction R1 about the second axis AX2 and a symbol (for example, "+C") indicating the second rotation direction R2 opposite to the first rotation direction R1.

### (Speed Setting Section IG3)

In the example illustrated in FIG. 23, the computing apparatus 6 causes a speed setting section IG3 to be displayed on the display 3. The speed setting section IG3 accepts setting of the operation speed of the first device 70-1. For example, in response to a maximum speed designating section IG3-1 of the speed setting section IG3 being touched or clicked via the inputter 4, the computing apparatus 6 sets the operation speed of the first device 70-1 to the maximum speed. Further, in response to other speed designating section IG3-2 of the speed setting section IG3 being touched or clicked via the inputter 4, the computing apparatus 6 sets the operation speed of the first device 70-1 to an operation speed smaller than the maximum speed.

The speed at which the first device 70-1 moves when the first switch 51-1 is pressed with the operation speed of the first device 70-1 set to the maximum speed is faster than the speed at which the first device 70-1 moves when the first switch 51-1 is pressed with the operation speed of the first device 70-1 set to other speed. The speed at which at least part of the first device 70-1 (for example, the workpiece grip component 71h of the first chuck 71) rotates when the third switch 51-3 is pressed with the operation speed of the first device 70-1 set to the maximum speed is faster than the speed at which at least part of the first device 70-1 (for example, the workpiece grip component 71h of the first chuck 71) rotates when the third switch 51-3 is pressed with the operation speed of the first device 70-1 set to other speed.

### (Operation Accuracy Setting Section IG4)

In the example illustrated in FIG. 24 or 25, the computing apparatus 6 causes an operation accuracy setting section IG4 to be displayed on the display 3. The operation accuracy setting section IG4 accepts setting of the operation accuracy of the first device 70-1. For example, in response to a maximum accuracy designating section IG4-1 of the operation accuracy setting section IG4 being touched or clicked via the inputter 4, the computing apparatus 6 sets the operation accuracy of the first device 70-1 to the maximum accuracy. In response to other accuracy designating section IG4-2 of the operation accuracy setting section IG4 being touched or clicked via the inputter 4, the computing apparatus 6 sets the operation accuracy of the first device 70-1 to an operation accuracy lower than the maximum accuracy.

In the example illustrated in FIG. 24, the moving amount of the first device 70-1 when the rotary handle HD is operated by a first rotation amount with the operation accuracy of the first device 70-1 set to the maximum operation accuracy is smaller than the moving amount of the first device when the rotary handle HD is operated by the above-described first rotation amount with the operation accuracy of the first device 70-1 set to other operation accuracy.

In the example illustrated in FIG. 25, the rotational angle of at least part of the first device 70-1 (for example, the workpiece grip component 71h of the first chuck 71) rotated about the second axis AX2 when the rotary handle HD is operated by the first rotation amount with the operation accuracy of the first device 70-1 set to the maximum operation accuracy is smaller than the rotational angle of at least part of the first device 70-1 (for example, the workpiece grip component 71h of the first chuck 71) rotated about the second axis AX2 when the rotary handle HD is operated by the above-described first rotation amount with the operation accuracy of the first device 70-1 set to other operation accuracy.

### (Homing Mode M3)

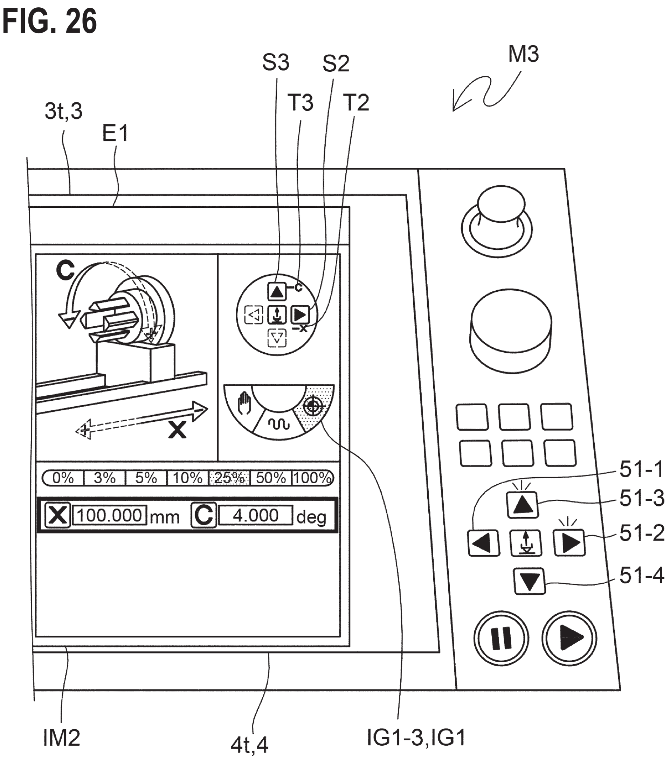

In the example illustrated in FIG. 26, the computing apparatus 6 is capable of changing the operation mode of the first device 70-1 to a homing mode M3. More specifically, the computing apparatus 6 is capable of changing the operation mode of the first device 70-1 from the button operation mode M1 or the handle operation mode M2 to the homing mode M3.

The homing mode M3 is a mode that permits only a manual operation that moves the first device 70-1 in a direction approaching a predetermined home position.

In the example illustrated in FIG. 26, in response to a homing operation designating section IG1-3 of the mode selector IG1 being touched or clicked via the inputter 4, the computing apparatus 6 selects the homing mode M3 as the operation mode of the first device 70-1. In other words, in response to the homing operation designating section IG1-3 being touched or clicked via the inputter 4, the computing apparatus 6 switches the operation mode of the first device 70-1 to the homing mode M3.

In the example illustrated in FIG. 26, in the state in which the homing mode M3 is being executed, the operation function of the first switch 51-1 that moves at least part of the first device 70-1 in the first direction DR1 is disabled, and the operation function of the second switch 51-2 that moves at least part of the first device 70-1 in the second direction DR2 is enabled. In other words, even if the first switch 51-1 is pressed in the state in which the homing mode M3 is being executed, the first device 70-1 does not move in the first direction DR1 that separates from the home position. When the second switch 51-2 is pressed in the state in which the homing mode M3 is being executed, the first device 70-1 moves in the second direction DR2 directed toward the home position. Thus, the user who aims to return the first device 70-1 to the home position is less likely to cause a manual operation error.

As illustrated in FIG. 26, in the state in which the homing mode M3 is being executed, the operation function of the third switch 51-3 that rotates at least part of the first device 70-1 in the first rotation direction R1 may be enabled, and the operation function of the fourth switch 51-4 that rotates at least part of the first device 70-1 in the second rotation direction R2 may be disabled.

In the example illustrated in FIG. 26, in response to the homing mode M3 being selected, the computing apparatus 6 changes the contents of the first operation menu E1 for the first device 70-1 displayed on the display 3 to the contents corresponding to the manual operation that moves the first device 70-1 only in the direction approaching the previously set home position. In the example illustrated in FIG. 26, the illumination of the switch (for example, the first switch 51-1 and the fourth switch 51-4) whose operation function is disabled by the execution of the homing mode M3 is turned off.

### (Third Image IM3)

The computing apparatus 6 executes a third display process of displaying the third image IM3 on the display 3 by executing the first program P1.

In the example illustrated in FIG. 29, when the above-described second process (in other words, the second process that allows outputting a signal that manually operates the second device 70-2 corresponding to the second device model 70m-2) is executed, the third image IM3 is displayed on the display 3. The third image IM3 includes a second operation menu E2 for the second device 70-2 (for example, a menu indicating in which direction the second device 70-2 is movable). In the example illustrated in FIG. 29, the second operation menu E2 includes an image IQ2 simulating the shape of the second device 70-2 and an image (for example, an arrow image, etc.) indicating in which direction the second device 70-2 is movable.

When the second operation menu E2 is displayed on the display 3, it is possible for the user (more specifically, the operator) to grasp how to operate the second device 70-2 using the plurality of switches 51.

In the example illustrated in FIG. 29, the third image IM3 (more specifically, the second operation menu E2) includes an image simulating at least one of the plurality of switches 51. When the third image IM3 includes an image simulating at least one of the plurality of switches 51, it is possible for the user (more specifically, the operator) to easily grasp how to operate the second device 70-2 using at least one of the plurality of switches 51.

As illustrated in FIG. 30, in response to the second device model 70m-2 being selected via the inputter 4 out of the plurality of device models 70m displayed on the display 3, the computing apparatus 6 may cause the third image IM3 (more specifically, a third window WD3 including the third image IM3) to be displayed on the display 3 as a popup. In the example illustrated in FIG. 30, the third image IM3 is displayed to overlap the first image IM1.

Alternatively, as illustrated in FIG. 31, the computing apparatus 6 may cause the above-described third image IM3 to be displayed on the second screen 3b of the display 3 in addition to causing the laser beam machine model 7m and the plurality of device models 70m to be displayed on the first screen 3a of the display 3. In the example illustrated in FIG. 31, in response to the second device model 70m-2 being selected via the inputter 4 out of the plurality of device models 70m displayed on the first screen 3a of the display 3, the computing apparatus 6 causes the third image IM3 including the second operation menu E2 to be displayed on the second screen 3b while the laser beam machine model 7m and the plurality of device models 70m are displayed on the first screen 3a.

### (Manual Operation of Second Device 70-2)

In the example illustrated in FIG. 29, the plurality of switches 51 include the first switch 51-1 that moves at least part of the second device 70-2 (for example, the entire second device 70-2) in a third direction DR3 along a third axis AX3. In other words, the above-described second process includes the computing apparatus 6 assigning, to the first switch 51-1, an operation function that moves at least part of the second device 70-2 (for example, the entire second device 70-2) in the third direction DR3 along the third axis AX3. The third axis AX3 is, for example, a Y-axis (more specifically, an axis parallel to a horizontal plane). The third direction DR3 is, for example, a -Y direction (more specifically, a direction toward a front door 94 of the laser beam machine 7). The third axis AX3 is, for example, an axis perpendicular to the first axis AX1 (refer to FIG. 19 or 20).

In the example illustrated in FIG. 29 or 31, when the first switch 51-1 is pressed, the computing apparatus 6 generates a fifth movement signal that moves at least part of the second device 70-2 (for example, the entire second device 70-2) in the third direction DR3. Further, the communication circuit 25 transmits the fifth movement signal generated by the computing apparatus 6 to the second mover 84 (refer to FIG. 29) that moves the second device. Thus, at least part of the second device 70-2 (for example, the entire second device 70-2) moves in the third direction DR3.

In the description, a direction opposite to the third direction DR3 is defined as a fourth direction DR4 (refer to FIG. 29). In the example illustrated in FIG. 29, the plurality of switches 51 include the second switch 51-2 that moves at least part of the second device 70-2 (for example, the entire second device 70-2) in the fourth direction DR4. In other words, the above-described second process includes the computing apparatus 6 assigning, to the second switch 51-2, an operation function that moves at least part of the second device 70-2 (for example, the entire second device 70-2) in the fourth direction DR4. The fourth direction DR4 is, for example, a +Y direction (more specifically, a direction separating from the front door 94).

In the example illustrated in FIG. 29 or 31, when the second switch 51-2 is pressed, the computing apparatus 6 generates a sixth movement signal that moves at least part of the second device 70-2 (for example, the entire second device 70-2) in the fourth direction DR4. Further, the communication circuit 25 transmits the sixth movement signal generated by the computing apparatus 6 to the second mover 84 (refer to FIG. 29) that moves the second device. Thus, at least part of the second device 70-2 (for example, the entire second device 70-2) moves in the fourth direction DR4.

In the example illustrated in FIG. 29, the plurality of switches 51 include the third switch 51-3 that moves at least part of the second device 70-2 (for example, the entire second device 70-2) in a fifth direction DR5 along a fourth axis AX4. In other words, the above-described second process includes the computing apparatus 6 assigning, to the third switch 51-3, an operation function that moves at least part of the second device 70-2 (for example, the entire second device 70-2) in the fifth direction DR5 along the fourth axis AX4. The fourth axis AX4 is, for example, a Z-axis (more specifically, an axis parallel to the vertical direction). The fifth direction DR5 is, for example, a +Z direction (more specifically, the upward direction).

In the example illustrated in FIG. 29 or 31, when the third switch 51-3 is pressed, the computing apparatus 6 generates a seventh movement signal that moves at least part of the second device 70-2 (for example, the entire second device 70-2) in the fifth direction DR5. Further, the communication circuit 25 transmits the seventh movement signal generated by the computing apparatus 6 to the second mover 84 (refer to FIG. 29) that moves the second device. Thus, at least part of the second device 70-2 (for example, the entire second device 70-2) moves in the fifth direction DR5.

In the description, a direction opposite to the fifth direction DR5 is defined as a sixth direction DR6 (refer to FIG. 29). In the example illustrated in FIG. 29, the plurality of switches 51 include the fourth switch 51-4 that moves at least part of the second device 70-2 (for example, the entire second device 70-2) in the sixth direction DR6. In other words, the above-described second process includes the computing apparatus 6 assigning, to the fourth switch 51-4, an operation function that moves at least part of the second device 70-2 (for example, the entire second device 70-2) in the sixth direction DR6. The sixth direction DR6 is, for example, a -Z direction (more specifically, the downward direction).

In the example illustrated in FIG. 29 or 31, when the fourth switch 51-4 is pressed, the computing apparatus 6 generates an eighth movement signal that moves at least part of the second device 70-2 (for example, the entire second device 70-2) in the sixth direction DR6. Further, the communication circuit 25 transmits the eighth movement signal generated by the computing apparatus 6 to the second mover 84 (refer to FIG. 29) that moves the second device. Thus, at least part of the second device 70-2 (for example, the entire second device 70-2) moves in the sixth direction DR6.

The above-described second process may include causing the switch 51 to which the manual operation function of the second device 70-2 is assigned to illuminate (in FIG. 31, the illuminated switch is represented by three lines) in order to distinguish the switch 51 to which the manual operation function of the second device 70-2 is assigned, from other switches.

In the example illustrated in FIG. 29, the above-described third image IM3 (more specifically, the second operation menu E2) includes the first switch image S1 simulating the first switch 51-1 and an image (hereinafter, referred to as a "seventh instruction image T7") indicating the correspondence relationship between the operation of the first switch 51-1 and the above-described third direction DR3 (in other words, the direction in which at least part of the second device 70-2 moves by the operation of the first switch 51-1). The seventh instruction image T7 may include a symbol indicating the third axis AX3 (for example, the Y-axis), or may include a symbol (for example, "-Y") indicating the third direction DR3.

In the example illustrated in FIG. 29, the above-described third image IM3 (more specifically, the second operation menu E2) includes the second switch image S2 simulating the second switch 51-2 and an image (hereinafter, referred to as an "eighth instruction image T8") indicating the correspondence relationship between the operation of the second switch 51-2 and the above-described fourth direction DR4 (in other words, the direction in which at least part of the second device 70-2 moves by the operation of the second switch 51-2). The eighth instruction image T8 may include a symbol indicating the third axis AX3 (for example, the Y-axis), or may include a symbol (for example, "+Y") indicating the fourth direction DR4.

In the example illustrated in FIG. 29, the above-described third image IM3 (more specifically, the second operation menu E2) includes the third switch image S3 simulating the third switch 51-3 and an image (hereinafter, referred to as a "ninth instruction image T9") indicating the correspondence relationship between the operation of the third switch 51-3 and the above-described fifth direction DR5 (in other words, the direction in which at least part of the second device 70-2 moves by the operation of the third switch 51-3). The ninth instruction image T9 may include a symbol indicating the fourth axis AX4 (for example, the Z-axis), or may include a symbol (for example, "+Z") indicating the fifth direction DR5.

In the example illustrated in FIG. 29, the above-described third image IM3 (more specifically, the second operation menu E2) includes the fourth switch image S4 simulating the fourth switch 51-4 and an image (hereinafter, referred to as a "tenth instruction image T10") indicating the correspondence relationship between the operation of the fourth switch 51-4 and the above-described sixth direction DR6 (in other words, the direction in which at least part of the second device 70-2 moves by the operation of the fourth switch 51-4). The tenth instruction image T10 may include a symbol indicating the fourth axis AX4 (for example, the Z-axis), or may include a symbol (for example, "-Z") indicating the sixth direction DR6.

As illustrated in FIG. 30, the above-described third image IM3 may include position data (for example, Y-coordinate data DA3 and Z-coordinate data DA4) indicating the position of the second device 70-2. When the position data (for example, the Y-coordinate data DA3 and Z-coordinate data DA4) of the second device 70-2 is displayed on the display 3 in addition to the second operation menu E2 for the second device 70-2, it is possible for the user to manually operate the second device 70-2 while referring to the position data of the second device 70-2.

In the example illustrated in FIG. 19 or 20, the above-described first process includes assigning, to the first switch 51-1, the operation function that moves at least part of the first device 70-1 (more specifically, the entire first device 70-1) in the first direction DR1 (for example, +X direction) along the first axis AX1. In the example illustrated in FIG. 29, the above-described second process includes assigning, to the first switch 51-1, the operation function that moves at least part of the second device 70-2 (more specifically, the entire second device 70-2) in a direction along another axis different from the first axis AX1 (for example, the operation function that moves at least part of the second device 70-2 in the third direction DR3 (for example, -Y direction) along the third axis AX3).

Sharing the first switch 51-1 among operations related to two or more different axes suppresses the complexity of the manual operation.

In the example illustrated in FIG. 19 or 20, the above-described first process includes displaying, on the display 3, the first switch image S1 simulating the first switch 51-1 and the image (more specifically, the first instruction image T1) indicating the correspondence relationship between the operation of the first switch 51-1 and the first direction DR1. In the example illustrated in FIG. 29, the above-described second process includes displaying, on the display 3, the first switch image S1 simulating the first switch 51-1 and the image (more specifically, the seventh instruction image T7) indicating the correspondence relationship between the operation of the first switch 51-1 and the direction (for example, the third direction DR3) along another axis different from the first axis AX1.

When the first switch image S1 and the instruction image (T1, T7) related to the operation of the first switch 51-1 are displayed on the display 3, an operation error by the user is less likely to occur even though the first switch 51-1 is shared among operations related to two or more different axes.

In the example illustrated in FIG. 19 or 20, the above-described first process includes assigning, to the second switch 51-2, the operation function that moves at least part of the first device 70-1 (more specifically, the entire first device 70-1) in the second direction DR2 (for example, in the -X direction). Further, in the example illustrated in FIG. 29, the above-described second process includes assigning, to the second switch 51-2, the operation function that moves at least part of the second device 70-2 (more specifically, the entire second device 70-2) in the fourth direction DR4 (for example, in the +Y direction).

In the example illustrated in FIG. 19 or 20, the above-described first process includes displaying, on the display 3, the second switch image S2 simulating the second switch 51-2 and the image (more specifically, the second instruction image T2) indicating the correspondence relationship between the operation of the second switch 51-2 and the second direction DR2. In the example illustrated in FIG. 29, the above-described second process includes displaying, on the display 3, the second switch image S2 simulating the second switch 51-2 and the image (more specifically, the eighth instruction image T8) indicating the correspondence relationship between the operation of the second switch 51-2 and the fourth direction DR4.

In the example illustrated in FIG. 19 or 20, the above-described first process includes assigning, to the third switch 51-3, the operation function that rotates at least part of the first device 70-1 (more specifically, the workpiece grip component 71h of the first chuck 71) in the first rotation direction R1 (for example -C direction) about the second axis AX2. Further, in the example illustrated in FIG. 29, the above-described second process includes assigning, to the third switch 51-3, the operation function that moves at least part of the second device 70-2 (more specifically, the entire second device 70-2) in the fifth direction DR5 (for example, in the +Z direction).

In the example illustrated in FIG. 19 or 20, the above-described first process includes displaying, on the display 3, the third switch image S3 simulating the third switch 51-3 and the image (more specifically, the third instruction image T3) indicating the correspondence relationship between the operation of the third switch 51-3 and the first rotation direction R1. Further, in the example illustrated in FIG. 29, the above-described second process includes displaying, on the display 3, the third switch image S3 simulating the third switch 51-3 and the image (more specifically, the ninth instruction image T9) indicating the correspondence relationship between the operation of the third switch 51-3 and the fifth direction DR5.

In the example illustrated in FIG. 19 or 20, the above-described first process includes assigning, to the fourth switch 51-4, the operation function that rotates at least part of the first device 70-1 (more specifically, the workpiece grip component 71h of the first chuck 71) in the second rotation direction R2 (for example +C direction) about the second axis AX2. Further, in the example illustrated in FIG. 29, the above-described second process includes assigning, to the fourth switch 51-4, the operation function that moves at least part of the second device 70-2 (more specifically, the entire second device 70-2) in the sixth direction DR6 (for example, in the -Z direction).

In the example illustrated in FIG. 19 or 20, the above-described first process includes displaying, on the display 3, the fourth switch image S4 simulating the fourth switch 51-4 and the image (more specifically, the fourth instruction image T4) indicating the correspondence relationship between the operation of the fourth switch 51-4 and the second rotation direction R2. In the example illustrated in FIG. 29, the above-described second process includes displaying, on the display 3, the fourth switch image S4 simulating the fourth switch 51-4 and the image (more specifically, the tenth instruction image T10) indicating the correspondence relationship between the operation of the fourth switch 51-4 and the sixth direction DR6.

In the example illustrated in FIGs. 19 and 29, sharing each of the second switch 51-2, the third switch 51-3, and the fourth switch 51-4 among operations related to two or more different axes suppresses the complexity of the manual operation.

Further, when each switch image and the instruction image related to the operation of the corresponding switch are displayed on the display 3, an operation error by the user is less likely to occur even though each switch is shared among operations related to two or more different axes.

In the example illustrated in FIG. 29, the second device 70-2 is movable along the fifth axis AX5 (for example, a U-axis) parallel to the first axis AX1. Further, the second device 70-2 is rotatable about the sixth axis AX6 parallel to the third axis AX3. The sixth axis AX6 is a rotational center axis of a B-axis.

As illustrated in FIG. 32, the computing apparatus 6 may cause an operation target axis switching section IG5 that accepts switching of the operation target axis to be displayed on the display 3. In the example illustrated in FIG. 32, the third image IM3 (more specifically, the second operation menu E2) includes the operation target axis switching section IG5.

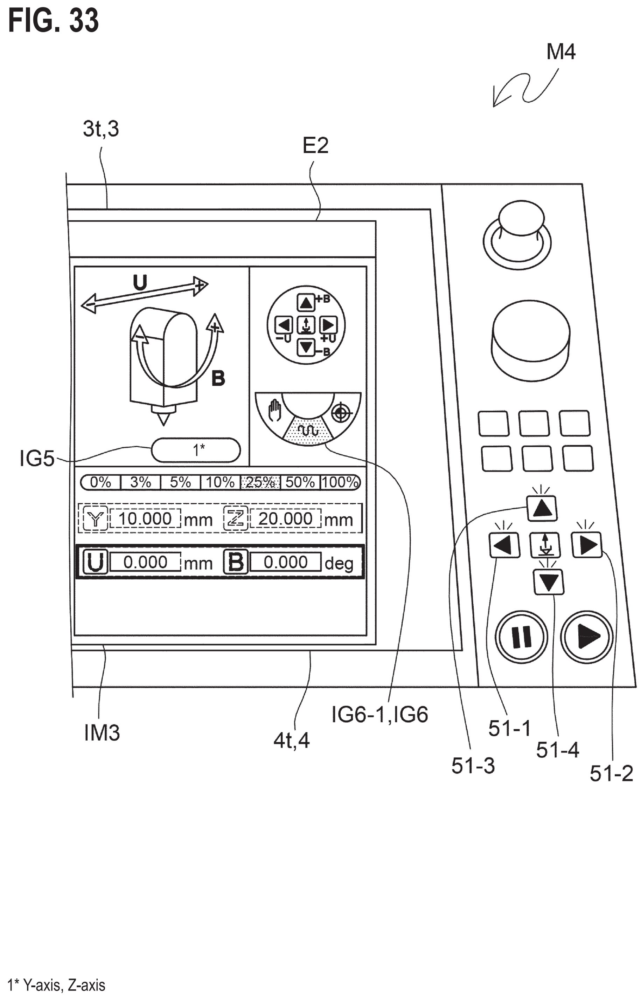

In the example illustrated in FIGs. 32 and 33, in response to the operation target axis switching section IG5 displayed on the display 3 being touched or clicked via the inputter 4, the computing apparatus 6 changes the contents of the second operation menu E2 (for example, a menu indicating in which direction the second device 70-2 is movable) for the second device 70-2 displayed on the display 3.

More specifically, in response to the operation target axis switching section IG5 displayed on the display 3 being touched or clicked via the inputter 4, the computing apparatus 6 changes the second operation menu E2 for the second device 70-2 displayed on the display 3 from the operation menu (refer to FIG. 32) related to the third axis AX3 (for example, the Y-axis) and the fourth axis AX4 (for example, the Z-axis) to the operation menu (refer to FIG. 33) related to the fifth axis AX5 (for example, the U-axis) and the sixth axis AX6.

When the second operation menu E2 for the second device 70-2 displayed on the display 3 is changed from the operation menu (refer to FIG. 32) related to the third axis AX3 and the fourth axis AX4 to the operation menu (refer to FIG. 33) related to the fifth axis AX5 and the sixth axis AX6, the computing apparatus 6 changes the contents of the manual operation function assigned to the plurality of switches 51 (for example, the first switch 51-1, the second switch 51-2, the third switch 51-3, and/or the fourth switch 51-4).

In the example illustrated in FIGs. 32 and 33, in response to the operation target axis being switched, the computing apparatus 6 changes the manual operation function assigned to the first switch 51-1 and the second switch 51-2 from the operation function that moves at least part of the second device 70-2 along the third axis AX3 (for example, the Y-axis) to the operation function that moves at least part of the second device 70-2 along the fifth axis AX5 (for example, the U-axis) different from the third axis AX3.

In the example illustrated in FIGs. 32 and 33, in response to the operation target axis being switched, the computing apparatus 6 changes the manual operation function assigned to the third switch 51-3 and the fourth switch 51-4 from the operation function that moves at least part of the second device 70-2 along the fourth axis AX4 (for example, the Z-axis) to the operation function that rotates at least part of the second device 70-2 about the sixth axis AX6.

### (Selection of Operation Mode of Second Device 70-2)

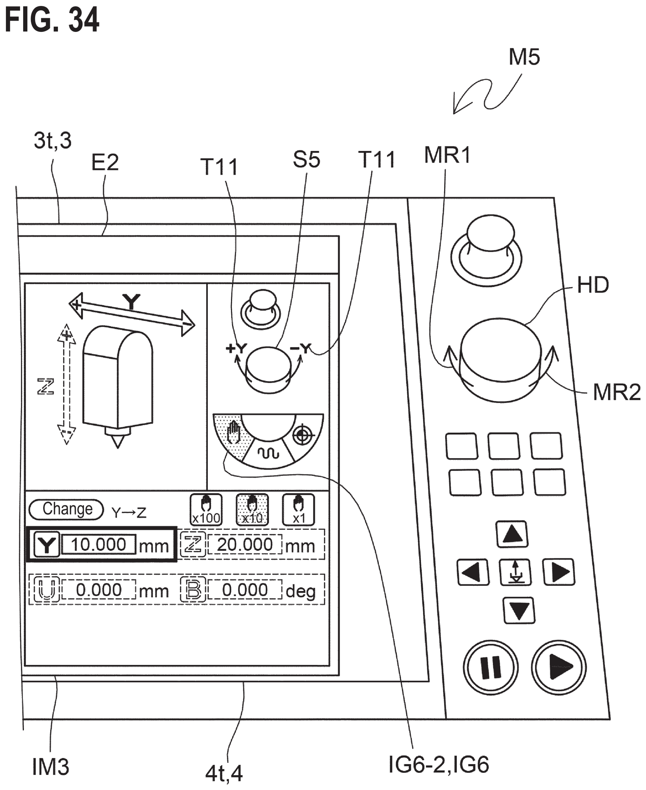

The computing apparatus 6 may be capable of switching the operation mode of the second device 70-2 between a button operation mode M4 (refer to FIG. 32) and a handle operation mode M5 (refer to FIG. 34). In other words, the computing apparatus 6 may be capable of executing, as the operation mode of the second device 70-2, the mode selected out of the plurality of operation modes including the button operation mode M4 and the handle operation mode M5.

In the example illustrated in FIGs. 32 and 34, the computing apparatus 6 causes a mode selector IG6 to be displayed on the display 3. The mode selector IG6 accepts the selection of the operation mode of the second device 70-2 out of the plurality of operation modes (more specifically, out of the plurality of operation modes including the button operation mode M4 and the handle operation mode M5). In the example illustrated in FIGs. 32 and 34, the third image IM3 includes the mode selector IG6.

In the example illustrated in FIG. 32, in response to a button operation designating section IG6-1 of the mode selector IG6 being touched or clicked via the inputter 4, the computing apparatus 6 selects the button operation mode M4 as the operation mode of the second device 70-2.

When the button operation mode M4 is executed, the computing apparatus 6 assigns the manual operation function of the second device 70-2 to at least one button (for example, the first switch 51-1, the second switch 51-2, the third switch 51-3, and/or the fourth switch 51-4).

In the example illustrated in FIG. 34, in response to a handle operation designating section IG6-2 of the mode selector IG6 being touched or clicked via the inputter 4, the computing apparatus 6 selects the handle operation mode M5 as the operation mode of the second device 70-2.

When the handle operation mode M5 is executed, the computing apparatus 6 assigns the manual operation function of the second device 70-2 to at least one handle (more specifically, the rotary handle HD).

In the example illustrated in FIG. 34, the computing apparatus 6 causes the handle image S5 simulating the rotary handle HD to be displayed on the display 3. In the example illustrated in FIG. 34, the third image IM3 (more specifically, the second operation menu E2) includes the handle image S5. When the handle image S5 is displayed on the display 3, it is possible for the user (more specifically, the operator) to easily grasp how to operate the second device 70-2 using the rotary handle HD.

In the example illustrated in FIG. 34, when the rotary handle HD is rotated in the first operation direction MR1, the computing apparatus 6 generates a ninth movement signal that moves at least part of the second device 70-2 (for example, the entire second device 70-2) in the fourth direction DR4. Further, the communication circuit 25 transmits the ninth movement signal generated by the computing apparatus 6 to the second mover 84 (refer to FIG. 29) that moves the second device. Thus, at least part of the second device 70-2 (for example, the entire second device 70-2) moves in the fourth direction DR4.

In the example illustrated in FIG. 34, when the rotary handle HD is rotated in the second operation direction MR2, the computing apparatus 6 generates a tenth movement signal that moves at least part of the second device 70-2 (for example, the entire second device 70-2) in the third direction DR3. Further, the communication circuit 25 transmits the tenth movement signal generated by the computing apparatus 6 to the second mover 84 (refer to FIG. 29) that moves the second device. Thus, at least part of the second device 70-2 (for example, the entire second device 70-2) moves in the third direction DR3.

In the example illustrated in FIG. 34, the above-described third image IM3 includes the handle image S5 simulating the rotary handle HD. Further, the above-described third image IM3 includes an image (hereinafter, referred to as an "eleventh instruction image T11") indicating the correspondence relationship between the operation of the rotary handle HD in the first operation direction MR1 and the above-described fourth direction DR4 and the correspondence relationship between the operation of the rotary handle HD in the second operation direction MR2 and the above-described third direction DR3. The eleventh instruction image T11 may include a symbol indicating the third axis AX3 (for example, the Y-axis). Further, the eleventh instruction image T11 may include a symbol (for example, "-Y") indicating the third direction DR3 and a symbol (for example, "+Y") indicating the fourth direction DR4 opposite to the third direction DR3.

In the example illustrated in FIG. 24, it is possible for the computing apparatus 6 to assign, to the rotary handle HD, the operation function that moves at least part of the first device 70-1 (more specifically, the entire first device 70-1) along the first axis AX1 (for example, the X-axis). In the example illustrated in FIG. 25, it is possible for the computing apparatus 6 to assign, to the rotary handle HD, the operation function that rotates at least part of the first device 70-1 (for example, the workpiece grip component 71h of the first chuck 71) about the second axis AX2. Further, in the example illustrated in FIG. 34, it is possible for the computing apparatus 6 to assign, to the rotary handle HD, the operation function that moves at least part of the second device 70-2 (for example, the entire second device 70-2) along the third axis AX3 (for example, the Y-axis).

Sharing the rotary handle HD among operations related to two or more different axes suppresses the complexity of the manual operation.

In the example illustrated in FIG. 24, when the operation function that moves at least part of the first device 70-1 along the first axis AX1 is assigned to the rotary handle HD, the computing apparatus 6 causes (1) the handle image S5 simulating the rotary handle HD and (2) the image (more specifically, the fifth instruction image T5) indicating the correspondence relationship between the operation of the rotary handle HD and the moving direction of at least part of the first device 70-1 to be displayed on the display 3. In the example illustrated in FIG. 25, when the operation function that rotates at least part of the first device 70-1 about the second axis AX2 is assigned to the rotary handle HD, the computing apparatus 6 causes (1) the handle image S5 simulating the rotary handle HD and (2) the image (more specifically, the sixth instruction image T6) indicating the correspondence relationship between the operation of the rotary handle HD and the rotation direction of at least part of the first device 70-1 to be displayed on the display 3. Further, in the example illustrated in FIG. 34, when the operation function that moves at least part of the second device 70-2 along the third axis AX3 is assigned to the rotary handle HD, the computing apparatus 6 causes (2) the handle image S5 simulating the rotary handle HD and (2) the image (more specifically, the eleventh instruction image T11) indicating the correspondence relationship between the operation of the rotary handle HD and the moving direction of at least part of the second device 70-2 to be displayed on the display 3.

When the handle image S5 and the instruction image (T5, T6, or T11) related to the operation of the rotary handle HD are displayed on the display 3, an operation error by the user is less likely to occur even though the rotary handle HD is shared among operations related to two or more different axes.

### (Third Process)

As illustrated in FIG. 35, in response to a third device model 70m-3 being selected via the inputter 4 out of the plurality of device models 70m displayed on the display 3, the computing apparatus 6 executes a third process that allows outputting a signal to manually operate a third device 70-3 corresponding to the third device model 70m-3.

In FIG. 35, the third device model 70m-3 hatched by dots indicates that the third device model 70m-3 is selected. In the example illustrated in FIG. 35, the third device model 70m-3 is the arm model 72m. Note that, however, in the first embodiment, the third device model 70m-3 may be a model other than the arm model 72m.

### (Fourth Image IM4)

The computing apparatus 6 executes a fourth display process of displaying a fourth image IM4 on the display 3 by executing the first program P1.

In the example illustrated in FIG. 36, when the above-described third process (in other words, the third process that allows outputting a signal that manually operates the third device 70-3 corresponding to the third device model 70m-3) is executed, the fourth image IM4 including the third operation menu E3 (for example, a menu indicating in which direction the third device 70-3 is movable) for the third device 70-3 is displayed on the display 3.

In the example illustrated in FIG. 36, the fourth image IM4 (more specifically, the third operation menu E3) includes an image simulating at least one of the plurality of switches 51.

### (Manual Operation of Third Device 70-3)

In the example illustrated in FIG. 36, the plurality of switches 51 include the first switch 51-1 that moves at least part of the third device 70-3 in a seventh direction DR7 along a seventh axis AX7. In other words, the above-described third process includes the computing apparatus 6 assigning, to the first switch 51-1, an operation function that moves at least part of the third device 70-3 in the seventh direction DR7 along the seventh axis AX7. The seventh axis AX7 is, for example, a YL-axis (more specifically, an axis parallel to a horizontal plane). The seventh direction DR7 is, for example, a +YL direction (more specifically, a direction approaching the movement path of the first chuck 71). The seventh axis AX7 is, for example, an axis perpendicular to the first axis AX1 (refer to FIG. 19 or 20).

In the example illustrated in FIG. 36 or 37, when the first switch 51-1 is pressed, the computing apparatus 6 generates an eleventh movement signal that moves at least part of the third device 70-3 in the seventh direction DR7. Further, the communication circuit 25 transmits the eleventh movement signal generated by the computing apparatus 6 to the mover (hereinafter, referred to as a "third mover") that moves at least part of the third device. Thus, at least part of the third device 70-3 moves in the seventh direction DR7.

In the description, a direction opposite to the seventh direction DR7 is defined as an eighth direction DR8 (refer to FIG. 36). In the example illustrated in FIG. 36, the plurality of switches 51 include the second switch 51-2 that moves at least part of the third device 70-3 in the eighth direction DR8. In other words, the above-described third process includes the computing apparatus 6 assigning, to the second switch 51-2, an operation function that moves at least part of the third device 70-3 in the eighth direction DR8. The eighth direction DR8 is, for example, a -YL direction (more specifically, a direction separating from the movement path of the first chuck 71).

In the example illustrated in FIG. 36, the plurality of switches 51 include the third switch 51-3 that moves at least part of the third device 70-3 in a ninth direction DR9 along an eighth axis AX8. In other words, the above-described third process includes the computing apparatus 6 assigning, to the third switch 51-3, an operation function that moves at least part of the third device 70-3 in the ninth direction DR9 along the eighth axis AX8. The eighth axis AX8 is, for example, a ZL-axis (more specifically, an axis parallel to the vertical direction). The ninth direction DR9 is, for example, a +ZL direction (more specifically, the upward direction).

In the example illustrated in FIG. 36 or 37, when the third switch 51-3 is pressed, the computing apparatus 6 generates a twelfth movement signal that moves at least part of the third device 70-3 (for example, a Y-shaped arm) in the ninth direction DR9. Further, the communication circuit 25 transmits the twelfth movement signal generated by the computing apparatus 6 to the third mover (for example, an actuator that constitutes part of the third mover) that moves at least part of the third device. Thus, at least part of the third device 70-3 (for example, the Y-shaped arm) moves in the ninth direction DR9.

In the description, a direction opposite to the ninth direction DR9 is defined as a tenth direction DR10 (refer to FIG. 36). In the example illustrated in FIG. 36, the plurality of switches 51 include the fourth switch 51-4 that moves at least part of the third device 70-3 in the tenth direction DR10. In other words, the above-described third process includes the computing apparatus 6 assigning, to the fourth switch 51-4, an operation function that moves at least part of the third device 70-3 in the tenth direction DR10. The tenth direction DR10 is, for example, a -ZL direction (more specifically, the downward direction).

In the example illustrated in FIG. 36, the above-described fourth image IM4 (more specifically, the third operation menu E3) includes the first switch image S1 simulating the first switch 51-1 and an image (hereinafter, referred to as a "twelfth instruction image T12") indicating the correspondence relationship between the operation of the first switch 51-1 and the above-described seventh direction DR7 (in other words, the direction in which at least part of the third device 70-3 moves by the operation of the first switch 51-1). The twelfth instruction image T12 may include a symbol indicating the seventh axis AX7 (for example, the YL axis), or may include a symbol (for example, "+YL") indicating the seventh direction DR7.

In the example illustrated in FIG. 36, the above-described fourth image IM4 (more specifically, the third operation menu E3) includes the second switch image S2 simulating the second switch 51-2 and an image (hereinafter, referred to as a "thirteenth instruction image T13") indicating the correspondence relationship between the operation of the second switch 51-2 and the above-described eighth direction DR8 (in other words, the direction in which at least part of the third device 70-3 moves by the operation of the second switch 51-2). The thirteenth instruction image T13 may include a symbol indicating the seventh axis AX7 (for example, the YL-axis), or may include a symbol (for example, "-YL") indicating the eighth direction DR8.

In the example illustrated in FIG. 36, the above-described fourth image IM4 (more specifically, the third operation menu E3) includes the third switch image S3 simulating the third switch 51-3 and an image (hereinafter, referred to as a "fourteenth instruction image T14") indicating the correspondence relationship between the operation of the third switch 51-3 and the above-described ninth direction DR9 (in other words, the direction in which at least part of the third device 70-3 moves by the operation of the third switch 51-3). The fourteenth instruction image T14 may include a symbol indicating the eighth axis AX8 (for example, the ZL-axis), or may include a symbol (for example, "+ZL") indicating the ninth direction DR9.

In the example illustrated in FIG. 36, the above-described fourth image IM4 (more specifically, the third operation menu E3) includes the fourth switch image S4 simulating the fourth switch 51-4 and an image (hereinafter, referred to as a "fifteenth instruction image T15") indicating the correspondence relationship between the operation of the fourth switch 51-4 and the above-described tenth direction DR10 (in other words, the direction in which at least part of the third device 70-3 moves by the operation of the fourth switch 51-4). The fifteenth instruction image T15 may include a symbol indicating the eighth axis AX8 (for example, the ZL-axis), or may include a symbol (for example, "-ZL") indicating the tenth direction DR10.

### (First Device 70-1 and Second Device 70-2)

In the example illustrated in FIG. 19 or 20, the first device 70-1 is the first chuck 71 capable of gripping the workpiece W. Alternatively, the first device 70-1 may be a device other than the first chuck 71. For example, the first device 70-1 may be the second chuck 74 (refer to FIG. 36) that guides the workpiece W, or may be the processing head 76 (refer to FIG. 36) that holds a tool such as a cutting tool.

The second device 70-2 is a device different from the first device 70-1. In the example illustrated in FIG. 19 or 20, the second device 70-2 is the laser head 75. Alternatively, the second device 70-2 may be a device other than the laser head 75. For example, the second device 70-2 may be the second chuck 74 (refer to FIG. 36) that guides the workpiece W, or may be the processing head 76 (refer to FIG. 36) that holds a tool such as a cutting tool.

### (Third Device 70-3)

The plurality of devices 70 that are manually operable may include the first device 70-1, the second device 70-2, and the third device 70-3. The plurality of devices 70 that are manually operable may be two, three, four, or more devices 70.

In the example illustrated in FIG. 36, the third device 70-3 is at least one transfer arm 72 that transfers the workpiece W onto the movement path of the first chuck 71. Alternatively, the third device 70-3 may be a device other than the transfer arm 72. For example, the third device 70-3 may be the second chuck 74 that guides the workpiece W, the processing head 76 that holds a tool such as a cutting tool, or a workpiece feeder 73 (for example, a bundle loader) that supplies the workpiece one by one to the at least one transfer arm 72.

### (Assist Process)

In the description, a process that operates at least one device by a predetermined procedure is defined as an assist process.

In the example illustrated in FIG. 38, the computing apparatus 6 executes a fifth display process of displaying, on the display 3, a fifth image IM5 that accepts the selection of a specific assist process out of a plurality of assist processes including the first assist process (for example, a pipe setup process) and a second assist process (for example, a gas purge process).

The first assist process is a process that operates at least one first specific device 70d by a predetermined first procedure. In the example illustrated in FIG. 42, the at least one first specific device 70d includes the workpiece feeder 73, the transfer arm 72, and the first chuck 71.

The second assist process is a process that operates at least one second specific device by a predetermined second procedure. The second specific device includes, for example, a gas supply unit that supplies gas (for example, oxygen, nitrogen, etc.) to a gas injection port provided on the laser head 75.

In the example illustrated in FIG. 38, the fifth image IM5 includes the laser beam machine model 7m, the model image IM5-1 including the plurality of device models 70m, and a second list image IM5-2 including a list of the plurality of assist processes. In the model image IM5-1, the color of each of the plurality of device models 70m is the first color (for example, green), and the color of the laser beam machine model 7m is the second color (for example, white or grey).

In the example illustrated in FIG. 38, when a region RG3-2 indicating the first assist process (for example, the region RG3-2 where the identification name of the first assist process is displayed) in the second list image IM5-2 displayed on the display 3 is touched or clicked via the inputter 4, the computing apparatus 6 receives the selection of the first assist process. Alternatively or additionally, in the model image IM5-1 displayed on the display 3, when a region RG3-1 indicating the device model corresponding to the device necessary for executing the first assist process is touched or clicked via the inputter 4, the computing apparatus 6 may receive the selection of the first assist process.

In response to the first assist process being selected, the computing apparatus 6 may change the color of the device model corresponding to the device necessary for executing the first assist process from the above-described first color (for example, green) to the third color (for example, orange). Additionally, in response to the first assist process being selected, the computing apparatus 6 may change the color of the region RG3-2 indicating the first assist process to the above-described third color (for example, orange) in the second list image IM5-2 displayed on the display 3.

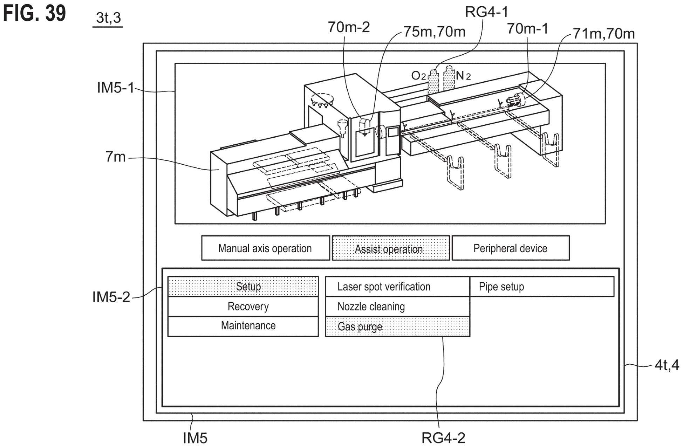

In the example illustrated in FIG. 39, when a region RG4-2 indicating the second assist process (for example, the region RG4-2 where the identification name of the second assist process is displayed) in the second list image IM5-2 displayed on the display 3 is touched or clicked via the inputter 4, the computing apparatus 6 receives the selection of the second assist process. Alternatively or additionally, in the model image IM5-1 displayed on the display 3, when a region RG4-1 indicating the device model corresponding to the device necessary for executing the second assist process is touched or clicked via the inputter 4, the computing apparatus 6 may receive the selection of the second assist process.

In response to the second assist process being selected, the computing apparatus 6 may change the color of the device model corresponding to the device necessary for executing the second assist process from the above-described first color (for example, green) to the third color (for example, orange). Additionally, in response to the second assist process being selected, the computing apparatus 6 may change the color of the region RG4-2 indicating the second assist process to the above-described third color (for example, orange) in the second list image IM5-2 displayed on the display 3.

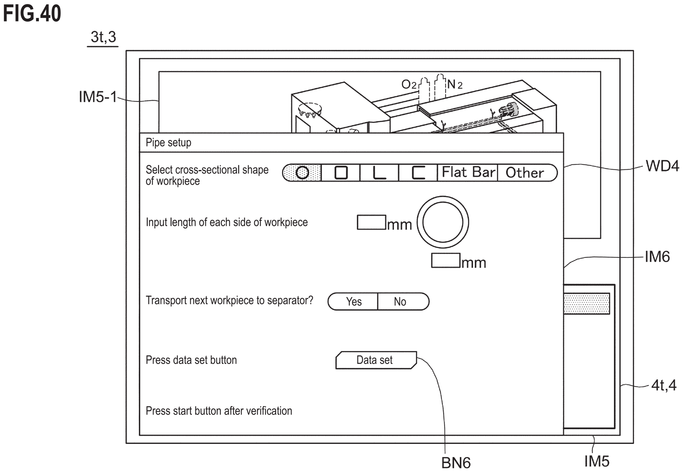

In the example illustrated in FIG. 40, when the first assist process (for example, the pipe setup process) is selected, the computing apparatus 6 causes a sixth image IM6 describing at least one of the contents, the procedure, and the conditions of the first assist process (for example, a parameter necessary for executing the first assist process) to be displayed on the display 3.

As illustrated in FIG. 40, in response to the first assist process (for example, the pipe setup process) being selected via the inputter 4 out of the plurality of assist processes displayed on the display 3, the computing apparatus 6 may cause the sixth image IM6 (more specifically, a fourth window WD4 including the sixth image IM6) to be displayed on the display 3 as a popup. In the example illustrated in FIG. 40, the sixth image IM6 is displayed to overlap the fifth image IM5.

In the example illustrated in FIG. 40, the sixth image IM6 includes an image that accepts input of a first parameter necessary for executing the first assist process. The first parameter includes, for example, the shape of the workpiece W, the size of the workpiece W, and the like. In the example illustrated in FIG. 40, when a button image BN6 indicating the completion of input is touched or clicked via the inputter 4 after the first parameter necessary for executing the first assist process has been input, a first parameter DT1 is stored in the memory 23 (refer to FIG. 42). Note that, in the example illustrated in FIG. 42, the first macro MC1 associated with the first assist process is previously stored in the memory 23.

In response to a start switch 58 (refer to FIG. 1) constituting part of the inputter 4 being operated with the first assist process selected by the computing apparatus 6, the computing apparatus 6 generates a first group of operation commands for operating the at least one first specific device 70d by the first procedure.

More specifically, by executing the first macro MC1 associated with the first assist process (for example, the first macro MC1 into which the first parameter DT1 has been incorporated), the computing apparatus 6 generates the first group of operation commands for operating the at least one first specific device 70d by the first procedure. In the example illustrated in FIG. 42, the first group of operation commands includes a first operation command SB1, a second operation command SB2, and a third operation command SB3.

The communication circuit 25 transmits the first group of operation commands generated by the computing apparatus 6 to the at least one first specific device 70d (refer to FIG. 42). Thus, the first assist process is executed by the at least one first specific device 70d.

The start switch 58 is preferably a physical switch (more specifically, a hardware button 58b). When the start operation of the first assist process is performed using the physical switch, an operation error is less likely to occur compared with a case where the start operation is performed using a software switch.

Note that, when the first parameter necessary for executing the first assist process does not exist, displaying of the image that accepts input of the first parameter may be omitted. Further, when the first parameter is previously set or the first parameter is automatically derivable by the computing apparatus 6, an image presenting the first parameter may be displayed on the display 3 instead of the image that accepts input of the first parameter.

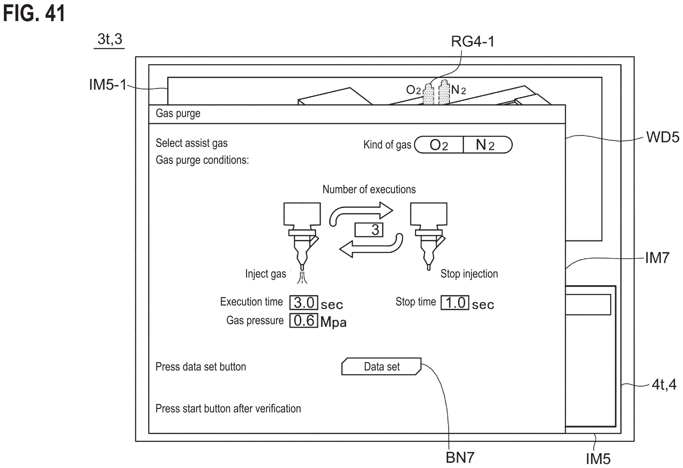

In the example illustrated in FIG. 41, when the second assist process (for example, the gas purge process) is selected, the computing apparatus 6 causes a seventh image IM7 describing at least one of the contents, the procedure, and the conditions of the second assist process (for example, a parameter necessary for executing the second assist process) to be displayed on the display 3.

As illustrated in FIG. 41, in response to the second assist process (for example, the gas purge process) being selected via the inputter 4 out of the plurality of assist processes displayed on the display 3, the computing apparatus 6 may cause the seventh image IM7 (more specifically, a fifth window WD5 including the seventh image IM7) to be displayed on the display 3 as a popup. In the example illustrated in FIG. 41, the seventh image IM7 is displayed to overlap the fifth image IM5.

In the example illustrated in FIG. 41, the seventh image IM7 includes an image that accepts input of a second parameter necessary for executing the second assist process. The second parameter includes, for example, a gas injection time period, the number of times gas injection is repeated, a supply pressure of gas, etc. In the example illustrated in FIG. 41, when a button image BN7 indicating the completion of input is touched or clicked via the inputter 4 after the second parameter necessary for executing the second assist process has been input, a second parameter DT2 is stored in the memory 23 (refer to FIG. 2). Note that, in the example illustrated in FIG. 2, the second macro MC2 associated with the second assist process is previously stored in the memory 23.

In response to the start switch 58 (refer to FIG. 1) constituting part of the inputter 4 being operated with the second assist process selected by the computing apparatus 6, the computing apparatus 6 generates a second group of operation commands for operating at least one second specific device by the second procedure.

More specifically, by executing the second macro MC2 associated with the second assist process (for example, the second macro MC2 into which the second parameter DT2 has been incorporated), the computing apparatus 6 generates the second group of operation commands for operating at least one second specific device by the second procedure.

The communication circuit 25 transmits the second group of operation commands generated by the computing apparatus 6 to at least one second specific device. Thus, the second assist process is executed by at least one second specific device.

Note that, when the second parameter necessary for executing the second assist process does not exist, displaying of the image that accepts input of the second parameter may be omitted. Further, when the second parameter is previously set or the second parameter is automatically derivable by the computing apparatus 6, an image presenting the second parameter may be displayed on the display 3 instead of the image that accepts input of the second parameter.

One example of the first assist process will be described with reference to FIG. 42. In the example illustrated in FIG. 42, the at least one first specific device 70d includes the workpiece feeder 73 (for example, a bundle loader 73a) that supplies the workpiece W to the transfer arm 72, the transfer arm 72 that transfers the workpiece W onto the movement path of the first chuck 71, and the first chuck 71 including the workpiece grip component 71h.

In response to the start switch 58 being pressed with the first assist process selected, the computing apparatus 6 generates the first group of operation commands for operating the at least one first specific device 70d by the first procedure. More specifically, by executing the first macro MC1 stored in the memory 23, the computing apparatus 6 generates the first group of operation commands for operating the at least one first specific device 70d by the first procedure.

In the example illustrated in FIG. 42, by executing the first macro MC1, the computing apparatus 6 generates the first operation command SB1 for supplying the workpiece W to the transfer arm 72, and the communication circuit 25 transmits the first operation command SB1 to the workpiece feeder 73 (for example, the bundle loader 73a). By executing the first macro MC1, the computing apparatus 6 generates the second operation command SB2 for transferring the workpiece W onto the movement path of the first chuck 71, and the communication circuit 25 transmits the second operation command SB2 to the mover of the transfer arm 72 (for example, the third mover including an actuator that moves the Y-shaped arm in the vertical direction and a driver that moves the Y-shaped arm in the horizontal direction). By executing the first macro MC1, the computing apparatus 6 generates the third operation command SB3 for causing the first chuck 71 to grip the workpiece W, and the communication circuit 25 transmits the third operation command SB3 to the driver of the first chuck 71 (for example, the first mover 81, the rotational driver 712, a grip component driver 713, etc., illustrated in FIG. 47).

The workpiece feeder 73 that receives the first operation command SB1 supplies the workpiece W to the transfer arm 72. The third mover of the transfer arm 72 that receives the second operation command SB2 transfers the workpiece W onto the movement path of the first chuck 71 by moving the transfer arm 72. The driver of the first chuck 71 that receives the third operation command causes the first chuck 71 to grip the workpiece W supported by the transfer arm 72.

When an execution procedure of complex operations is previously set as the first assist process, it is possible for the user (more specifically, the operator) to semi-automatically execute a desired process (for example, the pipe setup process) without manually operating each device individually.

### (Third Assist Process)

The third assist process that operates at least one third specific device 70f by a predetermined third procedure will be described with reference to FIG. 43. The third assist process is, for example, a process that returns the workpiece W gripped by the first chuck 71 to a workpiece supply region.

In the example illustrated in FIG. 43, the at least one third specific device 70f includes the workpiece feeder 73 (for example, the bundle loader 73a) that supplies the workpiece W to the transfer arm 72, the transfer arm 72 that transfers the workpiece W onto the movement path of the first chuck 71, and the first chuck 71 including the workpiece grip component 71h.

In response to the start switch 58 being pressed with the third assist process selected, the computing apparatus 6 generates a third group of operation commands for operating the at least one third specific device 70f by the third procedure. More specifically, by executing the third macro MC3 stored in the memory 23, the computing apparatus 6 generates the third group of operation commands for operating the at least one third specific device 70f by the third procedure.

In the example illustrated in FIG. 43, by executing the third macro MC3, the computing apparatus 6 generates a fourth operation command SB4 for moving the transfer arm 72 to a workpiece receiving position, and the communication circuit 25 transmits the fourth operation command SB4 to the third mover of the transfer arm 72. By executing the third macro MC3, the computing apparatus 6 generates a fifth operation command SB5 that causes the first chuck 71 to release the workpiece W, and the communication circuit 25 transmits the fifth operation command SB5 to the driver of the first chuck 71 (for example, the first mover 81, the rotational driver 712, the grip component driver 713, etc., illustrated in FIG. 47). By executing the third macro MC3, the computing apparatus 6 generates a sixth operation command SB6 that transfers the workpiece W to the workpiece feeder 73, and the communication circuit 25 transmits the sixth operation command SB6 to the third mover of the transfer arm 72. By executing the third macro MC3, the computing apparatus 6 generates a seventh operation command SB7 for causing the workpiece feeder 73 to return the workpiece W to the workpiece supply region, and the communication circuit 25 transmits the seventh operation command SB7 to the workpiece feeder 73 (for example, the bundle loader 73a).

The third mover of the transfer arm 72 that receives the fourth operation command SB4 causes the transfer arm 72 to move to the workpiece receiving position. The driver of the first chuck 71 that receives the fifth operation command SB5 transfers the workpiece W from the first chuck 71 onto the transfer arm 72 by causing the first chuck 71 to release the workpiece W. The third mover of the transfer arm 72 that receives the sixth operation command SB6 transfers the workpiece W onto the workpiece feeder 73 by moving the transfer arm 72. The workpiece feeder 73 that receives the seventh operation command SB7 returns the workpiece W to the workpiece supply region.

When an execution procedure of complex operations is previously set as the third assist process, it is possible for the user (more specifically, the operator) to semi-automatically execute a desired process (for example, a process that returns the workpiece W to the workpiece supply region) without manually operating each device individually.

### (Operation of Actuator)

In the description, a device including an actuator (more specifically, an actuator driven by fluid pressure) is defined as an actuator-containing device. The actuator-containing device is one form of the device 70 that is operable.

In the example illustrated in FIG. 44, the plurality of device models 70m displayed on the display 3 include a fourth device model 70m-4 modeling a first actuator-containing device 70-4 (refer to FIG. 47) and a fifth device model 70m-5 modeling a second actuator-containing device 70-5 (refer to FIG. 47). In the example illustrated in FIG. 47, although the first actuator-containing device 70-4 is a short-length chute 78 that discharges a short-length product, the first actuator-containing device 70-4 is not limited to the short-length chute 78 in the first embodiment. In the example illustrated in FIG. 47, although the second actuator-containing device 70-5 is a long-length chute 79 that discharges a long-length product, the second actuator-containing device 70-5 is not limited to the long-length chute 79 in the first embodiment.

In the example illustrated in FIG. 44, the computing apparatus 6 executes a sixth displaying process of displaying, on the display 3, an eighth image IM8 that accepts the selection of a specific device model modeling a specific actuator-containing device out of the plurality of device models 70m.

In the example illustrated in FIG. 44, the eighth image IM8 includes (1) a model image IM8-1 including the laser beam machine model 7m and the plurality of device models 70m and (2) a third list image IM8-2 including a list of a plurality of devices including the first actuator-containing device 70-4 (for example, the short-length chute) and the second actuator-containing device 70-5 (for example, the long-length chute). In the model image IM8-1, the color of the device model 70m selectable by the user is the first color (for example, green), and the color of the laser beam machine model 7m is the second color (for example, white or grey).

In the example illustrated in FIG. 44, the displaying of the device model that is not permitted to be selected by the user is omitted in the model image IM8-1. Alternatively, in the model image IM8-1, the device model that is not permitted to be selected by the user may be displayed in the second color (for example, white or grey).

In the example illustrated in FIG. 44, when a region RG5-1 indicating the fourth device model 70m-4 (for example, a short-length chute model 78m) is touched or clicked via the inputter 4 in the model image IM8-1 displayed on the display 3, the computing apparatus 6 receives the selection of the fourth device model 70m-4. Alternatively or additionally, when a region RG5-2 indicating the first actuator-containing device 70-4 (for example, the region RG5-2 where the identification name of the first actuator-containing device 70-4 is displayed) is touched or clicked via the inputter 4 in the third list image IM8-2 displayed on the display 3, the computing apparatus 6 may receive the selection of the fourth device model 70m-4.

In response to the fourth device model 70m-4 being selected, the computing apparatus 6 may change the color of the fourth device model 70m-4 from the above-described first color (for example, green) to the third color (for example, orange). Additionally, in response to the fourth device model 70m-4 being selected, the computing apparatus 6 may change the color of the region RG5-2 indicating the first actuator-containing device 70-4 to the above-described third color (for example, orange) in the third list image IM8-2 displayed on the display 3.

In the example illustrated in FIG. 44, in response to the fourth device model 70m-4 (for example, the short-length chute model 78m modeling the short-length chute) being selected out of the plurality of device models 70m displayed on the display 3, the computing apparatus 6 executes the fourth process that allows outputting a signal to manually operate the first actuator-containing device 70-4 (for example, the short-length chute).

In the example illustrated in FIG. 44, in response to the fifth device model 70m-5 (for example, a long-length chute model 79m modeling the long-length chute) being selected out of the plurality of device models 70m displayed on the display 3, the computing apparatus 6 executes the fifth process that allows outputting a signal to manually operate the second actuator-containing device 70-5 (for example, the long-length chute).

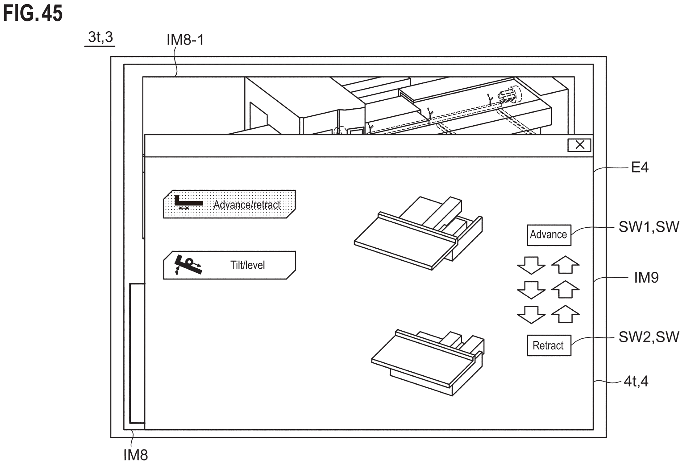

In the example illustrated in FIGs. 44 and 45, when the fourth device model 70m-4 is selected via the inputter 4 out of the plurality of device models 70m displayed on the display 3, the computing apparatus 6 causes a ninth image IM9 to be displayed on the display 6. In the example illustrated in FIG. 45, the above-described fourth process includes displaying the ninth image IM9 on the display 3. In other words, when the fourth process is executed, the ninth image IM9 is displayed on the display 3.

In the example illustrated in FIG. 45, the ninth image IM9 includes a fourth operation menu E4 (for example, menu indicating how the first actuator-containing device 70-4 can be operated) for the first actuator-containing device 70-4 (for example, the short-length chute 78).

When the fourth operation menu E4 is displayed on the display 3, it is possible for the user (more specifically, the operator) to grasp how to operate the first actuator-containing device 70-4.

In the example illustrated in FIG. 45, the above-described fourth process includes displaying, on the display 3, an operation switch SW that operates the first actuator-containing device 70-4 (for example, the short-length chute 78). In the example illustrated in FIG. 45, the ninth image IM9 includes the operation switch SW that operates the first actuator-containing device 70-4.

When the operation switch SW displayed on the display 3 is touched or clicked via the inputter 4 (more specifically, when the operation switch SW on the ninth image IM9 is touched or clicked via the inputter 4), the computing apparatus 6 generates a manual operation signal that operates the first actuator-containing device 70-4. Further, the communication circuit 25 transmits the generated manual operation signal to the first actuator-containing device 70-4. Thus, the first actuator-containing device 70-4 is operated by operating the operation switch SW displayed on the display 3.

In the example illustrated in FIG. 45, the ninth image IM9 includes a forward switch SW1 that advances a component (for example, a product support plate of the short-length chute 78) of the first actuator-containing device 70-4 and a retraction switch SW2 that retracts the component (for example, the product support plate of the short-length chute 78) of the first actuator-containing device 70-4. When the forward switch SW1 of the ninth image IM9 is touched or clicked via the inputter 4, the computing apparatus 6 generates a forward operation signal. Further, the communication circuit 25 transmits the generated forward operation signal to the first actuator-containing device 70-4. Thus, the component (for example, the product support plate of the short-length chute 78) of the first actuator-containing device 70-4 is advanced by operating the forward switch SW1 on the ninth image IM9. When the retraction switch SW2 of the ninth image IM9 is touched or clicked via the inputter 4, the computing apparatus 6 generates a retraction operation signal. Further, the communication circuit 25 transmits the generated retraction operation signal to the first actuator-containing device 70-4. Thus, the component (for example, the product support plate of the short-length chute 78) of the first actuator-containing device 70-4 is retracted by operating the retraction switch SW2 on the ninth image IM9.

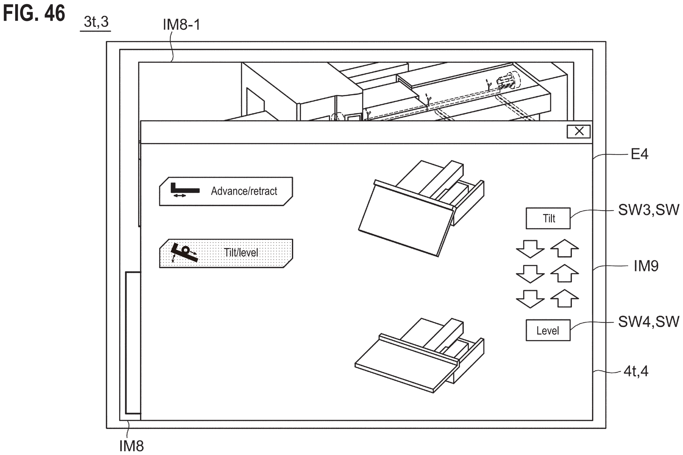

In the example illustrated in FIG. 46, the ninth image IM9 includes a first orientation changing switch SW3 that brings the component (for example, the product support plate of the short-length chute 78) of the first actuator-containing device 70-4 into a tilted orientation and a second orientation changing switch SW4 that returns the component (for example, the product support plate of the short-length chute 78) of the first actuator-containing device 70-4 to a horizontal orientation. When the first orientation changing switch SW3 on the ninth image IM9 is touched or clicked via the inputter 4, the computing apparatus 6 generates a first orientation changing signal. Further, the communication circuit 25 transmits the generated first orientation changing signal to the first actuator-containing device 70-4. Thus, the orientation of the component (for example, the product support plate of the short-length chute 78) of the first actuator-containing device 70-4 is changed to the tilted orientation by operating the first orientation changing switch SW3 on the ninth image IM9. When the second orientation changing switch SW4 on the ninth image IM9 is touched or clicked via the inputter 4, the computing apparatus 6 generates a second orientation changing signal. Further, the communication circuit 25 transmits the generated second orientation changing signal to the first actuator-containing device 70-4. Thus, the orientation of the component (for example, the product support plate of the short-length chute 78) of the first actuator-containing device 70-4 is changed to the horizontal orientation by operating the second orientation changing switch SW4 on the ninth image IM9.

In the example illustrated in FIGs. 45 and 46, the operation of the first actuator-containing device 70-4 is performed using a software switch on the screen. Thus, it is possible to freely set the operation switch SW, which is a user interface, regardless of the hardware switch.

Further, when a high-priority operation function is assigned to a hardware switch, and a low-priority operation function is assigned to a software switch, a reduction in operation errors and an improvement in the operability are both achievable.

### (Switching of Image)

In the example illustrated in FIGs. 17, 38, and 44, the first image IM1, the fifth image IM5, and the eighth image IM8 each include operation target item selectors IG7 that accept the selection of a specific operation target item out of a plurality of operation target items. The plurality of operation target items include, for example, axis-related operation (refer to FIG. 17), the assist process (refer to FIG. 38), and peripheral device operation (refer to FIG. 44). The peripheral device operation includes, for example, actuator operation described above.

In the example illustrated in FIG. 38 or 44, in response to an axis-related operation designating section IG7-1 being touched or clicked via the inputter 4 out of the operation target item selectors IG7, the image displayed on the display 3 is switched from the fifth image IM5 or the eighth image IM8 to the first image IM1.

In the example illustrated in FIG. 17 or 44, in response to an assist process designating section IG7-2 being touched or clicked via the inputter 4 out of the operation target item selectors IG7, the image displayed on the display 3 is switched from the first image IM1 or the eighth image IM8 to the fifth image IM5.

In the example illustrated in FIG. 17 or 38, in response to a peripheral device operation designating section IG7-3 being touched or clicked via the inputter 4 out of the operation target item selectors IG7, the image displayed on the display 3 is switched from the first image IM1 or the fifth image IM5 to the eighth image IM8.

### (Second Embodiment)

The laser beam machining system 100 according to a second embodiment will be described with reference to FIGs. 1 to 47.

In the second embodiment, the differences from the first embodiment will mainly be described. Meanwhile, in the second embodiment, redundant descriptions of items that have already been described in the first embodiment are omitted. Therefore, in the second embodiment, even without an explicit description, it goes without saying that the items that have already been described in the first embodiment may be applied to the second embodiment. Vice versa, the items to be described in the second embodiment are applicable to the first embodiment.

As illustrated in FIGs. 10 and 20, the laser beam machining system 100 according to the second embodiment includes (1) the laser beam machine 7, (2) the display 3 that represents, using the laser beam machine model 7m modeling the laser beam machine 7 (for example, the shape model of the outer shape 7u of the laser beam machine 7, a skeleton model of the laser beam machine 7, etc.) and the plurality of device models 70m respectively modeling the plurality of devices 70 that are operable, the arrangement of the plurality of devices 70 in the laser beam machine 7, (3) the inputter 4 that receives user input, (4) the computing apparatus 6 that executes, in response to the first device model 70m-1 being selected via the inputter 4 out of the plurality of device models 70m displayed on the display 3, the first process that allows outputting a signal to manually operate the first device 70-1 corresponding to the first device model 70m-1, executes, in response to the second device model 70m-2 being selected via the inputter 4 out of the plurality of device models 70m displayed on the display 3, the second process that allows outputting a signal to manually operate the second device 70-2 corresponding to the second device model 70m-2, and generates the control command SA to machine the workpiece W by executing the machining program PG, and (5) the communication circuit 25 that transmits the control command SA to the laser beam machine 7.

The laser beam machine 7, the display 3, the inputter 4, the computing apparatus 6, and the communication circuit 25 have already been described in the first embodiment, and therefore redundant descriptions for their configurations will be omitted.

The laser beam machining system 100 according to the second embodiment has advantages similar to those of the operation panel 20 according to the first embodiment for the laser beam machine or the controller 2 according to the first embodiment for the laser beam machine.

### (Optional Additional Structures)

Next, optional additional structures that are adoptable to the laser beam machining system 100 according to the second embodiment (alternatively, the operation panel 20 according to the first embodiment for the laser beam machine or the controller 2 according to the first embodiment for the laser beam machine) will be described with reference to FIGs. 1 to 47.

The laser beam machining system 100 may include the operation panel 20 according to the first embodiment for the laser beam machine, or may include the controller 2 according to the first embodiment for the laser beam machine. The operation panel 20 for the laser beam machine and the controller 2 for the laser beam machine have already been described in the first embodiment, and therefore redundant descriptions for the operation panel 20 for the laser beam machine and the controller 2 for the laser beam machine will be omitted.

### (Laser Beam Machine 7)

In the example illustrated in FIG. 47, the laser beam machine 7 is a pipe laser beam machine 7p. The pipe laser beam machine 7p refers to a laser beam machine that mainly machines a pipe.

In the example illustrated in FIG. 47, the laser beam machine 7 includes work holders (71 and 74) that support workpieces.

In the example illustrated in FIG. 47, the work holders include the first chuck 71 and the second chuck 74. The first chuck 71 and the second chuck 74 support an elongated workpiece W1 (for example, a pipe).

The first chuck 71 includes the workpiece grip component 71h that is capable of gripping the elongated workpiece W1. The first chuck 71 is movable in the direction parallel to the first axis AX1 (for example, the X-axis) together with the elongated workpiece W1. In the example illustrated in FIG. 47, the first axis AX1 is an axis parallel to a longitudinal direction of the elongated workpiece W1 gripped by the first chuck 71.

In the example illustrated in FIG. 47, the laser beam machine 7 includes the first mover 81 (for example, a first motor) that moves the first chuck 71 in a direction parallel to the first axis AX1 (in other words, in a direction parallel to the longitudinal direction of the elongated workpiece W1 gripped by the first chuck 71).

The second chuck 74 may include a plurality of guide rollers 74r that sandwich the elongated workpiece W1. The plurality of guide rollers 74r guide the movement of the elongated workpiece W1 in a direction parallel to the first axis AX1.

In the example illustrated in FIG. 47, the first chuck 71 includes the rotational driver 712 (for example, a second motor) that rotates the elongated workpiece W1 about the second axis AX2 that is parallel to the longitudinal direction of the elongated workpiece. Further, the second chuck 74 includes a second rotational driver 742 (for example, a third motor) that rotates the elongated workpiece W1 about the second axis AX2 that is parallel to the longitudinal direction of the elongated workpiece. The elongated workpiece W1 is rotated about the axis parallel to the longitudinal direction of the elongated workpiece by driving the rotational driver 712 and the second rotational driver 742 with the first chuck 71 gripping the elongated workpiece W1 and the elongated workpiece W1 inserted in the second chuck 74.

In the example illustrated in FIG. 47, the laser beam machine 7 includes the second mover 84 that moves the laser head 75 that emits a laser beam.

In the example illustrated in FIG. 47, the second mover 84 includes moving bodies (841a, 842a, and 843a) that support the laser head 75 and drivers (841b, 842b, and 843b) that move the moving bodies (841a, 842a, and 843a).

The second mover 84 may include the first moving body 841a and the first driver 841b (for example, a fourth motor) that moves the first moving body 841a in a direction parallel to the third axis AX3 (for example, the Y-axis). In the example illustrated in FIG. 47, the first moving body 841a directly or indirectly supports the laser head 75, and is movable in the direction parallel to the third axis AX3 together with the laser head 75.

The second mover 84 may include the second moving body 842a and the second driver 842b (for example, a fifth motor) that moves the second moving body 842a in a direction parallel to the fourth axis AX4 (for example, the Z-axis). In the example illustrated in FIG. 47, the second moving body 842a directly or indirectly supports the laser head 75, and is movable in the direction parallel to the fourth axis AX4 together with the laser head 75.

The second mover 84 may include the third moving body 843a and the third driver 843b (for example, a sixth motor) that moves the third moving body 843a in a direction parallel to the fifth axis AX5 (for example, the U-axis). In the example illustrated in FIG. 47, the third moving body 843a directly or indirectly supports the laser head 75, and is movable in the direction parallel to the fifth axis AX5 together with the laser head 75.

The laser beam machine 7 may include tilting equipment 85 (for example, a seventh motor) that tilts the laser head 75. In the example illustrated in FIG. 47, the tilting equipment 85 tilts the laser head 75 about the sixth axis AX6.

In the example illustrated in FIG. 47, the laser beam machine 7 includes the processing head 76 that holds a tool, a fourth mover 861 that moves the processing head 76, and a tool rotator 862 that rotates the tool. The fourth mover 861 includes, for example, at least three motors that move the processing head 76 three-dimensionally.

The laser beam machine 7 may include the front door 94 for the user (more specifically, the operator) to access the laser head 75 and/or the processing head 76.

In the example illustrated in FIG. 47, the laser beam machine 7 includes a magazine 77 that stores a plurality of tools. The laser beam machine 7 may include a tool exchanger that exchanges the tool held by the processing head 76 with another tool stored in the magazine 77.

In the example illustrated in FIG. 47, the laser beam machine 7 includes the workpiece feeder 73 (for example, the bundle loader 73a) that supplies the elongated workpiece W1 to the transfer arm 72 and the transfer arm 72 that transfers the elongated workpiece W1 received from the workpiece feeder 73 onto the movement path of the first chuck 71.

In the example illustrated in FIG. 47, the laser beam machine 7 includes an unloading conveyor 92 that conveys a product fabricated from the elongated workpiece W1 from the laser beam machining unit 7-2 to the unloader 7-3. Further, the laser beam machine 7 includes the short-length chute 78 that discharges a short-length product fabricated from the elongated workpiece W1 and conveyed to the unloader 7-3. The laser beam machine 7 may include the long-length chute 79 that discharges a long-length product fabricated from the elongated workpiece W1 and conveyed to the unloader 7-3.

In the example illustrated in FIG. 47, the laser beam machine 7 includes an external conveyor 93 that conveys a product discharged from the chute (for example, a short-length product discharged from the short-length chute 78 or a long-length product discharged from the long-length chute 79) to a product retrieval region.

In the example illustrated in FIG. 47, the elongated workpiece W1 is supplied to the first chuck 71 by the workpiece feeder 73 and the transfer arm 72. The first chuck 71 causes the elongated workpiece W1 to move in the first direction DR1 toward the laser beam machining unit 7-2. Additionally, the second chuck 74 guides the movement of the elongated workpiece W1 in the first direction DR1. In the laser beam machining unit 7-2, the elongated workpiece W1 is machined by the laser beam emitted from the laser head 75. Additionally, in the laser beam machining unit 7-2, the elongated workpiece W1 may be machined by a tool held by the processing head 76. In machining the elongated workpiece W1, the position or orientation of the elongated workpiece W1 may be changed. The position of the elongated workpiece W1 is changed by the first mover 81 that moves the first chuck 71. The orientation of the elongated workpiece W1 is changed by the rotational driver 712 that rotates the first chuck 71 and the second rotational driver 742 that rotates the second chuck 74. The product fabricated from the elongated workpiece W1 by the laser beam machining unit 7-2 is conveyed to the product retrieval region by the unloading conveyor 92, the chute (for example, the short-length chute 78 or the long-length chute 79), and the external conveyor 93.

### (Plurality of Devices 70)

In FIG. 17, the first device model 70m-1 modeling the first chuck 71 is displayed on the display 3. In response to the first device model 70m-1 modeling the first chuck 71 being selected via the inputter 4 out of the plurality of device models 70m displayed on the display 3, the computing apparatus 6 executes the first process that allows outputting a signal to manually operate the first chuck 71.

In FIG. 17, the second device model 70m-2 modeling the laser head 75 is displayed on the display 3. In response to the second device model 70m-2 modeling the laser head 75 being selected via the inputter 4 out of the plurality of device models 70m displayed on the display 3, the computing apparatus 6 executes the second process that allows outputting a signal to manually operate the laser head 75.

In FIG. 17, the third device model 70m-3 modeling the transfer arm 72 is displayed on the display 3 (more specifically, the first image IM1 includes the third device model 70m-3). In response to the third device model 70m-3 modeling the transfer arm 72 being selected via the inputter 4 out of the plurality of device models 70m displayed on the display 3, the computing apparatus 6 executes the third process that allows outputting a signal to manually operate the transfer arm 72.

In FIG. 17, a sixth device model 70m-6 modeling the workpiece feeder 73 is displayed on the display 3 (more specifically, the first image IM1 includes the sixth device model 70m-6). In response to the sixth device model 70m-6 modeling the workpiece feeder 73 being selected via the inputter 4 out of the plurality of device models 70m displayed on the display 3, the computing apparatus 6 executes a sixth process that allows outputting a signal to manually operate the workpiece feeder 73. The sixth process may include assigning the manual operation functions of the workpiece feeder 73 to the plurality of switches 51.

In FIG. 17, a seventh device model 70m-7 modeling the second chuck 74 is displayed on the display 3 (more specifically, the first image IM1 includes the seventh device model 70m-7). In response to the seventh device model 70m-7 modeling the second chuck 74 being selected via the inputter 4 out of the plurality of device models 70m displayed on the display 3, the computing apparatus 6 executes a seventh process that allows outputting a signal to manually operate the second chuck 74. The seventh process may include assigning the manual operation functions of the second chuck 74 to the plurality of switches 51.

In FIG. 17, an eighth device model 70m-8 modeling the processing head 76 is displayed on the display 3 (more specifically, the first image IM1 includes the eighth device model 70m-8). In response to the eighth device model 70m-8 modeling the processing head 76 being selected via the inputter 4 out of the plurality of device models 70m displayed on the display 3, the computing apparatus 6 executes an eighth process that allows outputting a signal that manually operates the processing head 76. The eighth process may include assigning the manual operation functions of the processing head 76 to the plurality of switches 51.

In the example illustrated in FIG. 17, in the first list image IM1-2, the device model corresponding to the device with a check mark Mc is the device model selectable via the inputter 4. In the first list image IM1-2, the device model corresponding to the device with a key icon Mk is the device model prohibited from being selected. Note that, the prohibition of the selection may be removable by changing the setting.

FIG. 27 illustrates a state in which the setting is changed to allow the selection of a magazine model 77m modeling the magazine 77.

In FIG. 27, a ninth device model 70m-9 modeling the magazine 77 is displayed on the display 3 (more specifically, the first image IM1 includes the ninth device model 70m-9). In response to the ninth device model 70m-9 modeling the magazine 77 being selected via the inputter 4 out of the plurality of device models 70m displayed on the display 3, the computing apparatus 6 executes a ninth process that allows outputting a signal to manually operate the magazine 77. The ninth process may include assigning the manual operation functions of the magazine 77 to the plurality of switches 51.

Use of the operation panel 20 according to the first embodiment for the laser beam machine, the controller 2 according to the first embodiment for the laser beam machine, or the laser beam machining system 100 according to the second embodiment makes it possible to easily perform maintenance of the manually operable devices. Further, in the event of a trouble, it is easy to address the trouble by manual operation. Additionally, when the assist process is executable, it is possible to operate at least one device by a predetermined procedure. For example, when it becomes necessary to machine the workpiece W that has not been scheduled, it is possible to set the workpiece W on the first chuck 71 semi-automatically. Further, it is possible to semi-automatically return the workpiece W set on the first chuck 71 to the workpiece supply region.

It should be clearly understood that the present invention is not limited to the above-described embodiments or modifications, and each of the embodiments or modifications may be deformed or modified as required within the range of the technical ideas obtainable from the present invention. Various techniques used in each of the embodiments or modifications may be applied to other embodiments or modifications unless a technical contradiction arises. Furthermore, any optional additional structure in each of the embodiments or modifications may be omitted as required.

### Description of Reference Numerals

2 ... Controller, 3 ... Display, 3a ... First screen, 3b ... Second screen, 3t ... Touch-panel display, 4 ... Inputter, 4p ... Pointing device, 4t ... Touch-panel, 6 ... Computing apparatus, 6a ... Processor, 7 ... Laser beam machine, 7-1 ... Loader, 7-2 ... Laser beam machining unit, 7-3 ... Unloader, 7m ... Laser beam machine model, 7p ... Pipe laser beam machine, 7u ... Outer shape of laser beam machine, 20 ... Operation panel, 23 ... Memory, 25 ... Communication circuit, 27 ... Bus, 51 ... Switch, 51-1 ... First switch, 51-2 ... Second switch, 51-3 ... Third switch, 51-4 ... Fourth switch, 51-5 ... Fifth switch, 58 ... Start switch, 58b ... Hardware button, 70 ... Operable device, 70-1 ... First device, 70-2 ... Second device, 70-3 ... Third device, 70-4 ... First actuator-containing device, 70-5 ... Second actuator-containing device, 70d ... First specific device, 70f ... Third specific device, 70m ... Device model, 70m-1 ... First device model, 70m-2 ... Second device model, 70m-3 ... Third device model, 70m-4 ... Fourth device model, 70m-5 ... Fifth device model, 70m-6 ... Sixth device model, 70m-7 ... Seventh device model, 70m-8 ... Eighth device model, 70m-9 ... Ninth device model, 71 ... First chuck, 71h ... Workpiece grip component, 71m ... First chuck model, 72 ... Transfer arm, 72m ... Arm model, 73 ... Workpiece feeder, 73a ... Bundle loader, 74 ... Second chuck, 74r ... Guide roller, 75 ... Laser head, 75m ... Laser head model, 76 ... Processing head, 77 ... Magazine, 77m ... Magazine model, 78 ... Short-length chute, 78m ... Short-length chute model, 79 ... Long-length chute, 79m ... Long-length chute model, 81 ... First mover, 84 ... Second mover, 85 ... Tilting equipment, 92 ... Unloading conveyor, 93 ... External conveyor, 94 ... Front door, 100 ... Laser beam machining system, 712 ... Rotational driver, 713 ... Grip component driver, 742 ... Second rotational driver, 841a ... First moving body, 841b ... First driver, 842a ... Second moving body, 842b ... Second driver, 843a ... Third moving body, 843b ... Third driver, 861 ... Fourth mover, 862 ... Tool rotator, AX1 ... First axis, AX2 ... Second axis, AX3 ... Third axis, AX4 ... Fourth axis, AX5 ... Fifth axis, AX6 ... Sixth axis, AX7 ... Seventh axis, AX8 ... Eighth axis, BN1 ... First button image, BN2 ... Second button image, BN3 ... Third button image, BN4 ... Loading region designating section, BN5 ... Machining region designating section, BN6 ... Button image, BN7 ... Button image, CU ... Cursor, DA1 ... X-coordinate data, DA2 ... Phase data, DA3 ... Y-coordinate data, DA4 ... Z-coordinate data, DR1 ... First direction, DR2 ... Second direction, DR3 ... Third direction, DR4 ... Fourth direction, DR5 ... Fifth direction, DR6 ... Sixth direction, DR7 ... Seventh direction, DR8 ... Eighth direction, DR9 ... Ninth direction, DR10 ... Tenth direction, DT1 ... First parameter, DT2 ... Second parameter, E1 ... First operation menu, E2 ... Second operation menu, E3 ... Third operation menu, E4 ... Fourth operation menu, HD ... Rotary handle, HS1 ... First hardware button, HS2 ... Second hardware button, HS3 ... Third hardware button, HS4 ... Fourth hardware button, HS5 ... Fifth hardware button, IG1 ... Mode selector, IG1-1 ... Button operation designating section, IG1-2 ... Handle operation designating section, IG1-3 ... Homing operation designating section, IG2 ... Operation target axis switching section, IG3 ... Speed setting section, IG3-1 ... Maximum speed designating section, IG3-2 ... Other speed designating section, IG4 ... Operation accuracy setting section, IG4-1 ... Maximum accuracy designating section, IG4-2 ... Other accuracy designating section, IG5 ... Operation target axis switching section, IG6 ... Mode selector, IG6-1 ... Button operation designating section, IG6-2 ... Handle operation designating section, IG7 ... Operation target item selector, IG7-1 ... Axis-related operation designating section, IG7-2 ... Assist process designating section, IG7-3 ... Peripheral device operation designating section, IM1 ... First image, IM1-1 ... Model image, IM1-2 ... First list image, IM2 ... Second image, IM3 ... Third image, IM4 ... Fourth image, IM5 ... Fifth image, IM5-1 ... Model image, IM5-2 ... Second list image, IM6 ... Sixth image, IM7 ... Seventh image, IM8 ... Eighth image, IM8-1 ... Model image, IM8-2 ... Third list image, IM9 ... Ninth image, IN1 ... First arrangement representation image, IN2 ... Second arrangement representation image, IN3 ... First part image, IN4 ... Second part image, IQ1 ... Image simulating shape of first device, IQ2 ... Image simulating shape of second device, M1 ... Button operation mode, M2 ... Handle operation mode, M3 ... Homing mode, M4 ... Button operation mode, M5 ... Handle operation mode, MC1 ... First macro, MC2 ... Second macro, MC3 ... Third macro, MR1 ... First operation direction, MR2 ... Second operation direction, Mc ... Check mark, Mk ... Key icon, P1 ... First program, PG ... Machining program, PJ ... Computing program, R1 ... First rotation direction R1, R2 ... Second rotation direction, RG1-1 ... Region indicating first device model, RG1-2 ... Region indicating first device, RG2-1 ... Region indicating second device model, RG2-2 ... Region indicating second device, RG3-1 ... Region indicating device model corresponding to device necessary for executing first assist process, RG3-2 ... Region indicating first assist process, RG4-1 ... Region indicating device model corresponding to device necessary for executing second assist process, RG4-2 ... Region indicating second assist process, RG5-1 ... Region indicating fourth device model, RG5-2 ... Region indicating first actuator-containing device, S1 ... First switch image, S2 ... Second switch image, S3 ... Third switch image, S4 ... Fourth switch image, S5 ... Handle image, SA ... Control command, SA1 ... First movement command, SA2 ... Emission command, SA3 ... Second movement command, SA4 ... First rotation command, SA5 ... Second rotation command, SA6 ... Third movement command, SA7 ... Third rotation command, SB1 ... First operation command, SB2 ... Second operation command, SB3 ... Third operation command, SB4 ... Fourth operation command, SB5 ... Fifth operation command, SB6 ... Sixth operation command, SB7 ... Seventh operation command, SW ... Operation switch, SW1 ... Forward switch, SW2 ... Retraction switch, SW3 ... First orientation changing switch, SW4 ... Second orientation changing switch, T1 ... First instruction image, T2 ... Second instruction image, T3 ... Third instruction image, T4 ... Fourth instruction image, T5 ... Fifth instruction image, T6 ... Sixth instruction image, T7 ... Seventh instruction image, T8 ... Eighth instruction image, T9 ... Ninth instruction image, T10 ... Tenth instruction image, T11 ... Eleventh instruction image, T12 ... Twelfth instruction image, T13 ... Thirteenth instruction image, T14 ... Fourteenth instruction image, T15 ... Fifteenth instruction image, W ... Workpiece, W1 ... Elongated workpiece, WD1 ... First window, WD2 ... Second window, WD3 ... Third window, WD4 ... Fourth window, WD5 ... Fifth window

## Claims

1. An operation panel for a laser beam machine, the operation panel comprising:
a display configured to represent, using a laser beam machine model modeling the laser beam machine and a plurality of device models respectively modeling a plurality of devices that are operable, an arrangement of the plurality of devices in the laser beam machine;
an inputter configured to receive user input; and
a computing apparatus configured to execute, in response to a first device model being selected via the inputter out of the plurality of device models displayed on the display, a first process that allows outputting a signal to manually operate a first device corresponding to the first device model, and to execute, in response to a second device model being selected via the inputter out of the plurality of device models displayed on the display, a second process that allows outputting a signal to manually operate a second device corresponding to the second device model.

2. The operation panel for the laser beam machine according to claim 1, comprising
a first switch, wherein
the first process comprises assigning, to the first switch, an operation function that moves at least part of the first device in a first direction along a first axis, and
the second process comprises assigning, to the first switch, an operation function that moves at least part of the second device in a direction along another axis different from the first axis.

3. The operation panel for the laser beam machine according to claim 2, wherein
the first process comprises displaying, on the display, a first switch image simulating the first switch and an image indicating a correspondence relationship between operation of the first switch and the first direction, and
the second process comprises displaying, on the display, the first switch image and an image indicating a correspondence relationship between operation of the first switch and the direction along the other axis different from the first axis.

4. The operation panel for the laser beam machine according to any one of claims 1 to 3, wherein
the computing apparatus is configured to execute a first display process of causing a first image comprising the laser beam machine model and the plurality of device models to be displayed on the display,
the computing apparatus is configured to execute the first process in response to the first device model being selected via the inputter out of the plurality of device models in the first image, and
the computing apparatus is configured to execute the second process in response to the second device model being selected via the inputter out of the plurality of device models in the first image.

5. The operation panel for the laser beam machine according to any one of claims 1 to 4, comprising
a plurality of switches, wherein
the first process comprises allowing manual operation of the first device using the plurality of switches.

6. The operation panel for the laser beam machine according to any one of claims 1 to 5, wherein, when the first process is executed, a second image comprising a first operation menu for the first device is displayed on the display.

7. The operation panel for the laser beam machine according to claim 6, wherein the second image comprises an image simulating at least one of the plurality of switches.

8. The operation panel for the laser beam machine according to claim 6 or 7, wherein
at least one of the plurality of switches is a physical switch, and
the second image comprises an image simulating the physical switch.

9. The operation panel for the laser beam machine according to claim 1, comprising
a first switch that moves at least part of the first device in a first direction along a first axis, wherein
when the first process is executed, a second image comprising a first operation menu for the first device is displayed on the display,
the second image comprises
an image simulating the first switch, and
an image indicating a correspondence relationship between operation of the first switch and the first direction.

10. The operation panel for the laser beam machine according to any one of claims 1 to 9, wherein the computing apparatus is configured to selectively execute a button operation mode that operates the first device using at least one button and a handle operation mode that operates the first device using at least a handle.

11. The operation panel for the laser beam machine according to any one of claims 1 to 10, wherein
the computing apparatus is configured to execute, in response to a third device model being selected via the inputter out of the plurality of device models displayed on the display, a third process that allows outputting a signal to manually operate a third device corresponding to the third device model, and
the first device comprises a first chuck configured to grip a workpiece, and the third device comprises at least one transfer arm configured to transfer the workpiece onto a movement path of the first chuck.

12. The operation panel for the laser beam machine according to any one of claims 1 to 11, wherein
the computing apparatus is configured to execute a process of displaying an image that accepts selection of a specific assist process out of a plurality of assist processes comprising a first assist process that operates at least one first specific device by a predetermined first procedure and other assist process, and
the computing apparatus is configured to, in response to a start switch being operated with the first assist process selected, generate a first group of operation commands for operating the at least one first specific device by the first procedure.

13. The operation panel for the laser beam machine according to any one of claims 1 to 12, wherein
the computing apparatus is configured to execute, in response to a fourth device model modeling a first actuator-containing device being selected out of the plurality of device models displayed on the display, a fourth process that allows outputting a signal to manually operate the first actuator-containing device,
the fourth process comprises causing an operation switch that operates the first actuator-containing device to be displayed on the display, and
when the operation switch displayed on the display is touched or clicked via the inputter, the computing apparatus generates a manual operation signal that operates the first actuator-containing device.

14. A controller for a laser beam machine, the controller comprising:
a display configured to represent, using a laser beam machine model modeling the laser beam machine and a plurality of device models respectively modeling a plurality of devices that are operable, an arrangement of the plurality of devices in the laser beam machine;
an inputter configured to receive user input;
a computing apparatus configured to execute, in response to a first device model being selected via the inputter out of the plurality of device models displayed on the display, a first process that allows outputting a signal to manually operate a first device corresponding to the first device model, to execute, in response to a second device model being selected via the inputter out of the plurality of device models displayed on the display, a second process that allows outputting a signal to manually operate a second device corresponding to the second device model, and to generate a control command to machine a workpiece by executing a machining program; and
a communication circuit configured to transmit the control command to the laser beam machine.

15. A laser beam machining system comprising:
a laser beam machine;
a display configured to represent, using a laser beam machine model modeling the laser beam machine and a plurality of device models respectively modeling a plurality of devices that are operable, an arrangement of the plurality of devices in the laser beam machine;
an inputter configured to receive user input;
a computing apparatus configured to execute, in response to a first device model being selected via the inputter out of the plurality of device models displayed on the display, a first process that allows outputting a signal to manually operate a first device corresponding to the first device model, to execute, in response to a second device model being selected via the inputter out of the plurality of device models displayed on the display, a second process that allows outputting a signal to manually operate a second device corresponding to the second device model, and to generate a control command to machine a workpiece by executing a machining program; and
a communication circuit configured to transmit the control command to the laser beam machine.
